# EUROPEAN PATENT APPLICATION

(11) **EP 4 831 783 A1**
(43) Date of publication of application: **28.10.2026**
(21) Application number: 25820425.4
(22) Date of filing: 07.03.2025
(51) Int. Cl.: G06F 3/0484, G06F 3/14, G06F 1/16, G06V 40/13, G06F 21/32

(54) **ELECTRONIC DEVICE, METHOD, AND NON-TRANSITORY COMPUTER-READABLE STORAGE MEDIUM FOR CONTROLLING PLURALITY OF DISPLAYS ON BASIS OF STATE OF FOLDABLE HOUSING**

(30) Priority: 07.06.2024 KR 20240074612; 01.07.2024 KR 20240086481
(71) Applicant: Samsung Electronics Co., Ltd., Suwon-si, Gyeonggi-do 16677 (KR)
(72) Inventor: LEE, Chanwoo, Suwon-si Gyeonggi-do 16677 (KR); LEE, Jungwoo, Suwon-si Gyeonggi-do 16677 (KR)
(74) Representative: Gulde & Partner
(86) International application number: PCT/KR2025/003072
(87) International publication number: WO 2025/254307

(57) **Abstract**

A foldable electronic device is provided. The foldable electronic device may detect the state of the foldable electronic device by using at least one of at least one first sensor or at least one second sensor. The foldable electronic device, in a folded state, may display a first screen on a cover display. While the first screen is displayed on the cover display, the foldable electronic device may detect that at least one housing part is opened. On the basis of detecting that a first housing part or a second housing part is opened, the foldable electronic device may maintain the display of the first screen on the cover display and display a second screen on a partial area of a flexible display.

## Description

### TECHNICAL FIELD

The disclosure relates to an electronic device, a method, and a non-transitory computer readable storage medium for controlling a plurality of displays based on a state of a foldable housing.

### BACKGROUND ART

A shape and/or a size of an electronic device is diversifying. In order to enhance mobility, an electronic device with a reduced size and/or a reduced volume is being designed. The electronic device may include a display for visualizing information. As the number of functions supported by the electronic device increases, the size of the display may increase to visualize more information to a user and/or to support execution of the functions. For example, a size of the display may be designed to be maintained or increased while reducing the size and/or the volume of the electronic device.

The above information is presented as background information only to assist with an understanding of the disclosure. No determination has been made, and no assertion is made, as to whether any of the above might be applicable as prior art with regard to the disclosure.

### DISCLOSURE

### Technical Solution

Aspects of the disclosure are to address at least the above-mentioned problems and/or disadvantages and to provide at least the advantages described below. Accordingly, an aspect of the disclosure is to provide an electronic device, a method, and a non-transitory computer readable storage medium for controlling a plurality of displays based on a state of a foldable housing.

Additional aspects will be set forth in part in the description which follows and, in part, will be apparent from the description, or may be learned by practice of the presented embodiments.

In accordance with an aspect of the disclosure, a foldable electronic device is provided. The foldable electronic device may comprise a foldable housing comprising, a first housing part, a second housing part rotatably coupled to the first housing part, and a third housing part rotatably coupled to the second housing part, a flexible display positioned across the first housing part, the second housing part, and the third housing part, a cover display positioned on a partial region opposite to the flexible display, at least one first sensor configured to detect a first angle between the first housing part and the second housing part, at least one second sensor configured to detect a second angle between the second housing part and the third housing part, memory comprising one or more storage media storing instructions, and at least one processor comprising processing circuitry. The instructions, when executed by the at least one processor individually or collectively, may cause the foldable electronic device to detect a state of the foldable electronic device by using at least one of the at least one first sensor or the at least one second sensor. The instructions, when executed by the at least one processor individually or collectively, may cause the foldable electronic device to display a first screen on the cover display while the foldable electronic device is in a fully folded state. The instructions, when executed by the at least one processor individually or collectively, may cause the foldable electronic device to, while displaying the first screen on the cover display, detect that the first housing part or the third housing part of the foldable electronic device in the fully folded state is opened. The instructions, when executed by the at least one processor individually or collectively, may cause the foldable electronic device to, based on detecting that the first housing part or the third housing part is opened, maintain display the first screen on the cover display, and display a second screen on a partial region of the flexible display.

In an embodiment, a method performed by a foldable electronic device is provided. The electronic device includes a foldable housing including a first housing part, a second housing part rotatably coupled to the first housing part, and a third housing part rotatably coupled to the second housing part, a flexible display positioned across the first housing part, the second housing part, and the third housing part, a cover display positioned on a partial region opposite to the flexible display, at least one first sensor configured to detect a first angle between the first housing part and the second housing part, and at least one second sensor configured to detect a second angle between the second housing part and the third housing part. The method may comprise detecting a state of the foldable electronic device by using at least one of the at least one first sensor or the at least one second sensor. The method may comprise displaying a first screen on the cover display while the foldable electronic device is in a fully folded state. The method may comprise, while displaying the first screen on the cover display, detecting that the first housing part or the third housing part of the foldable electronic device in the fully folded state is opened. The method may comprise, based on detecting that the first housing part or the third housing part is opened, maintaining display the first screen on the cover display, and displaying a second screen on a partial region of the flexible display.

In accordance with another aspect of the disclosure, one or more non-transitory computer-readable storage media storing one or more instructions that, when executed by at least one processor of a foldable electronic device individually or collectively, cause the foldable electronic device to perform operations, is provided. The foldable electronic device includes a foldable housing including a first housing part, a second housing part rotatably coupled to the first housing part, and a third housing part rotatably coupled to the second housing part, a flexible display positioned across the first housing part, the second housing part, and the third housing part, a cover display positioned on a partial region opposite to the flexible display, at least one first sensor configured to detect a first angle between the first housing part and the second housing part, and at least one second sensor configured to detect a second angle between the second housing part and the third housing part. The operations include detecting a state of the foldable electronic device by using at least one of the at least one first sensor or the at least one second sensor, displaying a first screen on the cover display while the foldable electronic device is in a fully folded state, while displaying the first screen on the cover display, detecting that the first housing part or the third housing part of the foldable electronic device in the fully folded state is opened, and based on detecting that the first housing part or the third housing part is opened, maintaining display of the first screen on the cover display, and displaying a second screen on a partial region of the flexible display.

According to an embodiment, an electronic device is provided. The electronic device may comprise a foldable housing comprising, a first housing part, a second housing part rotatably coupled to the first housing part, and a third housing part rotatably coupled to the second housing part, a flexible display across the first housing part, the second housing part, and the third housing part, a cover display opposite to the flexible display, at least one sensor configured to detect at least one of a first angle between the first housing part and the second housing part and a second angle between the second housing part and the third housing part, memory comprising one or more storage media storing instructions, and at least one processor comprising processing circuitry. The instructions, when executed by the at least one processor individually or collectively, may cause the electronic device to detect a state of the foldable housing using the at least one sensor. The instructions, when executed by the at least one processor individually or collectively, may cause the electronic device to display a first screen on the cover display based on detecting the state in a folded state. The instructions, when executed by the at least one processor individually or collectively, may cause the electronic device to detect switching from the folded state to a half-folded state while displaying the first screen on the cover display. The instructions, when executed by the at least one processor individually or collectively, may cause the electronic device to, based on detecting the switching while an event for multi-tasking has occurred, maintain displaying the first screen on the cover display and display a second screen on the flexible display. The instructions, when executed by the at least one processor individually or collectively, may cause the electronic device to, based on detecting the switching independently of the event, deactivate the cover display and display a third screen at least partially representing a content of the first screen on the flexible display.

In an embodiment, a method performed by an electronic device is provided. The electronic device may comprise a foldable housing comprising, a first housing part, a second housing part rotatably coupled to the first housing part, and a third housing part rotatably coupled to the second housing part, a flexible display across the first housing part, the second housing part, and the third housing part, a cover display opposite to the flexible display, and at least one sensor configured to detect at least one of a first angle between the first housing part and the second housing part and a second angle between the second housing part and the third housing part. The method may comprise detecting a state of the foldable housing using the at least one sensor. The method may comprise displaying a first screen on the cover display based on detecting the state in a folded state. The method may comprise detecting switching from the folded state to a half-folded state while displaying the first screen on the cover display. The method may comprise, based on detecting the switching while an event for multi-tasking has occurred, maintaining displaying the first screen on the cover display and displaying a second screen on the flexible display. The method may comprise, based on detecting the switching independently of the event, deactivating the cover display and displaying a third screen at least partially including a content of the first screen on the flexible display.

In an embodiment, a non-transitory computer readable storage medium including instructions may be provided. The instructions may be executed by an electronic device comprising a foldable housing comprising, a first housing part, a second housing part rotatably coupled to the first housing part, and a third housing part rotatably coupled to the second housing part, a flexible display across the first housing part, the second housing part, and the third housing part, and a cover display opposite to the flexible display. The instructions, when executed by the electronic device, may cause the electronic device to display a first screen on the cover display while a state of the foldable housing is in a folded state. The instructions, when executed by the electronic device individually or collectively, may cause the electronic device to identify switching of the state from the folded state to a half-folded state while displaying the first screen. The instructions, when executed by the electronic device individually or collectively, may cause the electronic device to, based on identifying the switching with an input for activating of both of the cover display and the flexible display, maintain displaying the first screen on the cover display, and display a second screen on at least a portion of the flexible display.

According to an embodiment, an electronic device may comprise a foldable housing comprising, a first housing part, a second housing part rotatably coupled to the first housing part, and a third housing part rotatably coupled to the second housing part, a flexible display across the first housing part, the second housing part, and the third housing part, a cover display opposite to the flexible display, memory comprising one or more storage media storing instructions, and at least one processor comprising processing circuitry. The instructions, when executed by the at least one processor individually or collectively, may cause the electronic device to display a first screen on the cover display while a state of the foldable housing is in a folded state. The instructions, when executed by the at least one processor individually or collectively, may cause the electronic device to identify switching of the state from the folded state to a half-folded state while displaying the first screen. The instructions, when executed by the at least one processor individually or collectively, may cause the electronic device to, based on identifying the switching with an input for activating of both of the cover display and the flexible display, maintain displaying the first screen on the cover display, and display a second screen on at least a portion of the flexible display.

Other aspects, advantages, and salient features of the disclosure will become apparent to those skilled in the art from the following detailed description, which, taken in conjunction with the annexed drawings, discloses various embodiments of the disclosure.

### DESCRIPTION OF THE DRAWINGS

The above and other aspects, features, and advantages of certain embodiments of the disclosure will be more apparent from the following description taken in conjunction with the accompanying drawings, in which:
FIG. 1 illustrates an operation of an electronic device displaying screens on a cover display and a flexible display, respectively according to an embodiment of the disclosure;
FIG. 2A illustrates an example of a first state of an electronic device according to an embodiment of the disclosure;
FIG. 2B illustrates an example of a second state of an electronic device according to an embodiment of the disclosure;
FIG. 2C illustrates an example of a third state of an electronic device according to an embodiment of the disclosure;
FIG. 3A is a top plan view of an electronic device with a flexible display removed according to an embodiment of the disclosure;
FIG. 3B is a rear view of an electronic device with a rear cover and a display removed according to an embodiment of the disclosure;
FIG. 3C illustrates a block diagram of an electronic device according to an embodiment according to an embodiment of the disclosure;
FIGS. 4A, 4B, and 4C illustrate a state transition diagram of an electronic device foldable by a plurality of folding axes according to various embodiments of the disclosure;
FIGS. 5A, 5B, and 5C illustrate operations of an electronic device receiving an input for multi-tasking according to various embodiments of the disclosure;
FIGS. 6A and 6B illustrate flowcharts of an electronic device according to various embodiments of the disclosure;
FIG. 7 illustrates an operation of an electronic device displaying screens on a cover display and a flexible display, respectively according to an embodiment of the disclosure;
FIGS. 8A and 8B illustrate an operation of an electronic device that displays screens on a cover display and a flexible display, respectively, based on a user input according to various embodiments of the disclosure;
FIG. 9 illustrates an artificial intelligence model executed by an electronic device according to an embodiment of the disclosure;
FIG. 10 illustrates an operation of an electronic device that displays screens on a cover display and a flexible display, respectively, based on an order in which the screens were displayed according to an embodiment of the disclosure;
FIG. 11 illustrates an operation of an electronic device switching screens displayed on a cover display and a flexible display according to an embodiment of the disclosure;
FIG. 12 illustrates an operation of an electronic device that switches a position of a software keyboard between a cover display and a flexible display according to an embodiment of the disclosure;
FIG. 13 illustrates an operation of an electronic device that determines a screen to be displayed on a flexible display by using a fingerprint sensor according to an embodiment of the disclosure;
FIGS. 14A, 14B, 14C, 14D, and 14E illustrate an operation of an electronic device that determines directions of screens, respectively displayed on a cover display and a flexible display according to various embodiments of the disclosures;
FIG. 15 illustrates an embodiment of an electronic device having a foldable housing including four housing parts according to an embodiment of the disclosure;
FIG. 16A illustrates an example of a first state of an electronic device according to an embodiment of the disclosure;
FIG. 16B illustrates an example of a second state of an electronic device according to an embodiment of the disclosure;
FIG. 16C illustrates an example of a third state of an electronic device according to an embodiment of the disclosure;
FIG. 17A is a top plan view of an electronic device with a flexible display removed according to an embodiment of the disclosure; and
FIG. 17B is a rear view of an electronic device with a rear cover and a display removed according to an embodiment of the disclosure.

Throughout the drawings, it should be noted that like reference numbers are used to depict the same or similar elements, features, and structures.

### MODE FOR INVENTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

Hereinafter, various embodiments of the document will be described with reference to the accompanying drawings.

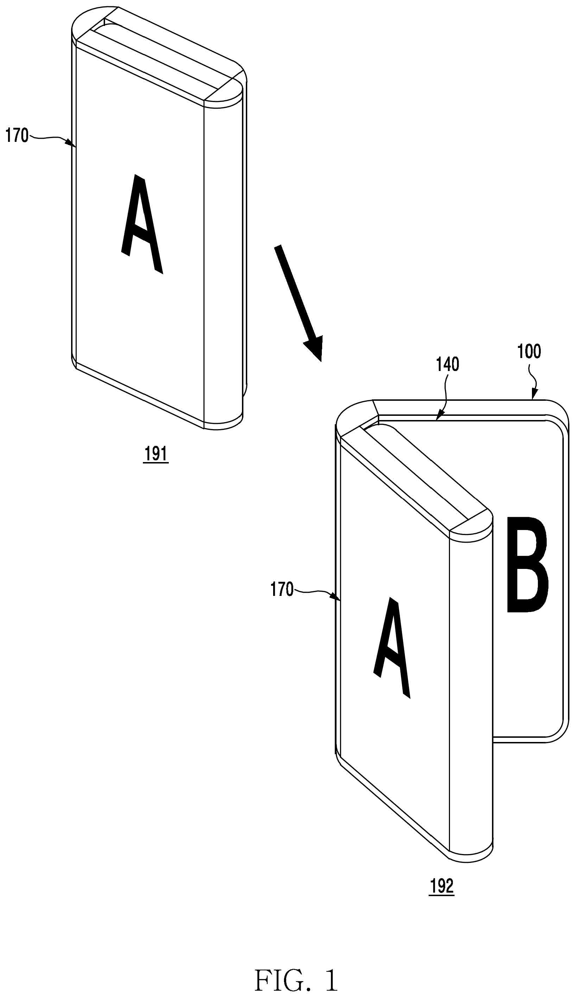

FIG. 1 illustrates an operation of an electronic device 100 displaying screens on a cover display 170 and a flexible display 140, respectively according to an embodiment of the disclosure. The electronic device 100 may include, for example, a smartphone, a smartpad, a tablet PC, and/or a laptop (or a notebook) and a personal computer (PC). The electronic device 100 may be referred to as a terminal, a mobile device, user equipment (UE), a multifunctional device, a portable communication device, and/or a portable device.

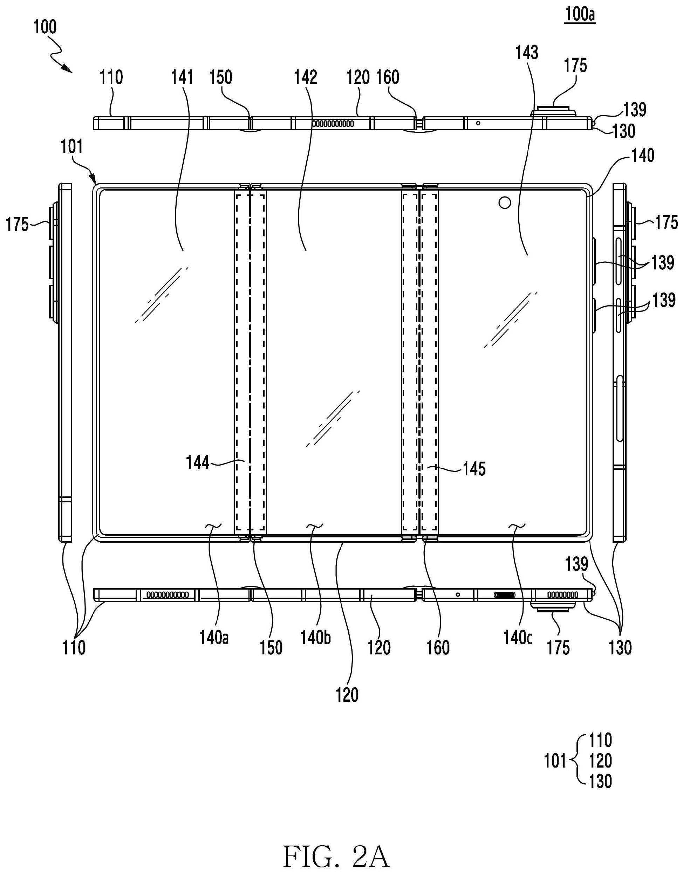

Referring to FIG. 1, the electronic device 100 including a deformable housing is illustrated. The housing of the electronic device 100 may include a straight axis (e.g., a folding axis, and/or a rotation axis) for rotation and/or folding. In terms of having a foldable structure, the housing of the electronic device 100 may be referred to as a foldable housing (or a multi-foldable housing). A structure of the housing of the electronic device 100 will be described with reference to FIGS. 2A to 2C, 3A to 3C, 15, 16A to 16C, and/or 17A and 17B.

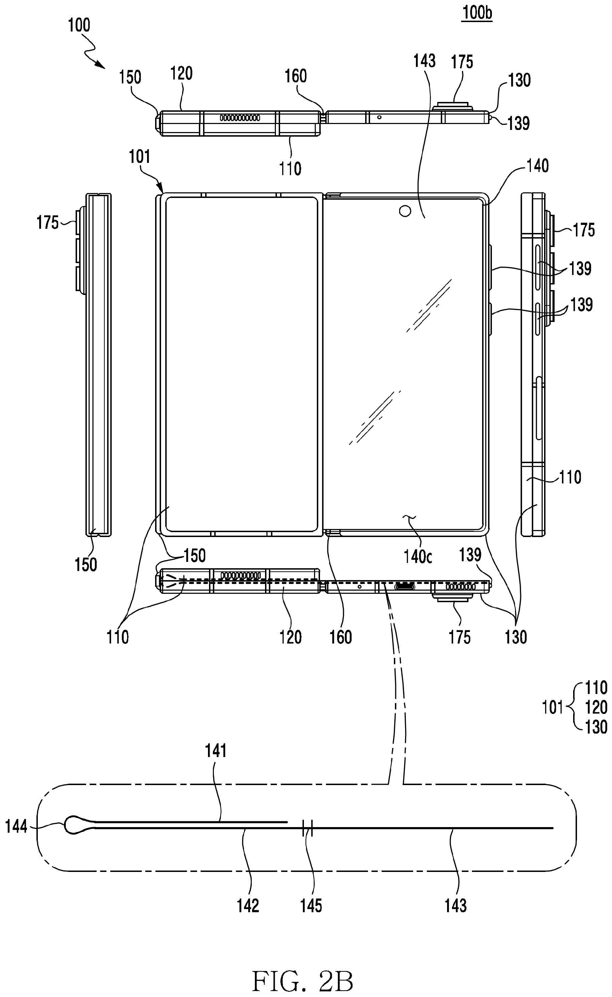

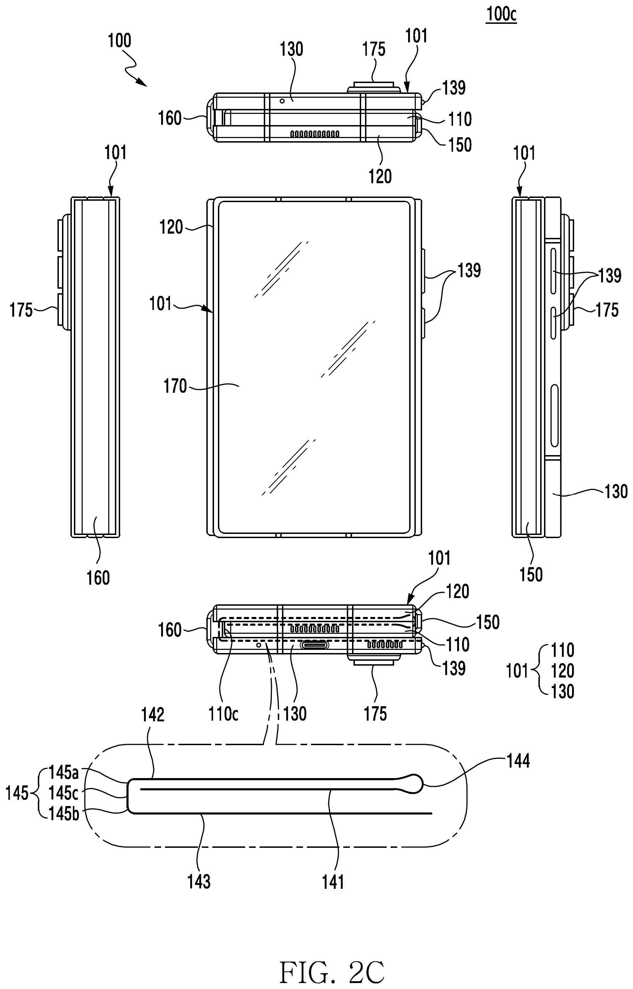

In an embodiment, the electronic device 100 may have various states based on a shape and/or a state of the housing (or the foldable housing) of the electronic device 100. Referring to FIG. 1, states 191 and 192 of the electronic device 100 are illustrated. The state 191 may be associated with a third state 100c (or a folded state or a folding state) of FIG. 2C. The electronic device 100 may include a cover display 170 visible independently of the shape of the housing. The state 192 may be associated with a second state 100b (or a half-folded state, an intermediate state, or a half-folding state) of FIG. 2B. The electronic device 100 may include a flexible display 140 fully covered by the housing in a specific state (e.g., the state 191). At least a portion of the flexible display 140 may be visible from the outside in a remaining state different from the specific state. Exemplary states of the electronic device 100 including the states 191 and 192 will be described with reference to FIGS. 2A to 2C.

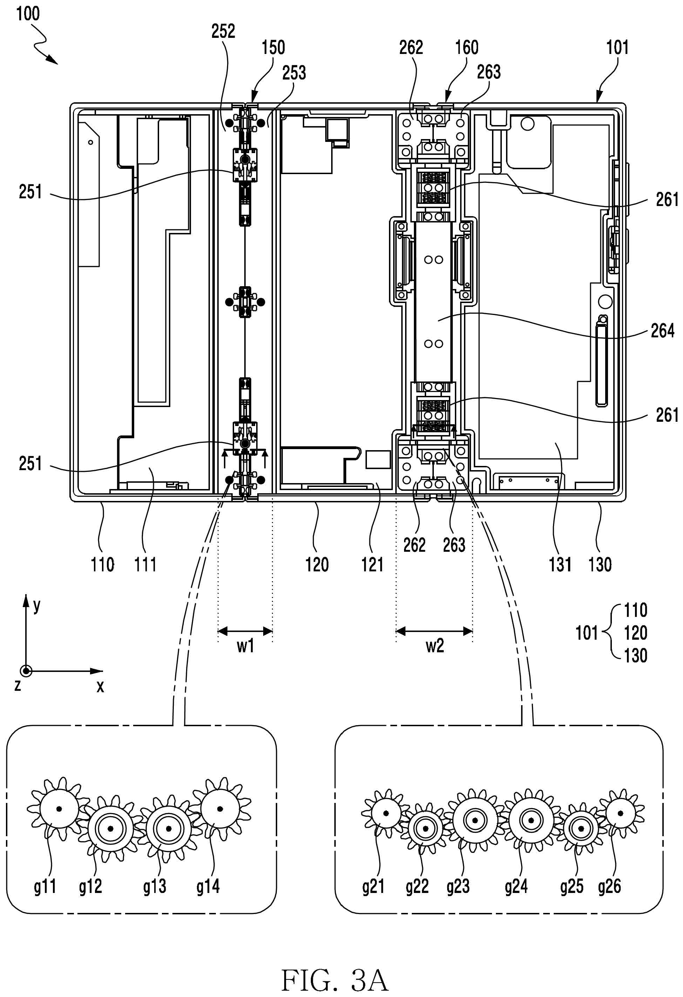

The electronic device 100 may detect the shape and/or the state of the housing by using at least one sensor. Exemplary hardware of the electronic device 100 including the at least one sensor will be described with reference to FIGS. 3A to 3C. According to the detected state of the housing, the electronic device 100 may control at least one of the flexible display 140 and the cover display 170 to display a screen. For example, in the state 191, referred to as the folded state, the electronic device 100 may display a screen A on the cover display 170. In the state 191, the electronic device 100 may display the screen A only on the cover display 170 among the flexible display 140 or the cover display 170. In the state 191, the electronic device 100 may deactivate the flexible display 140. Deactivating the flexible display 140 may include an operation of controlling pixels so that luminance of all of the pixels included in the flexible display 140 is less than preset luminance, or substantially zero. Deactivating the flexible display 140 may include an operation of setting a color of all of the pixels included in the flexible display 140 to black.

In a case in which the flexible display 140 is partially visible, as in the state 192, the electronic device 100 according to an embodiment may display a screen B on a portion of the visible flexible display 140. Referring to FIG. 1, after switching from the state 191 to the state 192, the electronic device 100 may maintain displaying the screen A, which was displayed on the cover display 170 in the state 191. In the state 192, the screen A may be displayed on the cover display 170, and the screen B may be displayed on the portion of the flexible display 140. For example, in the state 192, a user of the electronic device 100 may simultaneously view the screens A and B at a position where the cover display 170 and the portion of the flexible display 140 are simultaneously visible. The electronic device 100 may support multi-tasking based on the screens A and B, by simultaneously displaying the screens A and B in the state 192. Externally visible pixels (e.g., in the state 192, all pixels of the cover display 170, and a visible portion of the pixels of the flexible display 140) may be used to visualize information. Before the entire flexible display 140 enters a visible state (e.g., a first state 100a of FIG. 2A), the electronic device 100 may support multi-tasking based on the flexible display 140 and the cover display 170.

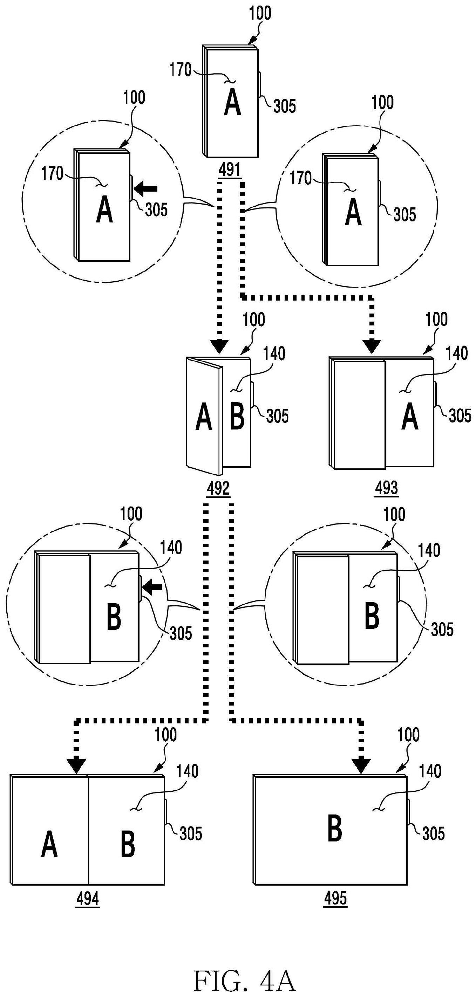

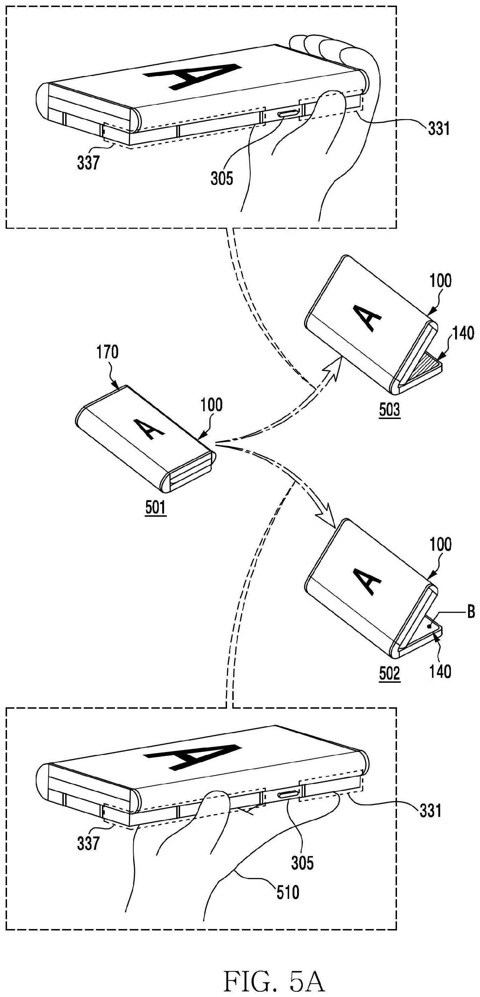

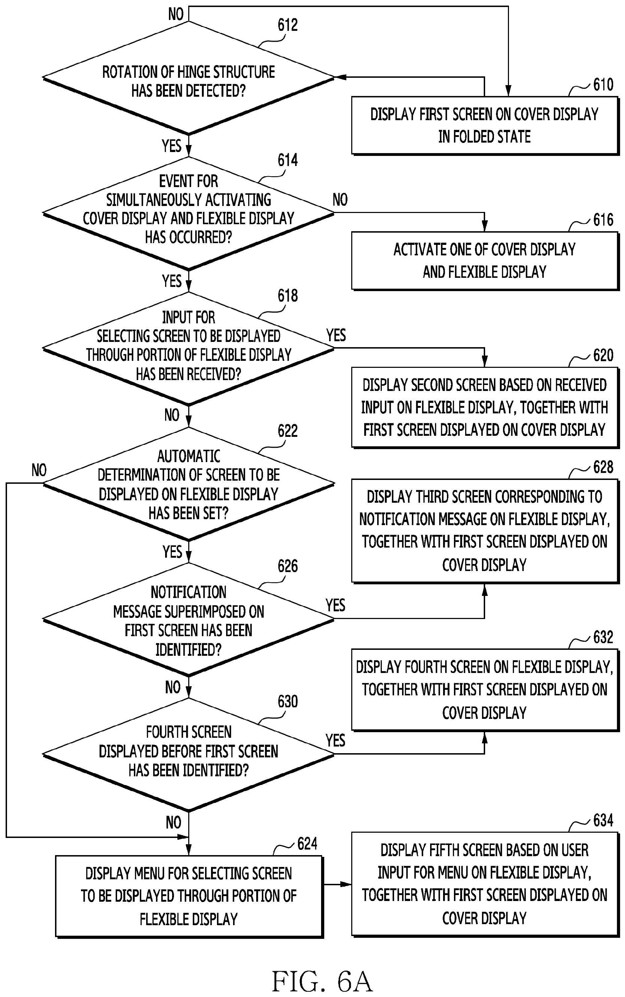

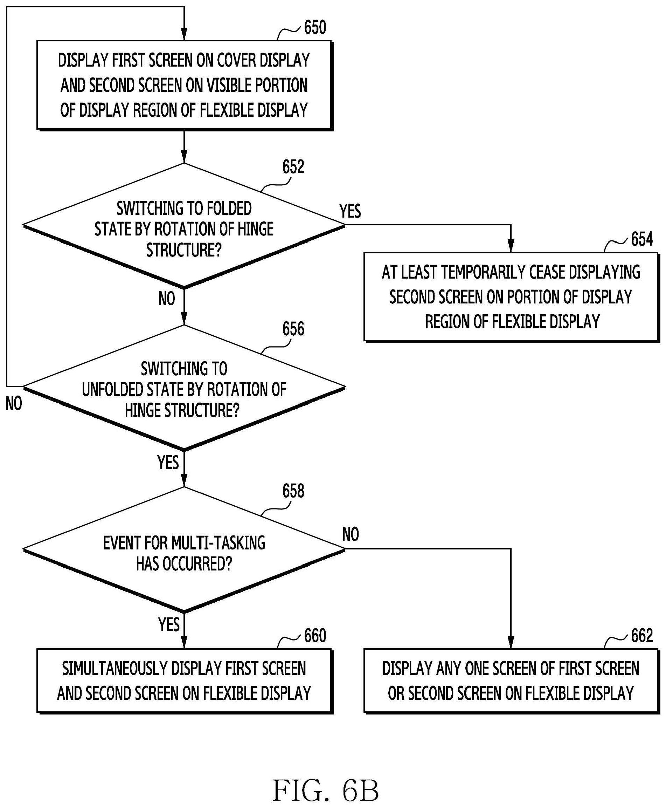

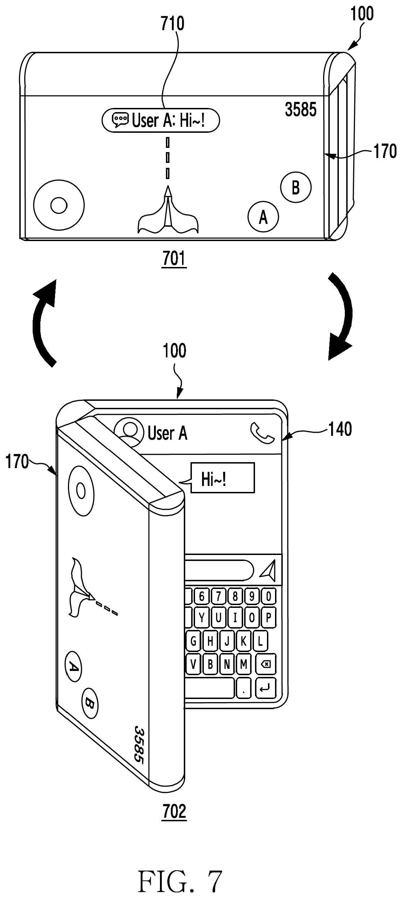

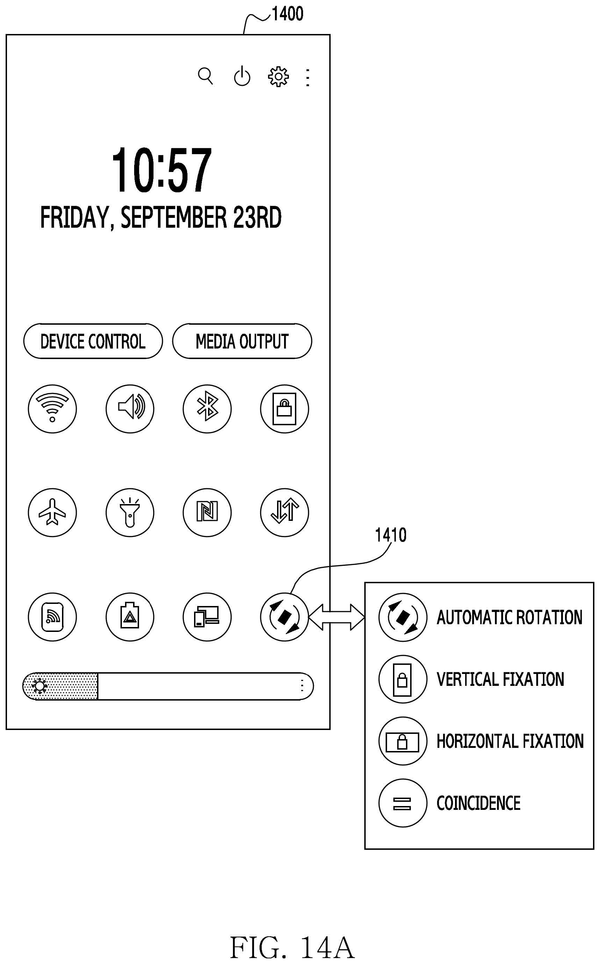

As described above, the electronic device 100 may simultaneously control different displays (e.g., the cover display 170 and the flexible display 140), as in the state 192 of FIG. 1, to simultaneously display the screens A and B on each of the displays. The electronic device 100 may determine whether the state of the housing of the electronic device 100 satisfies a condition in which the user of the electronic device 100 may simultaneously view the displays of the electronic device 100, as in the state 192. As the condition is determined to be satisfied, the electronic device 100 may simultaneously display the screens A and B on each of the displays. An operation of the electronic device 100 checking the condition will be described with reference to FIGS. 4A to 4C. The electronic device 100 simultaneously displaying the screens A and B on each of the displays may be performed based on a user input and/or an option (or setting value) for multi-tasking. The user input and/or the option will be described with reference to FIGS. 5A to 5C. In the state 192, an operation of the electronic device 100 determining the screen B to be displayed on a portion of the flexible display 140 will be described with reference to FIGS. 6A and 6B. Examples of supporting multi-tasking using the screens A and B displayed on the different displays of the electronic device 100 will be described with reference to FIGS. 7, 8A, 8B, 9, and 10 to 13. An operation of the electronic device 100 determining a direction (or an orientation) of the screens A and B displayed on each of the displays will be described with reference to FIGS. 14A to 14E.

FIG. 2A illustrates an example of a first state 100a of an electronic device according to an embodiment of the disclosure. FIG. 2B illustrates an example of a second state 100b of an electronic device according to an embodiment of the disclosure. FIG. 2C illustrates an example of a third state of an electronic device according to an embodiment of the disclosure.

Referring to FIGS. 2A, 2B and 2C, an electronic device 100 may include a housing structure 101, a flexible display 140, a first hinge structure 150, a second hinge structure 160, and a display 170. The housing structure 101 may include a first housing part 110, a second housing part 120, and a third housing part 130.

The first housing part 110 may be rotatably coupled with the second housing part 120 by the first hinge structure 150. The second housing part 120 and the first housing part 110 may rotate with respect to the first hinge structure 150. While the first housing part 110 is rotated with respect to the first hinge structure 150, the second housing part 120 is rotated with respect to the first hinge structure 150. For example, when the second housing part 120 and the first housing part 110 are rotated with respect to the first hinge structure 150, angular displacement of the second housing part 120 is substantially equal to angular displacement of the first housing part 110.

The third housing part 130 may be rotatably coupled with the second housing part 120 by the second hinge structure 160. The second housing part 120 and the third housing part 130 may rotate with respect to the second hinge structure 160. While the second housing part 120 is rotated with respect to the second hinge structure 160, the third housing part 130 is rotated with respect to the second hinge structure 160. For example, when the second housing part 120 and the third housing part 130 are rotated with respect to the second hinge structure 160, angular displacement (or angular change) of the second housing part 120 is substantially equal to angular displacement of the third housing part 130.

The first hinge structure 150 and the second hinge structure 160 may change a state of the electronic device 100. The first hinge structure 150 and the second hinge structure 160 may provide (or enable) a first state 100a of the electronic device 100 (or a first state 100a of the housing structure 101). The first state 100a of the electronic device 100 (or the housing structure 101) may be described as a state of the electronic device 100 (or the housing structure 101) being unfolded (or an unfolded state). In the first state 100a, a front side of the first housing part 110, a front side of the second housing part 120, and a front side of the third housing part 130 may define a front side of the electronic device 100. In the first state 100a, the front side of the first housing part 110, the front side of the second housing part 120, and the front side of the third housing part 130 may face the same direction. In the first state 100a, the electronic device 100 may provide a user with a larger display area of the flexible display 140.

The first hinge structure 150 and the second hinge structure 160 may provide a second state 100b of the electronic device 100. The second state 100b of the electronic device 100 may be described as a state (or a single-folding state or a half-folding state or single-folded state or half-folded state or an intermediate state) that the electronic device 100 is at least partially folded and at least partially unfolded. For example, in the second state 100b, the front side of the second housing part 120 and the front side of the third housing part 130 may face directions identical to each other, and the front side of the first housing part 110 and the front side of the second housing part 120 may face directions opposite to each other. For example, in the second state 100b, the first housing part 110 and the second housing part 120 may be folded and the second housing part 120 and the third housing part 130 may be unfolded. In the second state 100b, the electronic device 100 may provide visual information through a portion of the flexible display 140 (e.g., the third display area 140c).

The electronic device 100 may change, through the second state 100b, from the first state 100a to the third state 100c. The electronic device 100 may change, from the first state 100a which is an unfolded state, to the second state 100b which is a partially unfolded state. For example, the electronic device 100 may change, from the first state 100a that the first housing part 110, the second housing part 120, and the third housing part 130 are facing the same directions, to the second state 100b that the front side of the first housing part 110 face the front side of the second housing part 120. The electronic device 100 may change from the second state 100b which a partially unfolded state to the third state 100c which is a folded state. For example, when transformed from the second state 100b to the third state 100c, the first housing part 110 and the second housing part 120 which are folded may be placed on the third housing part 130.

The first hinge structure 150 and the second hinge structure 160 may provide a third state 100c of the electronic device 100 (or a third state 100c of the housing structure 101). The third state 100c of the electronic device 100 (or the third state 100c of the housing structure 101) may be described as a state of the electronic device 100 (or the housing structure 101) being folded (or a folding state or a multi folded state or a folded state). In the third state 100c, the front side of the first housing part 110 and the front side of the second housing part 120 may face opposite directions and the front side of the second housing part 120 and the front side of the third housing part 130 may face opposite directions. In the third state 100c, the front side of the first housing part 110 and the front side of the third housing part 130 may face the same direction. For example, in the third state 100c, the front side of the second housing part 120 may face the front side of the first housing part 110 and the front side of the third housing part 130 may face a rear side of the first housing part 110. In the third state 100c, a rear side of the second housing part 120 may be externally exposed. The cover display 170 may be disposed on the rear side of the second housing part 120. In the third state 100c, a rear side of the third housing part 130 may be externally exposed. The camera may be disposed on the rear side of the third housing part 130. In the third state 100c, the electronic device 100 may be folded to improve portability and provide visual information through the cover display 170 disposed on the rear side of the second housing part 120.

The electronic device 100 may further comprise a key button 139. The key button 139 may be exposed from a structure formed on the lateral side of the third housing part 130 and partially protrude from the lateral side of the third housing part 130. The key button 139 may provide a physical input to processing circuitry in the electronic device, by the pressure transferring from outside. The key button 139 may not be included in the electronic device 100 and may be implemented in other forms, such as a soft key displayed on the flexible display 140 or the cover display 170.

The key button 139 may be disposed on the lateral side of the third housing part 130 to be exposed to the outside in the third state 100c. The key button 139 may be positioned along a direction where the lateral side of the third housing part 130 faces, since it is positioned on the lateral side of the third housing part 130. The key button 139 disposed on the third housing part 130 may not be moved, even if it is changed from the third state 100c to the first state 100a by the user looking at the display 170. For example, referring to FIG. 2A, in the first state 100a, when the flexible display 140 is viewed from above, the key button 139 may be placed on the right side. Referring to FIG. 2B, in the third state 100c, when the display 170 is viewed from above, the key button 139 may be placed on the right side.

The flexible display 140 may at least partially define an exterior of the electronic device 100. The flexible display 140 may be partially disposed in the housing structure 101. The flexible display 140 may define the front side of the electronic device 100. The flexible display 140 may include a first unbendable portion 141, a second unbendable portion142, a third unbendable portion143, a first bendable portion 144, and a second bendable portion 145. The first unbendable portion141 of the flexible display 140 may be disposed on the front side of the first housing part 110. The second unbendable portion142 of the flexible display 140 may be disposed on the front side of the second housing part 120. The third unbendable portion143 of the flexible display 140 may be disposed on the front side of the third housing part 130. The first bendable portion 144 of the flexible display 140 may be disposed between the first unbendable portion 141 and the second unbendable portion142 of the flexible display 140. For example, the first bendable portion 144 of the flexible display 140 may be disposed on the first hinge structure 150 coupling the first housing part 110 and the second housing part 120. The second bendable portion 145 of the flexible display 140 may be disposed between the second unbendable portion142 and the third unbendable portion143 of the flexible display 140. For example, the second bendable portion 145 of the flexible display 140 may be disposed on the second hinge structure 160 coupling the second housing part 120 and the third housing part 130.

The first hinge structure 150 and the second hinge structure 160 may provide the first state 100a in which the first unbendable portion 141 of the flexible display 140, the second unbendable portion142 of the flexible display 140, and the third unbendable portion143 of the flexible display 140 face the same direction. In the first state 100a, the first bendable portion 144 of the flexible display 140 and the second bendable portion 145 may be disposed in a substantially same horizontal plane with the first unbendable portion141, the second unbendable portion142 and the third unbendable portion 143 of the flexible display 140.

The first hinge structure 150 and the second hinge structure 160 may provide the second state 100b of the electronic device 100. In the second state 100b, the first unbendable portion 141 of the flexible display 140 may face the second unbendable portion 142 of the flexible display 140, and the third unbendable portion 143 of the flexible display 140 and the second unbendable portion 142 of the flexible display 140 may face the same direction. For example, the second unbendable portion 142 and the third unbendable portion 143 may be disposed in a substantially same horizontal plane.

In the second state 100b, the first unbendable portion 141 of the flexible display 140 may be folded such that the first unbendable portion 141 of the flexible display 140 and the second unbendable portion 142 of the flexible display 140 may be folded to face directions different from each other, as the first bendable portion 144 of the flexible display 140 is bent by the first hinge structure 150.

In the second state 100b, the second bendable portion 145 of the flexible display 140 may be unfolded such that the second unbendable portion 142 of the flexible display 140 and the third unbendable portion 143 of the flexible display 140 may face the same direction, as the second bendable portion 145 of the flexible display 140 is maintained in an unfolded state by the second hinge structure 160.

The first hinge structure 150 and the second hinge structure 160 may provide the third state 100c of the electronic device 100. In the third state 100c, the second unbendable portion 142 of the flexible display 140 may face the first unbendable portion 141 of the flexible display 140 and the third unbendable portion 143 of the flexible display 140 may face the rear side of the first housing part 110.

In the third state 100c, the first bendable portion 144 of the flexible display 140 may be folded such that the first unbendable portion141 of the flexible display 140 and the second unbendable portion142 of the flexible display 140 face in opposite directions, as the first bendable portion 144 of the flexible display 140 is bent by the first hinge structure 150.

In the third state 100c, the second bendable portion 145 of the flexible display 140 may be folded such that the second unbendable portion142 of the flexible display 140 and the third unbendable portion143 of the flexible display 140 face in opposite directions, as the second bendable portion 145 of the flexible display 140 is bent by the second hinge structure 160. The second bendable portion 145 may further include a first deformable portion 145a, a second deformable portion 145b, and a planar portion 145c. The first deformable portion 145a is disposed between the planar portion 145c and the second unbendable portion 142 and the second deformable portion 145b may be disposed between the planar portion 145c and the third unbendable portion 143. The planar portion 145c may be disposed between the first deformable portion 145a and the second deformable portion 145b. The planar portion 145c may be supported by a support plate (e.g., the support plate 264 in FIG. 3A) that is distinct from the hinge plates of the second hinge structure 160 (e.g., the third hinge plate 262 and fourth hinge plate 263 in FIG. 3A). Regardless of the state of the electronic device 100, the planar portion 145c may remain plane. The first deformable portion 145a and the second deformable portion 145b are unfolded in the first state 100a and the second state 100b, the first deformable portion 145a and the second deformable portion 145b may be bent in the third state 100c so that the second unbendable portion 142 and the third unbendable portion 143 face different directions. In the third state 100c, the first housing part 110 may be disposed between the second housing part 120 and the third housing part 130. In the third state 100c, the second bendable portion 145 of the flexible display 140 disposed on the second hinge structure 160 may partially be face to a lateral side 110c of the first housing part.

The display area of the flexible display 140 may include a first display area 140a, a second display area 140b, and a third display area 140c. The display area may represent an area where visual information can be provided from the flexible display 140. In the first state 100a, the entire display area of the flexible display 140 may be viewable from the front side of the housing structure 101. For example, in the first state 100a, the first display area 140a, the second display area 140b, and the third display area 140c of the flexible display 140 may be visually exposed. The electronic device 100 may provide a user with a larger display area including the first display area 140a, the second display area 140b, and the third display area 140c.

In the second state 100b, the display area of the flexible display 140 may be partially viewable from the front side of the third housing part 130. For example, the third display area 140c may be visually exposed and, the first display area 140a and the second display area 140b may not be visually exposed.

In the third state 100c, the display area of the flexible display 140 may be not viewable. For example, in the third state 100c, the first display area 140a, the second display area 140b, and the third display area 140c of the flexible display 140 may not be visually exposed.

As a non-limiting example, when the flexible display 140 is, in the first state 100a of the electronic device 100, used for displaying a screen, the first display area 140a, the second display area 140b, and the third display area 140c of the flexible display 140 are enabled. As a non-limiting example, in the third state 100c of the electronic device 100, the first display area 140a, the second display area 140b, and the third display area 140c of the flexible display 140 may be disabled. As a non-limiting example, when the flexible display 140 is, in the second state 100b of the electronic device 100, used for displaying a screen, the third display area may be enabled and the first display area 140a and the second display area 140b of the flexible display 140 may be disabled.

As a non-limiting example, when the flexible display 140 is used to display a screen, in the first state 100a of the electronic device 100, the first display area 140a of the flexible display 140, the second display area 140b and third display area 140c may display visual information. As a non-limiting example, in the third state 100c, the first display area 140a, the second display area 140b, and the third display area 140c of the flexible display 140 may provide a black image. As a non-limiting example, in the second state 100b of the electronic device 100, when the flexible display 140 is used to display a screen, the third display area 140c may provide visual information, and the first display area 140a and the second display area 140b of the flexible display 140 may provide a black image.

The electronic device 100 of FIGS. 2A to 2C may be referred to as an e-type foldable electronic device. The first housing part 110, the second housing part 120, and the third housing part 130 of the electronic device 100 may be a rigid body, and may be referred to as a housing assembly, a sub-housing, a flat housing, and/or a rigid housing. The electronic device 100 including three rigid housings (e.g., the first housing part 110, the second housing part 120, and the third housing part 130) may be referred to as a trifold electronic device. The first hinge structure 150 and/or the second hinge structure 160 may be referred to as a hinge assembly, a hinge housing, a foldable housing, a rotatable housing, a joint housing, a hinge, and/or a flexible housing.

As in the first state 100a of FIG. 2A, an unfolded state in which both a first angle between the first housing part 110, the first hinge structure 150, and the second housing part 120 and a second angle between the second housing part 120, the second hinge structure 160, and the third housing part 130 are substantially straight angles (e.g., approximately 180 °) may be provided. The unfolded state may be referred to as a fully unfolded state, an open state, a fully open state, an unfolding state, a flat state, an outspread state, and/or a planar state. In the unfolded state, the flexible display 140 may have a planar shape. In the unfolded state, directions of portions of the flexible display 140 positioned in each of the first housing part 110, the second housing part 120, and the third housing part 130 may be parallel to each other and/or coincide with each other.

As in the third state 100c of FIG. 2C, a folded state in which both the first angle and the second angle are substantially 0 ° may be provided. The folded state may be referred to as a fully folded state, a folding state, a closed state, and/or a fully-closed state. In the folded state, the flexible display 140 may be visually covered and/or hidden by the first housing part 110, the second housing part 120, and the third housing part 130. In the folded state, a size of the visible flexible display 140 may be substantially zero.

As in the second state 100b of FIG. 2B, a half-folded state in which the first angle is substantially 0 ° and the second angle exceeds 0 ° may be provided. The half-folded state may be referred to as an in-folded state, an intermediate state, a sub-unfolded state, a sub-folded state, a partial folded state, a partial closed state, a partial unfolded state, and/or a partial open state. A state of the electronic device 100 in which the first angle is substantially 0 ° and the second angle is less than 180 ° may be further referred to as an L-shaped state and/or a V-shaped state.

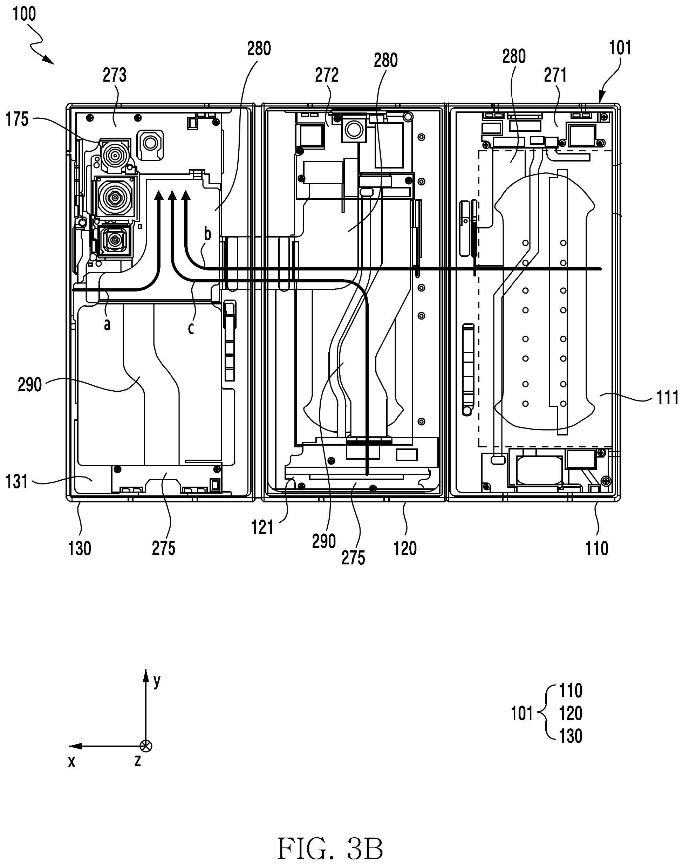

FIG. 3A illustrates a top view of an electronic device with the flexible display removed according to an embodiment of the disclosure. FIG. 3B illustrates a rear view of an electronic device with a rear cover and a display removed according to an embodiment of the disclosure.

Referring to FIGS. 3A and 3B, the electronic device 100 may include the first hinge structure 150 and the second hinge structure 160. A width w1 of the first hinge structure 150 may be narrower than a width w2 of the second hinge structure 160. The difference between the width w1 of the first hinge structure 150 and the width w2 of the second hinge structure 160 may be equal to or greater than the thickness of the first housing part 110. For example, the second hinge structure 160 may have the width w2 wider than the width w1, such that the first housing part 110 is, according to the second state 100b, disposed between the second housing part 120 and the third housing part 130. The first hinge structure 150 may refer to a narrow hinge structure, in terms of having the narrower width than the second hinge structure 160. The second hinge structure 160 may refer to a wider hinge structure, in terms of having the wider width than the first hinge structure 150.

The first hinge structure 150 may include a first set 251 of gears, a first hinge plate 252, and a second hinge plate 253. The first hinge plate 252 may be coupled to the first supporting portion 111 of the first housing part 110. The second hinge plate 253 may be coupled to the second supporting portion 121 of the second housing part 120. The gears g11, g12, g13, and g14 included in the first set 251 of gears may be configured to rotate the first hinge plate 252 and the second hinge plate 253. For example, the gears g11, g12, g3, and g14 included in the first set 251 of gears may rotate the second hinge plate 253 (or the second housing part 120) in conjunction with rotation of the first hinge plate 252 (or the first housing part 110). When the first hinge plate 252 (or the first housing part 110) is rotated, the gears g11, g12, g13 and g14 included in the first set 251 of gears may be rotated according to the rotation of the first hinge plate 252 (or the first housing part 110). The second hinge plate 253 (or the second housing part 120) may be rotated in conjunction with rotation of the first hinge plate 252 according to the rotation of the gears g11, g12, g13, and g14 included in the first set 251 of gears. The gears g11, g12, g13, g14 included in the first set of gears 251 may include the first gear g11, the second gear g12, the third gear g13, and the fourth gear g14. The first gear g11 may be disposed adjacent to the first hinge plate 252, and the fourth gear g14 may be disposed adjacent to the second hinge plate 253. The second gear g12 and the third gear g13 may be disposed between the first gear g11 and the fourth gear g14. The first gear g11, the second gear g12, the third gear g13, and the fourth gear g14 may be sequentially engaged. According to the rotation of the first rotation direction (e.g. clockwise) of the first gear g11, the second gear g12 engaged with the first gear g11 may rotate in the second rotation direction (e.g. counterclockwise) opposite to the first rotation direction. According to the rotation of the second rotation direction of the second gear g12, the third gear g13 engaged with the second gear g12 may rotate in the first rotation direction. According to the rotation of the first rotation direction of the third gear g13, the fourth gear g14 may rotate in the second rotation direction. As the first gear g1 and the fourth gear g14 rotate in different directions, the first housing part 110 connected to the first hinge plate 252 and the second housing part 120 connected to the second hinge plate 253 may be folded or unfolded.

The second hinge structure 160 may include a second set 261 of gears, a third hinge plate 262, a fourth hinge plate 263, and a supporting plate 264. The third hinge plate 262 may be coupled to a second supporting portion 121 of the second housing part 120. The fourth hinge plate 263 may be coupled to a third supporting portion 131 of the third housing part 130. The gears g21, g22, g23, g24, g25 and g26 included in the second set 261 of gears may be configured to rotate the third hinge plate 262 and the fourth hinge plate 263. For example, the gears g21, g22, g23, g24, g25 and g26 included in the second set 261 of gears may rotate the fourth hinge plate 263 (or the third housing part 130) in conjunction with rotation of the third hinge plate 262 (or the second housing part 120). When the third hinge plate 262 (or the second housing part 120) is rotated, the gears g21, g22, g23, g24, g25 and g26 included in the second set 261 of gears may be rotated according to the rotation of the third hinge plate 262 (or the second housing part 120). The fourth hinge plate 263 (or the third housing part 130) is rotated in conjunction with rotation of the third hinge plate 262 (or the second housing part 1 20) according to the rotation of the gears g21, g22, g23, g24, g25 and g26 included in the second set 261 of gears.

The gears g21, g22, g23, g24, g25 and g26 included in the second set of gears 261 may include the first gear g21, the second gear g22, the third gear g23, the fourth gear g24, the fifth gear g25, and the sixth gear g26. The first gear g21 may be disposed adjacent to the third hinge plate 262, and the sixth gear g26 may be disposed adjacent to the fourth hinge plate 263. The second gear g22, the third gear g23, the fourth gear g24, and the fifth gear g25 may be disposed between the first gear g11 and the fourth gear g14. The first gear g21, the second gear g22, the third gear g23, the fourth gear g24, the fifth gear g25, and the sixth gear g26 may be sequentially engaged. According to the rotation of the first rotation direction (e.g. clockwise) of the first gear g21, the second gear g22 engaged with the first gear g21 may rotate in the second rotation direction (e.g. counterclockwise) opposite to the first rotation direction. According to the rotation of the second rotation direction of the second gear g22, the third gear g23 engaged with the second gear g22 may rotate in the first rotation direction. According to the rotation of the first rotation direction of the third gear g23, the fourth gear g24 may rotate in the second rotation direction. According to the rotation of the second rotation direction of the fourth gear g24, the fifth gear g25 engaged with the fourth gear g24 may rotate in the first rotation direction. According to the rotation of the first rotation direction of the fifth gear g25, the sixth gear g26 may rotate in the second rotation direction. As the first gear g21 and the sixth gear g26 rotate in different directions, the second housing part 120 connected to the third hinge plate 262 and the third housing part 130 connected to the fourth hinge plate 263 may be folded or unfolded.

The first hinge structure 150 and the second hinge structure 160 may further include a spiral structure. The spiral structure may include a spiral groove formed in each hinge plate or a rotating member connected to the hinge plate and a moving member sliding along the spiral groove. The hinge plates connected to the hinge structure rotate at substantially the same angular displacement through the spiral structure.

The electronic device 100 may include a first printed circuit board 271, a second printed circuit board 272, and a third printed circuit board 273.

The first printed circuit board 271 may be disposed on the first supporting portion 111 of the first housing part 110. The hardware components in the first housing part 110 may be mounted on the first printed circuit board 271. The second printed circuit board 271 may be disposed on the second supporting portion 121 of the second housing part 120. The third printed circuit board 273 may be disposed on the third supporting portion 131 of the third housing part 130. The hardware components in the third housing part 130 may be mounted on the third printed circuit board 273.

The hardware components disposed on the first circuit board 271 may support or independently operated from the hardware components mounted on the second printed circuit board 272 and/or the hardware components mounted on the third printed circuit board 273.

The hardware components disposed on the second printed circuit board 272 may support or independently operated from the hardware components mounted on the first printed circuit board 271 or the third printed circuit board 273. The hardware components disposed on the second printed circuit board 272 may comprise a speaker, a front camera, and/or display driving circuitry.

The hardware components disposed on the third printed circuit 273 may comprise at least one processor (e.g., application processor (AP), communication processor (CP)) including processing circuitry, memory including one or more storage mediums, communication circuitry, and a rear camera 175. The rear camera 175 may be exposed through a structure (e.g., opening) of the rear side of the third housing part 130.

The electronic device 100 may further include a sub printed circuit board 275 and flexible printed circuit boards 280 and 290. The sub printed circuit board 275 may be disposed on at least a portion of the first housing part 110, the second housing part 120, and the third housing part 130. The flexible printed circuit boards 280 and 290 may include a first flexible printed circuit board 280 and a second flexible printed circuit board 290. The first flexible printed circuit board 280 may electrically connect printed circuit boards disposed on each of the housing parts 110, 120, and 130. The second flexible printed circuit board 290 may connect the sub printed circuit board 275 to the printed circuit board in the housing part in which the sub printed circuit board 275 is disposed, through the second flexible printed circuit board 290.

Components in the electronic device 100 may be connected to at least one processor in the second printed circuit board 272 through flexible printed circuit boards 280 and 290. For example, a signal received from an antenna disposed in the third housing part 130 may be transmitted to the second printed circuit board 272 on which at least one processor (e.g., AP or CP) is disposed, through a signal path a provided by the first flexible printed circuit board 280. The driving circuit for the flexible display 140 disposed in the first housing part 110 may be connected to the second printed circuit board 272 on which at least one processor (e.g., AP), through a signal path b provided by the sub printed circuit board 275 and the first flexible printed circuit board 280. The driving circuit for the display 170 connected to the sub printed circuit board 275 disposed in the first housing part 110 may be electrically connected to the second printed circuit board 272, on which at least one processor (e.g., AP) is disposed, through the signal path c provided by the sub printed circuit board 275, the first flexible printed circuit board 280, and the second flexible printed circuit board 290.

The electronic device 100 may further include batteries. Each of the batteries may be adhere to the supporting portions included in the housing parts 110, 120, and 130. The supporting portions 111, 121, and 131 may support the rechargeable batteries.

The arrangement of the hardware components is exemplary, and the rear camera 175 and the second printed circuit board 271 may be disposed in the third housing part 130, and the third printed circuit board 273 may be disposed in the second housing part 120, differently from described above.

The first housing part 110 and the third housing part 130 are shown as rotating in opposite directions with respect to the second housing part 120 but are not limited thereto. For example, while changing from the first state 100a to the second state 100b, the first housing part 110 may rotate counterclockwise with respect to the second housing part 120, and the third housing part 130 may rotate counterclockwise with respect to the second housing part 120. In the second state, a portion of the display area of the flexible display 140 may be visually exposed, as the first housing part 110 and the third housing part 130 rotate in the same direction.

As described above, a housing (or a foldable housing) (or the housing structure 101) of the electronic device 100 may include the first housing part 110, the second housing part 120 rotatably coupled to the first housing part 110, and the third housing part 130 rotatably coupled to the second housing part 120. The flexible display 140 of the electronic device 100 may cross the first housing part 110, the second housing part 120, and the third housing part 130. For example, the flexible display 140 may be included in all of the first housing part 110, the second housing part 120, and the third housing part 130. The cover display 170 may be positioned toward a surface (e.g., a surface of the second housing part 120) of the housing, which is opposite to the flexible display 140. The housing of the electronic device 100 may be folded up to twice in an unfolded state (e.g., the first state 100a of FIG. 2A) by the first hinge structure 150 and the second hinge structure 160. Conversely, the housing of the electronic device 100 may be unfolded up to twice in the electronic device 100 in a folded state (e.g., the third state 100c of FIG. 2C).

For example, a user viewing the folded state should perform an action of unfolding the housing twice to view the entire flexible display 140. For example, the user viewing the cover display 170 in the folded state should perform the action twice in order to switch a task based on the cover display 170 to the flexible display 140. According to an embodiment, the electronic device 100 may execute a function (e.g., a function associated with multi-tasking) based on a portion of the flexible display 140 by activating at least a portion of the flexible display 140 before the user performs the action twice. For example, the electronic device 100 may support multi-tasking by simultaneously controlling the cover display 170 and the flexible display 140. For example, the user viewing the cover display 170 may perform the action once to enter a state (e.g., the second state 100b of FIG. 2B and/or the half-folded state) in which the flexible display 140 is at least partially visible, and then view screens (e.g., the screens A and B of the state 192 of FIG. 1) displayed on the cover display 170 and a portion of the flexible display 140. In the example, the electronic device 100 may provide or support a user experience based on multi-tasking by using the screens.

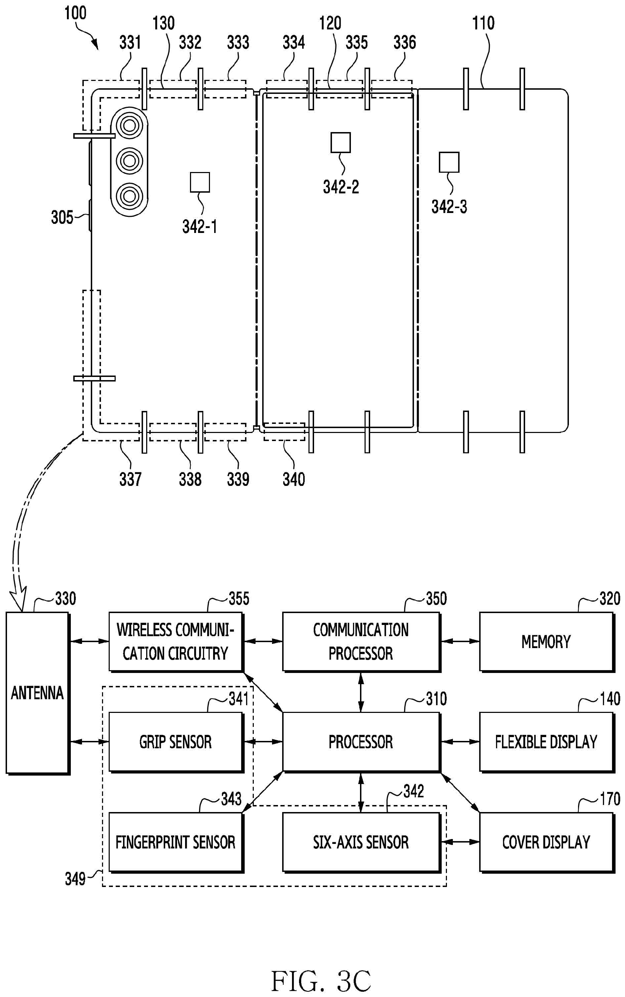

FIG. 3C illustrates a block diagram of an electronic device 100 according to an embodiment of the disclosure. The electronic device 100 according to an embodiment may include a processor 310 and memory 320. The electronic device 100 may include a flexible display 140 and/or a cover display 170. The electronic device 100 may include a sensor 349 (e.g., a grip sensor 341, a six-axis sensor 342, and/or a fingerprint sensor 343). The electronic device 100 may include a communication processor 350. The processor 310 may be electrically and/or operatively coupled to the memory 320, the sensor 349, the communication processor 350, the flexible display 140, and/or the cover display 170. The electronic device 100 may include wireless communication circuitry 355 electrically and/or operatively coupled to the communication processor 350. The electronic device 100 may include an antenna 330 electrically and/or operatively coupled to the grip sensor 341 and/or the wireless communication circuitry 355. Electronic components being electrically coupled may include a state in which a wired signal path (or a connection for wireless communication) for transmission of a signal is established between the electronic components. The electronic components being operatively coupled may include a state in which the electronic components are directly coupled (or a state in which the electronic components are indirectly coupled) so that another electronic component is controlled by any one of the electronic components.

The processor 310 of FIG. 3C may include circuitry (e.g., processing circuitry and/or a core) for performing a calculation (e.g., an arithmetic calculation and/or a logical calculation) on data. A binary code (e.g., an instruction) indicating the calculation may be inputted to the processor 310. The processor 310 may include a central processing unit (CPU), a graphic processing unit (GPU), a neural processing unit (NPU), or a combination thereof. The processor 310, which is the processing circuitry for processing the calculation on data, may include an arithmetic and logic unit (ALU), a floating point unit (FPU), and/or a field programmable gate array (FPGA). The processor 310 may include an application processor (AP) and/or a system on a chip (SoC). The processor 310 may have a structure (e.g., a multi-core structure such as a dual core, a quad core, a hexa core, or an octa core) for simultaneously loading (or fetching) a plurality of instructions. A function and/or an operation described with reference to the disclosure may be performed individually or collectively by one or more processing circuitry included in the processor 310. The processor 310 may control operations of the electronic device of FIGS. 1, 2A to 2C, 3A to 3C, 4A to 4C, 5A to 5C, 6A, 6B, 7, 8A, 8B, 9 to 13, 14A to 14 E, 15, 16A to 16C, 17A, and 17B by executing instructions stored in the memory 320. For example, the processor 310 may correspond to a plurality of processors that divide and collectively perform a plurality of operations between processors.

The memory 320 of FIG. 3C may include circuitry for storing data (or instructions) inputted to the processor 310 or outputted from the processor 310. The memory 320 may include volatile memory such as random-access memory (RAM), and/or non-volatile memory such as read-only memory (ROM). The non-volatile memory may be referred to as storage. The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), erasable PROM (EPROM), electrically erasable PROM (EEPROM), flash memory, a hard disk, a compact disc, a solid state drive (SSD), and an embedded multimedia card (eMMC). The memory 320 may include one or more storage mediums (e.g., the volatile memory and/or the non-volatile memory as described above) positioned in a distributed manner in the electronic device 100. The processor 310 of the electronic device 100 may execute instructions of the memory 320 in the electronic device 100 to perform a function and/or an operation (e.g., operations of FIGS. 6A and/or 6B) indicated by the instructions. For example, in case that the electronic device 100 includes at least one processor, the at least one processor may be configured to execute the instructions collectively or individually.

A display (e.g., the flexible display 140 and/or the cover display 170) of the electronic device 100 may include circuitry for visualizing information provided from the processor 310. The display may include a liquid crystal display (LCD), a plasma display panel (PDP), and/or light emitting diodes (LEDs). The LED may include an organic LED (OLED). An embodiment is not limited thereto, and the display may include electronic paper. A display region (or an active region) of the display may include a region in which light is emitted, formed by pixels (e.g., activated pixels) of the display. The display may include a sensor (e.g., a touch sensor) for detecting an external object (e.g., a finger of a user) on the display. The sensor may be included in the display in a form of a panel (e.g., a touch sensor panel (TSP)).

The sensor 349 of the electronic device 100 may include circuitry for generating and/or outputting electrical information (e.g., sensor data) that may be processed (or stored in the memory 320) by the processor 310 from non-electrical information. For example, the grip sensor 341 may be connected to the antenna 330 of the electronic device 100 and then may generate or output data indicating a change (e.g., a change by an external object (e.g., a hand holding the electronic device 100)) in an electric field formed based on the antenna 330. For example, the fingerprint sensor 343 may generate or output data associated with an external object in contact with a button 305 (or the key button 139 of FIGS. 2A to 2C) of the electronic device 100. For example, in case that the finger is contacted on the button 305, the fingerprint sensor 343 may generate or output a two-dimensional representation (or image) with respect to a fingerprint of the finger. For example, the six-axis sensor 342, such as an inertial measurement unit (IMU), may generate or output data indicating a translational motion of the electronic device 100 measured in each of three axes (e.g., an x-axis, a y-axis, and a z-axis), and/or a rotational motion of the electronic device 100 measured in each of rotation directions (e.g., a roll direction, a pitch direction, and a yaw direction) of each of the three axes. Data indicating the translational motion may include acceleration for each of the three axes. In order to measure the acceleration, the six-axis sensor 342 may include an acceleration sensor. Data indicating the rotational motion may include angular velocities for each of the rotation directions. In order to measure the angular velocity, the six-axis sensor 342 may include a gyroscope.

The communication processor 350 of the electronic device 100 may be configured to control hardware (e.g., the antenna 330 and/or the wireless communication circuitry 355) included in the electronic device 100 for wireless communication (e.g., wireless communication based on long-term evolution (LTE), new radio (NR), sixth generation (6G), above-6G, Bluetooth, Bluetooth low-energy (BLE), Wi-Fi, near-field communication (NFC), and/or ultra-wide bandwidth (UWB)). For example, the processor 310 may control the communication processor 350 to wirelessly transmit information to an external electronic device or wirelessly receive information from an external electronic device. The communication processor 350 may cause a wireless signal to be outputted from the antenna 330, by controlling the wireless communication circuitry 355. The communication processor 350 may be configured to receive the wireless signal received through the antenna 330, by controlling the wireless communication circuitry 355.

Referring to FIG. 3C, antennas 331, 332, 333, 334, 335, 336, 337, 338, 339, and 340 positioned in a housing of the electronic device 100 are illustrated. The antennas 331, 332, 333, 334, 335, 336, 337, 338, 339, and 340 may include a conductive pattern (e.g., a metal strip) positioned on a surface (e.g., a side surface) of the housing. An embodiment is not limited thereto, and the antennas 331, 332, 333, 334, 335, 336, 337, 338, 339, and 340 may include a patch antenna.

The grip sensor 341 of the electronic device 100 may generate or output data indicating a change in the electric field formed in the antenna 330, by being connected to the antenna 330. The number of the antennas 330 connected to the grip sensor 341 may be one or more. In case that a plurality of grip sensors, including the grip sensor 341, are connected to different antennas, the processor 310 may determine or identify whether each of the antennas is adjacent to an external object by using the plurality of grip sensors. The grip sensor 341 may transmit information indicating a change in the electric field of the antenna 330 connected to the grip sensor 341 to the processor 310. The information may be associated with capacitance of the antenna 330 measured by the grip sensor 341. The processor 310 may detect an external object (e.g., a hand, a palm, and/or a finger) adjacent to the antenna 330 by using the transmitted information. The processor 310 may determine whether a grip has been detected by using the grip sensor 341. Based on detecting the grip, the processor 310 may perform an operation (e.g., an operation of reducing the magnitude of the wireless signal outputted from the antenna 330) to satisfy a regulation associated with a specific absorption rate (SAR).

Referring to FIG. 3C, a plurality of six-axis sensors 342-1, 342-2, and 342-3 included in the electronic device 100 are illustrated. The six-axis sensors 342-1, 342-2, and 342-3 may be positioned in each of a first housing part 110, a second housing part 120, and a third housing part 130 of the electronic device 100. The processor 310 of the electronic device 100 may detect a state of the housing (e.g., a foldable housing) by using the sensor 349 including the six-axis sensors 342-1, 342-2, and 342-3. For example, a first angle between the first housing part 110 and the second housing part 120, and/or a second angle between the second housing part 120 and the third housing part 130 may be detected by using sensor data.

The electronic device 100 may selectively activate or control the flexible display 140 and/or the cover display 170 according to a state of the electronic device 100 and/or the housing. For example, while the electronic device 100 is in a folded state, or based on detecting a state of the foldable housing in the folded state, the electronic device 100 may display a first screen on the cover display 170 (e.g., the state 191 of FIG. 1). While displaying the first screen on the cover display 170, the electronic device 100 may detect switching from the folded state to a half-folded state by using the sensor 349.

The electronic device 100 detecting the switching from the folded state to the half-folded state may determine whether to maintain activating the cover display 170 and/or whether to activate at least a portion of the flexible display 140. For example, while an event for multi-tasking occurs, the electronic device 100 detecting the switching may maintain displaying the first screen on the cover display 170. While the event for multi-tasking occurs, the electronic device 100 detecting the switching may display a second screen on the flexible display 140 (e.g., the state 192 of FIG. 1). The second screen may be displayed on a portion of a display region of the flexible display 140, which is visible in the half-folded state of the electronic device 100 based on the switch. For example, the electronic device 100 detecting the switching independently of the event may deactivate the cover display 170. The electronic device 100 detecting the switching independently of the event may display a third screen at least partially including a content of the first screen on the flexible display 140.

Hereinafter, different states of the electronic device 100, which are switched based on the operation of the electronic device 100 described above, are illustrated with reference to FIGS. 4A to 4C.

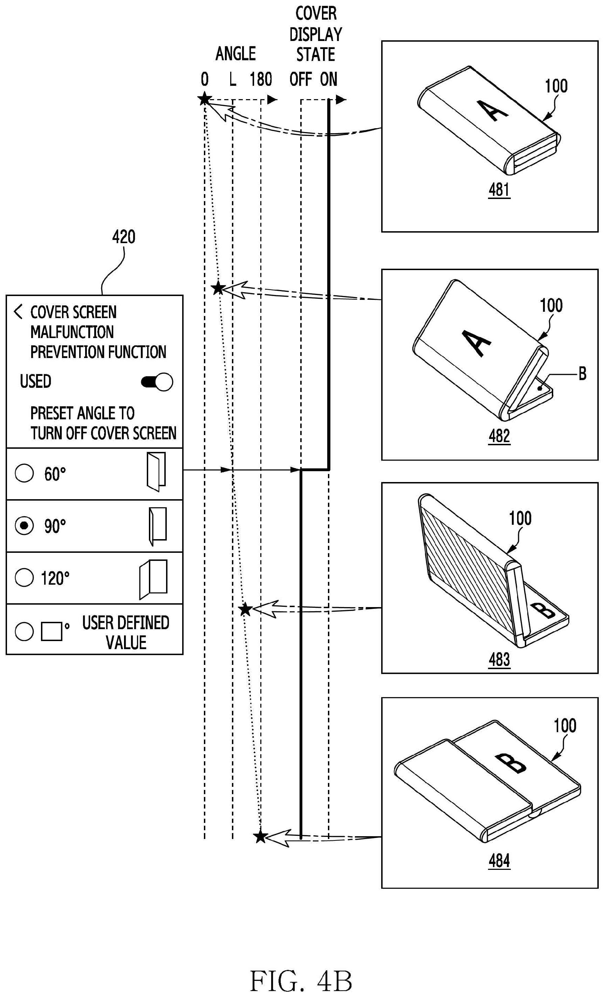

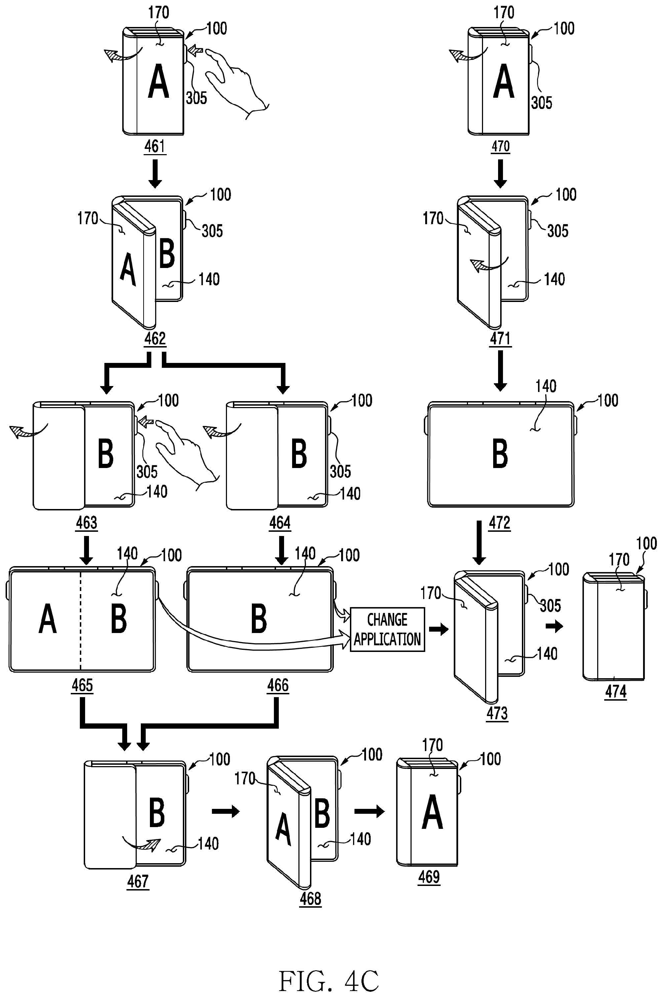

FIGS. 4A, 4B, and 4C illustrate a state transition diagram of an electronic device 100 foldable by a plurality of folding axes according to various embodiments of the disclosure. The state of the electronic device 100 of FIGS. 1, 2A to 2C, and/or 3A to 3C may be switched according to the state transition diagram of FIGS. 4A, 4B, and 4C.

Referring to FIG. 4A, a state 491 of the electronic device 100 included in a folded state, states 492 and 493 of the electronic device 100 included in a half-folded state, and states 494 and 495 of the electronic device 100 included in an unfolded state are illustrated. Based on identifying that a cover display 170 among a flexible display 140 and the cover display 170 is visible by using the sensor 349 of FIG. 3C, the electronic device 100 may determine a state of a housing as the folded state. Based on identifying that a portion of a display region of the flexible display 140 is visible together with the cover display 170 by using the sensor 349 of FIG. 3C, the electronic device 100 may determine the state of the housing as the half-folded state. Based on identifying that an entire display region of the flexible display 140 is visible by using the sensor 349 of FIG. 3C, the electronic device 100 may determine the state of the housing as the unfolded state.

In the state 491 included in the folded state, the electronic device 100 may display a screen A on the cover display 170. While displaying the screen A, the electronic device 100 may detect rotation of a folding axis (e.g., a folding axis between the second housing part 120 with respect to the third housing part 130 of FIGS. 2A to 2C). Based on the rotation, the electronic device 100 may identify or determine that the state of the housing is switched from the folded state to the half-folded state (or an intermediate state). The electronic device 100 identifying the switching may switch to any one of the states 492 and 493 of FIG. 4A.

The electronic device 100 detecting the switching from the folded state to the half-folded state may check whether an event for multi-tasking has occurred. The event may occur by a user input of pressing a button 305 of the electronic device 100. The event may occur based on an option (or a setting value) to maintain displaying a screen (e.g., the screen A) on the cover display 170 in the half-folded state. The event may occur by a user input for selecting another screen to be displayed on the flexible display 140 together with the screen A displayed on the cover display 170. When the event occurs, the electronic device 100 may switch to the state 492. The electronic device 100 detecting the switching from the folded state to the half-folded state independently of the event (or without the event) may switch to the state 493.

Referring to FIG. 4A, based on detection of switching from the unfolded state to the half-folded state while receiving the user input (e.g., a gesture of pressing the button 305 and/or a touch gesture for the button 305) based on the button 305, the electronic device 100 may switch from the state 491 to the state 492. In the state 492, the electronic device 100 may display a screen B on the flexible display 140. In the state 492, the electronic device 100 may maintain displaying the screen A on the cover display 170. In the state 492, at a specific position outside the electronic device 100, both the screen A and the screen B may be visible. A user who views the electronic device 100 from the position may simultaneously recognize both the screen A and the screen B. For example, the electronic device 100 may support multi-tasking based on the screen A and the screen B.

Referring to FIG. 4A, based on detection of the switching from the unfolded state to the half-folded state in a state in which the user input based on the button 305 is not received, the electronic device 100 may switch from the state 491 to the state 493. In the state 493, the electronic device 100 may deactivate the cover display 170. In the state 493, the electronic device 100 may display the screen A on the entire display region of the flexible display 140. A content of the screen A displayed in the display region of the flexible display 140 may be substantially the same as a content of the screen A, which was displayed through the cover display 170 in the state 491.

In the states 492 and 493 included in the half-folded state, the electronic device 100 may switch to any one state of the folded state or the unfolded state. For example, in case that the user folds the electronic device 100 again, the electronic device 100 may switch to the folded state. In the states 492 and 493, the electronic device 100 detecting switching from the half-folded state to the folded state may switch to the state 491. For example, the electronic device 100 may deactivate the flexible display 140. The electronic device 100 may maintain displaying the screen A on the cover display 170.

For example, in case that the user unfolds the electronic device 100 while the state of the housing is in the half-folded state, the electronic device 100 may switch to the unfolded state. For example, in the state 492, the electronic device 100 detecting switching from the half-folded state to the unfolded state may switch to any one state of the states 494 and 495 included in the unfolded state. The electronic device 100 switching from the half-folded state to the unfolded state may deactivate the cover display 170.

The electronic device 100 detecting the switching from the half-folded state to the unfolded state may check whether the event for multi-tasking has occurred. In case that the event for multi-tasking occurs, the electronic device 100 may switch to the state 494 and display a plurality of screens based on a picture-by-picture (PBP) layout on the flexible display 140. Independently of the event (or without the event), the electronic device 100 detecting the switching from the half-folded state to the unfolded state may switch to the state 495.

Referring to FIG. 4A, the electronic device 100 may switch from the state 492 to the state 494 based on detection of the switching from the half-folded state to the unfolded state while receiving the user input (e.g., the gesture of pressing the button 305 and/or the touch gesture for the button 305) based on the button 305. In the state 494, the electronic device 100 may display the screens A and B, which were displayed on different displays in the state 492, respectively, on each of portions of the display region of the flexible display 140. For example, in the state 494, the screen A and the screen B may occupy different portions of the display region of the flexible display 140. The screen A displayed on the flexible display 140 in the state 494 may at least partially include a content of the screen A, which was displayed on the cover display 170 in the state 492. The screen B displayed on the flexible display 140 in the state 494 may at least partially include a content of the screen B, which was displayed on a portion of the flexible display 140 in the state 492.

Although an embodiment in which the screens A and B are displayed side-by-side on the flexible display 140 based on the PBP has been described, an embodiment is not limited thereto. For example, the electronic device 100 may display the screens A and B on the flexible display 140 based on a picture-in-picture (PIP) layout. For example, the electronic device 100 may display the screen B on the screen A or may display the screen A on the screen B.

Referring to FIG. 4A, in a state in which the user input based on the button 305 is not received, the electronic device 100 may switch from the state 492 to the state 495 based on detecting the switching from the half-folded state to the unfolded state. In the state 495, the electronic device 100 may display the screen B, which was displayed on the portion of the flexible display 140 in the state 492 on the entire display region of the flexible display 140. A content of the screen B displayed on the flexible display 140 in the state 495 may at least partially include a content of the screen B, which was displayed on the portion of the flexible display 140 in the state 492. An embodiment is not limited thereto, and in the state 495, the electronic device 100 may display the screen A, which was displayed on the cover display 170 in the state 492 on the entire display region of the flexible display 140.

In the states 494 and 495 included in the unfolded state, the electronic device 100 may switch to the half-folded state. For example, in case that the user folds the electronic device 100 again, the electronic device 100 may switch to the half-folded state. In the state 494, the electronic device 100 detecting the switching to the half-folded state may switch to the state 492. In the state 495, the electronic device 100 detecting the switching to the half-folded state may display, on a visible portion of the display region of the flexible display 140, the reduced screen B having a size of the portion.

While switching from the folded state (e.g., the state 491) to the half-folded state (e.g., the state 492), a condition in which the electronic device 100 activates a portion of the flexible display 140 may be customized. Hereinafter, an operation of the electronic device 100 while switching from the folded state to the half-folded state will be described with reference to FIG. 4B.

Referring to FIG. 4B, a state transition diagram of the electronic device 100 switching from a state 481 included in the folded state to the half-folded state (e.g., states 482, 483, and 484) is illustrated. Referring to FIG. 4B, a graph indicating an angle between housing parts (e.g., the second housing part 120 and the third housing part 130 described with reference to FIGS. 2A to 2C) of the electronic device 100 and a graph indicating a state of a cover display associated with the angle are illustrated.

In the state 481, which is the folded state, the angle between the housing parts of the electronic device 100 may be 0 °. In the state 481, the electronic device 100 may activate (e.g., turn-on) the cover display and display the screen A on the cover display. Referring to FIG. 4B, in the state 481, as the user unfolds the housing, the angle between the housing parts may gradually increase. When the angle between the housing parts increases to exceed a preset angle (e.g., an angle set between approximately 10 ° to 30 °) associated with the half-folded state, the electronic device 100 may switch to the half-folded state.

In case that the event for multi-tasking occurs, as in the state 492 of FIG. 4A, the electronic device 100 may switch to the state 482. In the state 482, the electronic device 100 may activate (e.g., turn-on) a visible portion of a display region of the flexible display and display the screen B on the activated portion. In the state 482, the electronic device 100 may respectively display the screens A and B on the cover display and the portion of the flexible display.

After the state 482, as the user unfolds the housing, the angle between the housing parts may continue to increase. In an embodiment, the electronic device 100 may compare a reference angle L for deactivating (e.g., turn-off) the cover display and the angle between the housing parts.

The electronic device 100 may provide a screen 420 for changing the reference angle L. The screen 420 may be associated with a software application for changing or customizing one or more setting values of the electronic device 100, such as a setting application. Referring to FIG. 4B, the screen 420 may include a list of a candidate reference angle (e.g., 60 °, 90 °, and 120 °) selectable by the user. The screen 420 may include a visual object (e.g., a text box) for receiving a numerical value indicating the reference angle L. Through the screen 420, the electronic device 100 may receive a user input for setting the reference angle L. The reference angle L, which is compared to the angle between the housing parts, may be determined or adjusted by the user input.

Referring to FIG. 4B, when the angle between the housing parts increases to exceed the reference angle L, the electronic device 100 may deactivate (e.g., turn-off) the cover display. In the state 483 after the angle exceeds the reference angle L, the electronic device 100 may display the screen B on the flexible display among the cover display and the flexible display. Since the cover display is deactivated, the screen A, which was displayed on the cover display may disappear.

In the state 483 after the angle between the housing parts exceeds the reference angle L, the electronic device 100 may at least temporarily cease receiving a touch input (or detecting a touch input) through the deactivated cover display. For example, the electronic device 100 may deactivate a touch sensor configured to detect a touch input on the cover display, discard sensor data of the touch sensor, ignore the sensor data, or refrain from executing instructions based on the sensor data. The electronic device 100 detecting the touch input on the cover display may be performed while the angle between the housing parts is reduced to less than or equal to the reference angle L. Since detecting the touch input on the cover display ceases after the angle between the housing parts exceeds the reference angle L, an unintended operation of the electronic device 100 by a finger in contact with the cover display may not be performed. Although an embodiment in which a condition (e.g., the reference angle L) in which the cover display is deactivated and a condition in which the touch input on the cover display is not detected has been described, an embodiment is not limited thereto.

Referring to FIG. 4B, the angle between the housing parts may be increased up to 180 °. In the state 484 of FIG. 4B, the angle between the housing parts may be 180 °. Referring to FIG. 4B, since a first time point at which the cover display is deactivated is before a second time point at which the angle between the housing parts increases to a straight angle (e.g., approximately 180 °), an unintended touch input by the finger contacted on the cover display to unfold the housing may be ignored after the first time point.

A case in which the angle between the housing parts is increased from 0 ° to 180 ° has been described, but an embodiment is not limited thereto. When the angle between the housing parts is reduced in the state 484 of FIG. 4B, the electronic device 100 may compare the reference angle L and the angle. When the angle between the housing parts is reduced to less than or equal to the reference angle L, the electronic device 100 may activate (e.g., turn-on) the cover display. Through the activated cover display, the electronic device 100 may resume receiving the touch input (or detecting the touch input). As in the state 482 of FIG. 4B, the electronic device 100 may resume displaying the screens A and B on the cover display and the flexible display. When the angle between the housing parts is reduced to a preset angle (e.g., an angle less than the reference angle L) for switching to the folded state, the electronic device 100 may switch to the folded state. When switching to the folded state, the electronic device 100 may deactivate (e.g., turn-off) the flexible display.

Hereinafter, referring to FIG. 4C, an operation of the electronic device 100 while switching from the folded state to a fully unfolded state and from the fully unfolded state to the folded state will be described.

Referring to FIG. 4C, states 461, 470, 469, and 474 of the electronic device 100 included in the folded state, states 463, 464, and 467 of the electronic device 100 included in the half-folded state, and states 465, 466, and 472 of the electronic device 100 included in the fully unfolded state are illustrated. In a state (e.g., the states 461 and 470) of the electronic device 100 included in the folded state, the electronic device 100 may display the screen A on the cover display 170. While being in the folded state, the electronic device 100 may deactivate (e.g., turn-off) the flexible display 140.

In the state 461 included in the folded state, the electronic device 100 may detect rotation of the housing part. In case that the flexible display 140 is visible by the rotation, the electronic device 100 may check whether an input for activating both the cover display 170 and the flexible display 140 has been received. The input may include the user input of pressing the button 305. The electronic device 100 receiving the user input of pressing the button 305 may display the screen A on the cover display 170, and may display the screen B on a visible portion of the flexible display 140, as in the state 462.

Referring to FIG. 4C, in the state 462, according to the rotation of the housing part, the electronic device 100 may switch to the half-folded state. In the states 463 and 464 included in the half-folded state, the electronic device 100 may display the screen B on the flexible display 140. In the states 463 and 464, the electronic device 100 may deactivate the cover display 170.

Referring to FIG. 4C, while receiving the user input of pressing the button 305, as in the state 463, the electronic device 100 detecting the rotation of the housing part may switch to the state 465 included in the unfolded state. In the state 465, the electronic device 100 may display the screens A and B on the flexible display 140. The screens A and B may occupy different portions of the flexible display 140 based on the PBP layout. Meanwhile, as in the state 464, the electronic device 100 detecting the rotation of the housing part without the user input of pressing the button 305 may switch to the state 466 included in the unfolded state.

As the housing part is folded again, in the states 465 and 466 included in the unfolded state, the electronic device 100 may switch to the half-folded state. In case that a screen (or a software application) displayed on the flexible display 140 is not switched after entering the states 465 and 466, the electronic device 100 may display the screen B on a portion (e.g., the visible portion of the flexible display 140) of the flexible display 140 when switching to the half-folded state. For example, the electronic device 100 may display again the screen B, which was displayed on the flexible display 140 before entering the fully unfolded state (e.g., the states 465 and 466).

In case that the housing part is folded again after entering the state 467, the electronic device 100 may display the screens B and A on each of the flexible display 140 and the cover display 170 as in a state 468. In the state 468, in case that the housing part is folded again, the electronic device 100 may display the screen A on the cover display 170 as in the state 469. For example, from the state 461 corresponding to the folded state, in case that another screen different from the screens A and B is not displayed and the electronic device 100 is switched to the folded state again, the electronic device 100 may display the screen A, which was displayed in the state 461 again, as in the state 469.

Meanwhile, as in the state 470, the electronic device 100 detecting the rotation of the housing part without the input may activate any one of the cover display 170 or the flexible display 140, by switching to a state 471 (e.g., a system default action). For example, the electronic device 100 may control the cover display 170 and/or the flexible display 140 based on an operating system and/or a preset setting value. In the state 471, the electronic device 100 detecting the rotation of the housing part without the input may switch to the state 472 included in the fully unfolded state. In the state 472, the electronic device 100 may display the screen B on the flexible display 140 based on the operating system and/or the preset setting value. In the state 472, in case that the housing part of the electronic device 100 is rotated again and the electronic device 100 is switched to the half-folded state (e.g., a state 473) or the folded state (e.g., the state 474), the electronic device 100 may control the flexible display 140 and the cover display 170 based on the operating system and/or the preset setting value.

In the states 465 and 466 after receiving an input for simultaneously activating the flexible display 140 and the cover display 170, such as the input of pressing the button 305, the electronic device 100 may switch to the states 473 and 4 according to switching of the screen displayed on the flexible display 140. For example, after changing (e.g., an input displaying a screen C) the screen displayed on the flexible display 140 in a state (e.g., the states 465 and 466) of displaying at least one of the screens A and B, the electronic device 100 may control the flexible display 140 and the cover display 170 based on the operating system and/or the preset setting value. For example, when switching to the half-folded state and/or the folded state by the rotation of the housing part in a state of displaying the screen C on the flexible display 140, the electronic device 100 may switch to any one of the states 473 and 474 instead of the states 467, 468, and 469.

Hereinafter, an operation of the electronic device 100 for detecting a user input for activating all of a portion (e.g., a visible portion) of the display region of the cover display and the flexible display will be described with reference to FIGS. 5A to 5C.

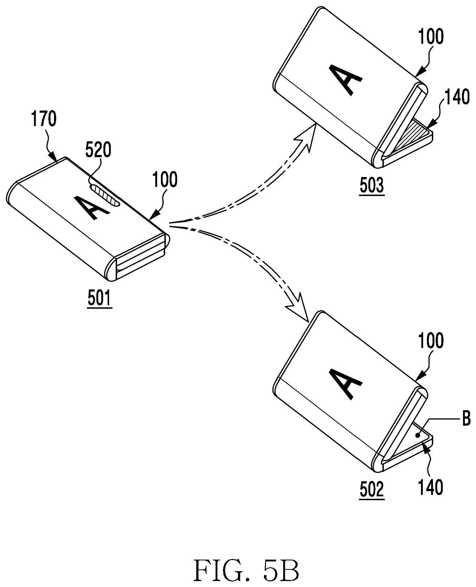

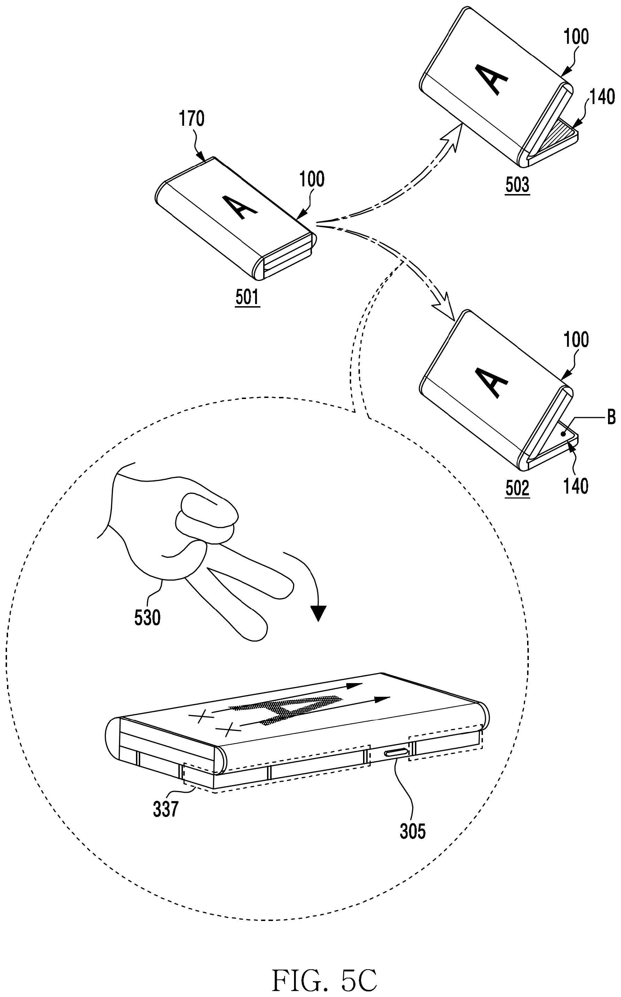

FIGS. 5A, 5B, and 5C illustrate operations of an electronic device 100 receiving an input for multi-tasking according to various embodiments of the disclosure. An input described with reference to FIGS. 5A to 5C may cause an event for multi-tasking, described with reference to FIGS. 4A to 4C.

The input for multi-tasking may include a gesture of pressing a button (e.g., the button 305 of FIG. 3C) of the electronic device 100 and/or a gesture of contacting a finger on the button, described above with reference to FIGS. 4A to 4C. The button may be configured to adjust volume of the electronic device 100, control (e.g., turn-on and/or turn-off) power, or execute an artificial intelligence (AI) model. An embodiment is not limited thereto, and a function selected by a user may be mapped to the button.

The input for multi-tasking may be detected by a grip (e.g., a hand 510 of the user holding the electronic device 100) on the electronic device 100, described with reference to FIG. 5A. For example, the electronic device 100 may detect a grip on a portion of the electronic device 100 adjacent to an antenna 337, by using a grip sensor connected to the antenna 337 of a housing. While switching from a state 501 in a folded state to a half-folded state, the electronic device 100 detecting a grip on the antenna 337 may switch to a state 502. In the state 502, the electronic device 100 may display screens A and B, by using both a cover display 170 and a flexible display 140, as in the state 492 of FIG. 4A.

Referring to FIG. 5A, in case that the user holds a portion (e.g., a portion of the electronic device 100 in which an antenna 331 is positioned) different from the antenna 337, the electronic device 100 may not detect the grip on the antenna 337. In the state 501 in the folded state, the electronic device 100 that detects unfolding of the housing without the grip on the antenna 337 may switch to a state 503. In the state 503, the electronic device 100 may display the screen A by using only the cover display 170 of FIG. 4A. After the state 503, in case that the housing is unfolded without the grip on the antenna 337, the electronic device 100 may deactivate the cover display 170 and activate the flexible display 140. On the activated flexible display 140, the electronic device 100 may continuously display the screen A, which was displayed on the cover display 170.

An embodiment of receiving the input for multi-tasking based on the antenna 337 has been described, but an embodiment is not limited thereto. For example, when detecting the grip on the antenna 331, the electronic device 100 may determine that the input for multi-tasking has been received.

The input for multi-tasking may include an input indicating selection of a visual object 520, described with reference to FIG. 5B. In the state 501 in the folded state, the electronic device 100 may display the visual object 520 on the cover display 170. The visual object 520 may include preset text (e.g., dual mode on and/or multi-tasking mode) indicating that both the cover display 170 and the flexible display 140 are activated. The visual object 520 may have a form of a button, or may have a form of a pop-up window. The visual object 520 may always be displayed on the cover display 170, or may be displayed by a preset gesture (e.g., a swipe gesture) performed on the cover display 170. When the unfolding of the housing is detected, the visual object 520 may be displayed on the cover display 170 and/or the flexible display 140.

Referring to FIG. 5B, in the state 501, in case that the housing is unfolded after receiving the input indicating the selection of the visual object 520, the electronic device 100 may switch to the state 502. The state 502 of FIG. 5B may correspond to the state 502 of FIG. 5A. In the state 501, in case that the housing is unfolded without the selection of the visual object 520 or the housing is unfolded before the input indicating the selection of the visual object 520, the electronic device 100 may switch to the state 503. The state 503 of FIG. 5B may correspond to the state 503 of FIG. 5A.

An embodiment in which the visual object 520 is displayed on the cover display 170 has been described, but an embodiment is not limited thereto. In the state 501 in the folded state, the electronic device 100 detecting that the housing is at least partially unfolded may display the visual object 520 on the flexible display 140. The visual object 520 may be displayed on a visible portion of a display region of the flexible display 140. On the portion, the visual object 520 may be displayed at a position adjacent to any one edge (e.g., a right edge of the flexible display 140 located on the third housing part 130 of FIG. 2C) of the flexible display 140. In response to the input indicating the selection of the visual object 520 displayed on the flexible display 140, the electronic device 100 may display the screen B on the portion of the flexible display 140 as in the state 502.

The input for multi-tasking may include a touch input performed on the cover display 170, described with reference to FIG. 5C. The touch input may include a swipe gesture performed on the cover display 170 and based on two fingers 530. An embodiment is not limited thereto, and the input for multi-tasking may include a drag gesture and/or a swipe gesture based on different number of fingers.

Referring to FIG. 5C, in the state 501, the electronic device 100 receiving the swipe gesture (e.g., a swipe gesture performed along a vertical direction of the cover display 170) based on the two fingers 530 may switch to the state 502 in case that the housing is unfolded. The state 502 of FIG. 5C may correspond to the state 502 of FIG. 5A. In case that the housing is unfolded without the swipe gesture (or before receiving the swipe gesture), the electronic device 100 may switch to the state 503. The state 503 of FIG. 5C may correspond to the state 503 of FIG. 5A. Although the swipe gesture performed along the vertical direction of the cover display 170 has been described, a direction of the swipe gesture is not limited.

The input for multi-tasking may be associated with a speed and/or an angle at which the housing is unfolded. For example, in case that the housing is unfolded at less than a preset speed, the electronic device 100 may maintain displaying the screen A on the cover display 170 and display the screen B on the visible portion of the display region of the flexible display 140. For example, in case that the housing is unfolded at a speed exceeding the preset speed, the electronic device 100 may cease displaying the screen A on the cover display 170 and display the screen A on the visible portion of the display region of the flexible display 140. The speed at which the housing is unfolded may include an angular velocity between the second housing part 120 and the third housing part 130 of FIGS. 2A to 2C.

The input for multi-tasking may be associated with an angle between the housing parts, unfolded by an action of the user of unfolding the housing. For example, in case that the angle (e.g., an angle between the second housing part 120 and the third housing part 130 of FIGS. 2A to 2C) between the housing parts is increased from 0 ° to an angle within a preset angle range (e.g., an angle range formed less than the reference angle L of FIG. 4B) and then maintained for exceeding preset time, the electronic device 100 may maintain displaying the screen A on the cover display 170, and display the screen B on the visible portion of the display region of the flexible display 140. As described above with reference to FIG. 4B, the preset angle range may be customized by the user.

The input for multi-tasking may include an input for adjusting an option associated with multi-tasking. For example, in the half-folded state, the electronic device 100 may provide an option for simultaneously using the cover display 170 and the flexible display 140 through a software application for changing a setting value of the electronic device 100, such as a setting application. The input for multi-tasking may include an input for selecting and/or activating the option.

Hereinafter, referring to FIGS. 6A and 6B, an operation of the electronic device 100 that controls at least one of the flexible display 140 and the cover display 170 will be described based on the input described with reference to FIGS. 5A to 5C.

FIGS. 6A and 6B illustrate flowcharts of an electronic device according to various embodiments of the disclosure. The electronic device 100 described with reference to FIGS. 1, 2A to 2C, 3A to 3C, 4A to 4C, and/or 5A to 5C may perform at least one of operations of FIGS. 6A and 6B. The electronic device 100 and/or the processor 310 of FIG. 3C may perform an operation of FIGS. 6A and 6B.

In the following embodiment, each of the operations may be sequentially performed, but is not necessarily performed sequentially. For example, an order of each of the operations may be changed, and at least two operations may be performed in parallel.

Referring to FIG. 6A, in an operation 610, the electronic device according to an embodiment may display a first screen on a cover display (e.g., the cover display 170 of FIG. 1) in a folded state. The state 191 of FIG. 1 may be a state of the electronic device that performed the operation 610. In the operation 610, the electronic device may deactivate (e.g., turn-off) a flexible display (e.g., the flexible display 140 of FIG. 1). For example, in the folded state, the electronic device may refrain from displaying a screen on the flexible display.

Referring to FIG. 6A, in an operation 612, the electronic device according to an embodiment may check whether rotation of a hinge structure (e.g., the second hinge structure 160 of FIGS. 2A to 2C) has been detected. Before detecting the rotation of the hinge structure (612-NO), the electronic device may maintain displaying the first screen on the cover display, based on the operation 610. Based on detecting the rotation of the hinge structure (612-YES), the electronic device may perform an operation 614. The rotation of the hinge structure in the folded state may cause unfolding of housing parts (e.g., the second housing part 120 and the third housing part 130 of FIGS. 2A to 2C). As the hinge structure rotates, a state of the electronic device may be switched from the folded state of the operation 610 to a half-folded state. Based on the rotation of the hinge structure, the electronic device may identify that a state of a housing switches from the folded state to the half-folded state.

Referring to FIG. 6A, in the operation 614, the electronic device according to an embodiment may check whether an event for simultaneously activating the cover display and the flexible display has occurred. The event of the operation 614 may include the event for multi-tasking, described with reference to FIGS. 4A to 4C. The event of the operation 614 may occur due to the input for multi-tasking, described with reference to FIGS. 5A to 5C. In case that the event of the operation 614 does not occur (614-NO), the electronic device may perform an operation 616. In case that the event of the operation 614 occurs (614-YES), the electronic device may perform an operation 618. For example, based on identifying switching from the folded state to the half-folded state with the input for activating both the cover display and the flexible display, the electronic device may maintain displaying the first screen on the cover display, and may display another screen on at least a portion of the flexible display.

Referring to FIG. 6A, in the operation 616, the electronic device according to an embodiment may activate one of the cover display and the flexible display. For example, the electronic device may maintain displaying the first screen of the operation 610 on the cover display. For example, the electronic device may deactivate (e.g., turn-off) the cover display and activate at least a portion (e.g., a visible portion of a display region of the flexible display) of the flexible display. On the activated at least a portion, the electronic device may display the first screen (or another screen at least partially including a content of the first screen) of the operation 610. The state 503 of FIGS. 5A to 5C may be a state of the electronic device that performed the operation 616.

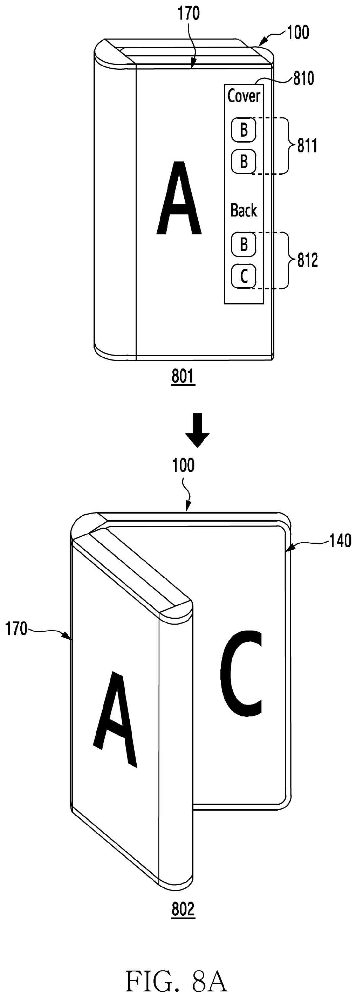

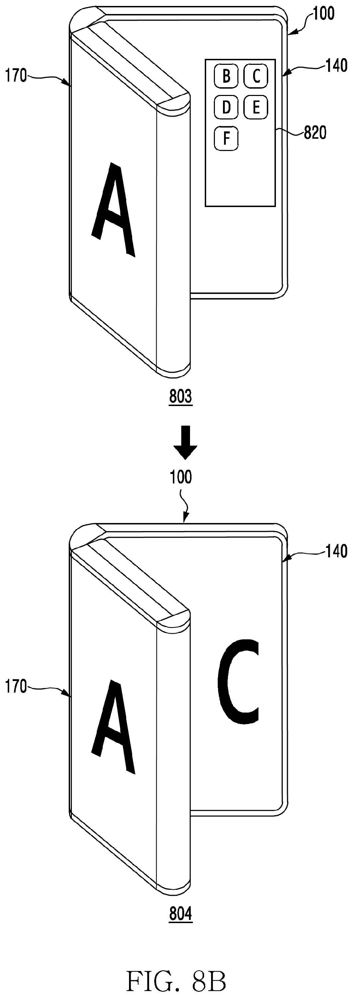

Referring to FIG. 6A, in the operation 618, the electronic device according to an embodiment may check whether an input for selecting a screen to be displayed through a portion of the flexible display has been received. The input may include an input described later with reference to FIGS. 8A and 8B. The input of the operation 618 may be received after detecting the rotation of the hinge structure of the operation 612, or may be received before detecting the rotation of the hinge structure of the operation 612. In order to receive the input, the electronic device may display a list of a software application on the cover display and/or the flexible display. Through the list, the electronic device may receive the input of the operation 618. In case that the input of the operation 618 is received (618-YES), the electronic device may perform an operation 620. In case that the input of the operation 618 is not received (618-NO), the electronic device may perform an operation 622.

Referring to FIG. 6A, in the operation 620, the electronic device according to an embodiment may display a second screen based on the received input on the flexible display, together with the first screen displayed on the cover display. By performing the operation 620, the electronic device may simultaneously display the first screen and the second screen by using both the cover display and the flexible display. The second screen of the operation 620 may be displayed on the visible portion of the display region of the flexible display.

Referring to FIG. 6A, in the operation 622, the electronic device according to an embodiment may check whether an automatic determination of a screen to be displayed on the flexible display has been set. The automatic determination may be set by an input for adjusting an option associated with multi-tasking, described with reference to FIGS. 5A to 5C. In case that the automatic determination of the operation 622 is set (622-YES), the electronic device may perform an operation 626. In case that the automatic determination of the operation 622 is not set (622-NO), the electronic device may perform an operation 624.

Referring to FIG. 6A, in the operation 626, the electronic device according to an embodiment may identify or check a notification message superimposed on the first screen. The notification message may be in a form of a toast, and/or pop-up window. In case that the notification message is superimposed on the first screen or in case that the notification message superimposed on the first screen is identified (626-YES), the electronic device may perform an operation 628. In case that the notification message of the operation 626 is not identified (626-NO), the electronic device may perform an operation 630.

Referring to FIG. 6A, in the operation 628, the electronic device according to an embodiment may display a third screen corresponding to the notification message on the flexible display, together with the first screen displayed on the cover display. By performing the operation 628, the electronic device may simultaneously display the first screen and the third screen by using both the cover display and the flexible display. The third screen of the operation 628 may be displayed on the visible portion of the display region of the flexible display. An operation of the electronic device displaying the third screen associated with the notification message will be described with reference to FIG. 7.

Referring to FIG. 6A, in the operation 630, the electronic device according to an embodiment may identify or check a fourth screen, which was displayed before the first screen. For example, the electronic device may check software applications that have been executed since the electronic device was turned on based on an execution order and/or an execution history of the software applications. In case that another software application executed before a software application corresponding to the first screen is identified, the electronic device may identify the fourth screen corresponding to the other software application. In case that the fourth screen of the operation 630 is identified (630-YES), the electronic device may perform an operation 632. In case that the fourth screen of the operation 630 is not identified (630-NO), the electronic device may perform the operation 624.

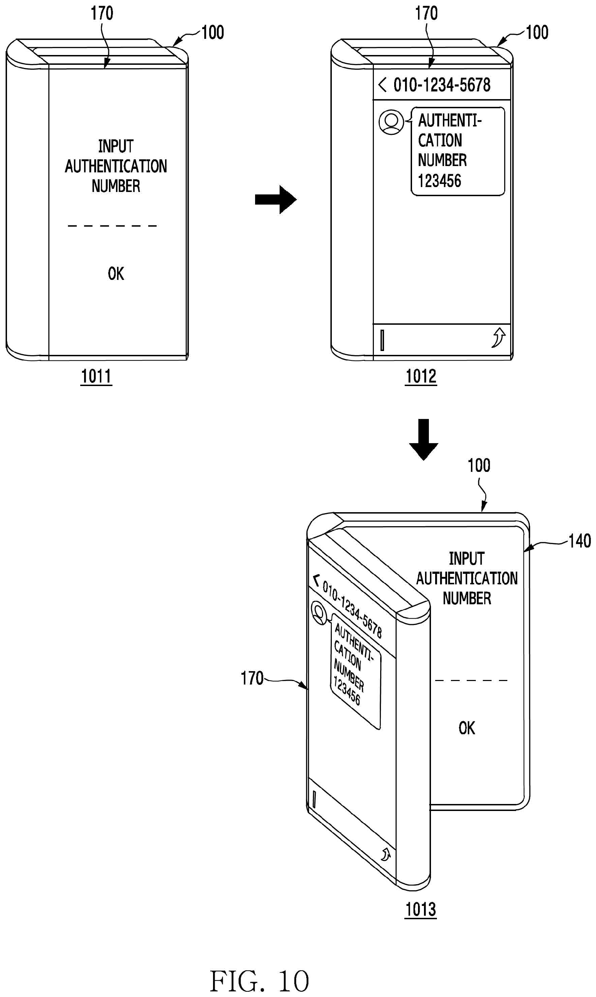

Referring to FIG. 6A, in the operation 632, the electronic device according to an embodiment may display the fourth screen (or another screen at least partially including a content of the fourth screen) of the operation 630 on the flexible display, together with the first screen displayed on the cover display. By performing the operation 630, the electronic device may simultaneously display the first screen and the fourth screen by using both the cover display and the flexible display. The fourth screen of the operation 630 may be displayed on the visible portion of the display region of the flexible display. An operation of the electronic device displaying the fourth screen, which was displayed before the first screen, on the flexible display will be described with reference to FIG. 10.

Referring to FIG. 6A, in the operation 624, the electronic device according to an embodiment may display a menu for selecting a screen to be displayed through a portion of the flexible display. The menu may include icons representing each of a plurality of software applications installed in the electronic device. The menu may be referred to as an app drawer. A state of the electronic device displaying the menu will be described with reference to FIGS. 8A and/or 8B.

Referring to FIG. 6A, in an operation 634, the electronic device according to an embodiment may display a fifth screen based on a user input for the menu on the flexible display, together with the first screen displayed on the cover display. By performing the operation 634, the electronic device may simultaneously display the first screen and the fifth screen by using both the cover display and the flexible display. The fifth screen of the operation 634 may be displayed on the visible portion of the display region of the flexible display.

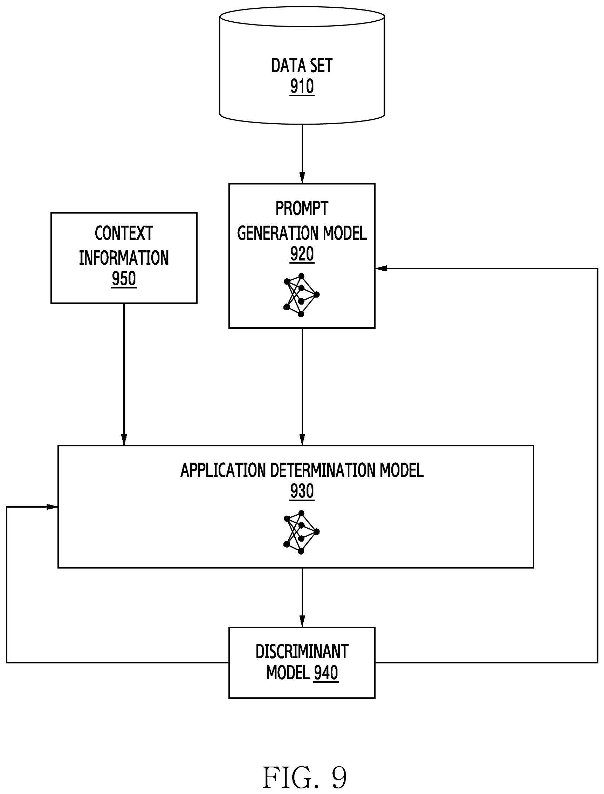

The state 192 of FIG. 1 may be a state of the electronic device that has performed at least one of the operations 620, 628, 632, and 634. A screen displayed on the flexible display is not limited to an embodiment described with reference to FIG. 6A. For example, as described later with reference to FIG. 9, the electronic device may select, identify, or determine the screen to be displayed on the flexible display by using an artificial intelligence model.

Referring to FIG. 6B, an operation of the electronic device after displaying screens by using both the cover display and the flexible display in the half-folded state is illustrated. Referring to FIG. 6B, in an operation 650, the electronic device according to an embodiment may display the first screen on the cover display and the second screen on the visible portion of the display region of the flexible display. The operation 650 may include the operations 620, 628, 632, and 634 of FIG. 6A.

Referring to FIG. 6B, in an operation 652, the electronic device according to an embodiment may identify or check whether a state of the housing has been switched to the folded state by the rotation of the hinge structure. The electronic device may check the state of the housing, by using at least one sensor (e.g., the sensor 349 of FIG. 3C). In case that switching from the half-folded state to the folded state is detected (652-YES), the electronic device may perform an operation 654. In case of not being switched from the half-folded state to the folded state (652-NO), the electronic device may perform an operation 656.

Referring to FIG. 6B, in the operation 654, the electronic device according to an embodiment may at least temporarily cease displaying the second screen on a portion of the display region of the flexible display. The electronic device may deactivate the flexible display. After the operation 654, the electronic device in the folded state may display a screen only through the cover display. The screen displayed through the cover display after the operation 654 may be the first screen of the operation 650. An embodiment is not limited thereto, and the electronic device may display the second screen (or another screen at least partially including a content of the second screen), which was displayed on the flexible display, on the cover display.

Referring to FIG. 6B, in the operation 656, the electronic device according to an embodiment may identify or check whether the state of the housing has been switched to an unfolded state by rotation of a hinge assembly. Similar to the operation 652, the electronic device may check the state of the housing by using the at least one sensor. In case that switching from the half-folded state to the unfolded state is detected (656-YES), the electronic device may perform an operation 658. In case that the state of the housing maintains the half-folded state or does not switch from the half-folded state to the unfolded state (656-NO), the electronic device may perform the operation 650.

Referring to FIG. 6B, in the operation 658, the electronic device according to an embodiment may identify or check whether an event for multi-tasking has occurred. For example, in case of receiving an input for multi-tasking described with reference to FIGS. 5A to 5C, the electronic device may determine that the event of the operation 658 has occurred. In case that the event of the operation 658 occurs (658-YES), the electronic device may perform an operation 660. In case that the event of the operation 658 does not occur (658-NO), the electronic device may perform an operation 662.

Referring to FIG. 6B, in the operation 660, the electronic device according to an embodiment may simultaneously display the first screen and the second screen on the flexible display. After switching to the unfolded state, the electronic device may activate an entire display region of the flexible display. The electronic device may display the first screen and the second screen on different portions of the display region of the flexible display, respectively, based on a PBP layout. The state 494 of FIG. 4A may be a state of the electronic device that has performed the operation 660.

Referring to FIG. 6B, in the operation 662, the electronic device according to an embodiment may display any one screen of the first screen or the second screen on the flexible display. After switching to the unfolded state, in order to display any one screen of the first screen or the second screen of the operation 662, the electronic device may control the entire display region of the flexible display. The state 495 of FIG. 4A may be a state of the electronic device that has performed the operation 662.

FIG. 7 illustrates an operation of an electronic device 100 displaying screens on a cover display 170 and a flexible display 140, respectively according to an embodiment of the disclosure. An operation of the electronic device 100 described with reference to FIG. 7 may be associated with at least one of the operations (e.g., the operations 626 and 628) of the electronic device of FIG. 6A.

Referring to FIG. 7, in a state 701 associated with a folded state, the electronic device 100 may display a first screen on the cover display 170. The state 701 for displaying the first screen based on a game application is illustrated, but an embodiment is not limited thereto. In the state 701, the electronic device 100 receiving a text message based on a short message service (SMS) may display a notification message 710 on the cover display 170. The notification message 710 may be referred to as a pop-up window, a bubble, and/or a toast. The notification message 710 may be displayed superimposed on the first screen. The notification message 710 may be displayed on the cover display 170 during a specific period.

While displaying the notification message 710 on the cover display 170, the electronic device 100 may detect switching from the folded state to a half-folded state. For example, a user may at least partially unfold a housing of the electronic device 100. The electronic device 100 detecting the switching while displaying the notification message 710 may perform the operation 628 of FIG. 6A. For example, the electronic device 100 may switch from the state 701 to a state 702.

Referring to FIG. 7, in the state 702, the electronic device 100 may maintain displaying the first screen on the cover display 170. In the state 702, the electronic device 100 may obtain a second screen by executing a software application (e.g., a messenger application) associated with the notification message. The electronic device 100 may display the obtained second screen on a visible portion (e.g., the third display area 140c of FIG. 2B) of a display region of the flexible display 140.

In the state 702, the electronic device 100 may support an interaction of the user for the notification message 710 by using the second screen displayed on the flexible display 140. In the state 702, together with the interaction, the electronic device 100 may support another interaction of the user for the game application by using the first screen displayed on the cover display 170. The user may simultaneously recognize the first screen and the second screen in the state 702. For example, the user may respond to the text message by using the second screen without ceasing execution of the game application based on the first screen.

In the state 702, the electronic device 100 may detect switching from the half-folded state to the folded state. Based on detecting the switching, the electronic device 100 may switch to the state 701. For example, the electronic device 100 may deactivate the flexible display 140. For example, the electronic device 100 may at least temporarily cease or pause execution of the messenger application. For example, the electronic device 100 may maintain displaying the first screen on the cover display 170.

FIGS. 8A and 8B illustrate an operation of an electronic device 100 that displays screens on a cover display 170 and a flexible display 140, respectively, based on a user input according to various embodiments of the disclosure. An operation of the electronic device 100 described with reference to FIGS. 8A and 8B may be associated with at least one of the operations (e.g., the operations 618, 620, 624, and 634) of the electronic device of FIG. 6A.

Referring to FIG. 8A, the electronic device 100, in a folded state, may receive an input for selecting a screen to be displayed on the flexible display 140 in a half-folded state. The input may be the input of the operation 618 of FIG. 6A. After receiving the input, when switching from the folded state to the half-folded state, the electronic device 100 may display a screen based on the input on at least a portion of the flexible display 140 without determining a screen based on an automatic determination of the operation 622, based on an order of the operations 618 and 622 of FIG. 6A.

Referring to FIG. 8B, the electronic device 100 may receive the input for selecting the screen to be displayed on at least a portion of the flexible display 140 in the half-folded state. The input may be the user input of the operation 634 of FIG. 6A. Based on an order of the operations 622, 624, and 634 of FIG. 6A, the input of FIG. 8B may be received in case that a screen may not be selected based on the automatic determination of the operation 622 (or in case that the automatic determination is deactivated).

Referring to FIG. 8A, in a state 801 associated with the folded state, the electronic device 100 may display a menu 810 (or an app drawer) for selecting a screen to be displayed on the flexible display 140 on the cover display 170. The menu 810 may be displayed at a position adjacent to any one edge (e.g., a right edge of the cover display 170) of the cover display 170. The menu 810 may be referred to as an edge panel. An embodiment is not limited thereto, and the menu 810 may include a task bar displayed along any one edge (e.g., a lower edge of the cover display 170).

Referring to the menu 810 of FIG. 8A, the electronic device 100 may display the menu 810 including a portion 811 for selecting a software application to be executed based on the cover display 170 and a portion 812 for selecting a software application to be executed based on the flexible display 140. An embodiment is not limited to the menu 810 including the portions 811 and 812. After receiving an input (e.g., a touch input for an icon representing a C application) for selecting a specific software application (e.g., the C application) through the portion 812, the electronic device 100 detecting the switching from the folded state to the half-folded state may display a screen C provided from the software application corresponding to the input on at least a portion of the flexible display 140, as in a state 802 of FIG. 8A. Referring to the state 802 of FIG. 8A, after receiving the input, the electronic device 100 detecting the switching may maintain displaying a screen A, which was displayed in the state 801 on the cover display 170.

Referring to FIG. 8B, in a state 803 associated with the half-folded state, the electronic device 100 may display a menu 820 (or an app drawer) for selecting a screen to be displayed on at least a portion (e.g., a visible portion of a display region of the flexible display 140) of the flexible display 140 on the flexible display 140. For example, the electronic device 100 detecting the switching from the folded state to the half-folded state may display the menu 820 on the flexible display 140. For example, the electronic device 100 detecting the switching may display the menu 820 on the flexible display 140 together with an input of pressing a button (e.g., the button 305 of FIG. 3C).

The menu 820 may include a list of a software application executable by using at least a portion of the flexible display 140. Similar to the menu 810 of FIG. 8A, the menu 820 may include icons respectively representing a plurality of software applications of the electronic device 100. The menu 820 may include the list of the software application executable in the half-folded state. Software applications provided through the menu 820 may be customized by a user. The list of the software application provided through the menu 820 may be arranged according to software applications installed in the electronic device 100 and each category of the software applications. In the list of the software application provided through the menu 820, the icons respectively representing the software applications may be arranged according to a priority (e.g., a preset priority). The priority may be changed by the user.

In the state 803 in which the menu 820 is displayed, the electronic device 100 may receive a user input (e.g., a user input associated with the list of the software application) associated with the menu 820. Based on the user input, the electronic device 100 may display a screen associated with the user input on the flexible display 140. For example, the electronic device 100 that receives a user input for the icon representing the C application through the menu 820 may switch from the state 803 to a state 804. In the state 804, the electronic device 100 may display the screen C based on the C application on the flexible display 140. For example, in the state 804, the electronic device 100 may display the screen C associated with the user input. While switching from the state 803 to the state 804, the electronic device 100 may continue to display the screen A on the cover display 170.

In case that the screen A displayed on the cover display 170 of FIGS. 8A and/or 8B does not support multi-tasking (or a PIP mode), the electronic device 100 may support multi-tasking by using the half-folded state. For example, in case that the screen A is provided from a video application and does not support the PIP mode, the electronic device 100 may display another screen (e.g., the screen C) on the flexible display 140 while maintaining displaying the screen A, by using the state 802 of FIG. 8A and/or the state 804 of 8B. Since the flexible display 140 and the cover display 170 are simultaneously controlled in the state 802 of FIG. 8A and/or the state 804 of 8B, the electronic device 100 may support an interaction of the user based on the screen C without ceasing playback of a video based on the screen A.

FIG. 9 illustrates an artificial intelligence model (e.g., an application determination model 930) executed by an electronic device according to an embodiment of the disclosure. The electronic device 100 and/or the processor 310 of FIG. 3C may determine or select a second screen to be displayed on at least a portion of a flexible display, together with a first screen displayed on a cover display by executing the artificial intelligence model. The artificial intelligence model may be a computational model that simulates a neural activity of an organism. The electronic device may include hardware (e.g., a graphic processing unit (GPU) and/or a neural processing unit (NPU)) for executing the artificial intelligence model, and/or a software application. An operation of executing the artificial intelligence model may include an operation in which the electronic device executes at least one processor (e.g., a CPU, the GPU, and/or the NPU) to perform one or more calculations defined for the artificial intelligence model.

Referring to FIG. 9, a prompt generation model 920 and/or a discriminant model 940 executed for training the application determination model 930 are illustrated. For training of the application determination model 930, a data set 910 including pairs of screens displayed on each of the cover display and the flexible display may be provided.

By executing the prompt generation model 920, the electronic device may generate or obtain one or more natural language sentences (e.g., prompts) describing the screens (or software applications) displayed on each of the cover display and the flexible display from a pair stored in the data set 910. In case that the data set 910 includes 1 to n pairs of a specific screen displayed on the cover display and a plurality of screens displayed on the flexible display, the electronic device may obtain or generate context information 950 corresponding to each of the pairs. The context information 950 may include a time and/or a place in which each of the pairs was displayed.

The application determination model 930 may be executed based on the context information 950 and a prompt generated by the prompt generation model 920. By executing the application determination model 930, the electronic device may obtain information indicating a screen to be displayed on at least a portion (e.g., a visible portion of a display region of the flexible display) of the flexible display. The electronic device may execute the discriminant model 940 by using the obtained information.

By executing the discriminant model 940, the electronic device may obtain similarity between a pair of the screen to be displayed on at least a portion of the flexible display determined by the application determination model 930 and a screen displayed on the cover display indicated by a prompt inputted into the application determination model 930, and pairs included in the data set 910. The electronic device may perform training on the application determination model 930 and/or the prompt generation model 920 so that the similarity increases. The training may include an operation for updating parameters (e.g., weights) associated with the application determination model 930 and/or the prompt generation model 920. Based on completion of the training, the electronic device may store the prompt generated from the prompt generation model 920 as metadata.

After training, the application determination model 930 and/or the prompt generation model 920 may be executed by the electronic device (e.g., the electronic device 100 of FIG. 1). For example, the electronic device may generate or obtain a prompt to be inputted into the application determination model 930 based on the first screen displayed on the cover display based on detection of switching from a folded state to a half-folded state. Alternatively, the electronic device may obtain the prompt from the user. The prompt obtained from the user may include a speech of the user, such as "I need an app to search for information," "I need an app to calculate," and/or "I need an app to record information". In order to obtain the prompt from the user, the electronic device may activate (e.g., turn-on) a microphone, or display a software keyboard on a display (e.g., the cover display and/or the flexible display).

By executing the application determination model 930 using the prompt, the electronic device may identify the second screen to be displayed on the flexible display. Based on identifying the second screen, the electronic device may display the second screen on at least a portion (e.g., the visible portion of the display region of the flexible display) of the flexible display, together with the first screen displayed on the cover display.

FIG. 10 illustrates an operation of an electronic device 100 that displays screens on a cover display 170 and a flexible display 140, respectively, based on an order in which the screens were displayed according to an embodiment of the disclosure. An operation of the electronic device 100 described with reference to FIG. 10 may be associated with at least one of the operations (e.g., the operations 630 and 632) of the electronic device of FIG. 6A.

Referring to FIG. 10, in a state 1011 associated with a folded state, the electronic device 100 may display a first screen requesting an authentication number on the cover display 170. The first screen may be displayed based on execution of an online banking application. The authentication number may be included in a text message based on SMS. A user of the electronic device 100 may execute a messenger application associated with SMS in order to recognize the authentication number to be inputted into the first screen. In response to an input for executing the messenger application, the electronic device 100 may switch from the state 1011 to a state 1012 in which a second screen of the messenger application is displayed. In the state 1012, the electronic device 100 may display the second screen including the authentication number on the cover display 170.

In the state 1012, the electronic device 100 detecting switching from the folded state to a half-folded state may switch to a state 1013. In the state 1013, the electronic device 100 may maintain displaying the second screen on the cover display 170. In the state 1013, the electronic device 100 may display the first screen, which was displayed before the second screen, on at least a portion (e.g., a visible portion of a display region of the flexible display 140) of the flexible display 140. By performing the operations 630 and 632 of FIG. 6A, the electronic device 100 may display the first screen on the flexible display 140. In the state 1013, the user may input the authentication number to the first screen displayed on the flexible display 140 while viewing at the authentication number included in the second screen displayed on the cover display 170.

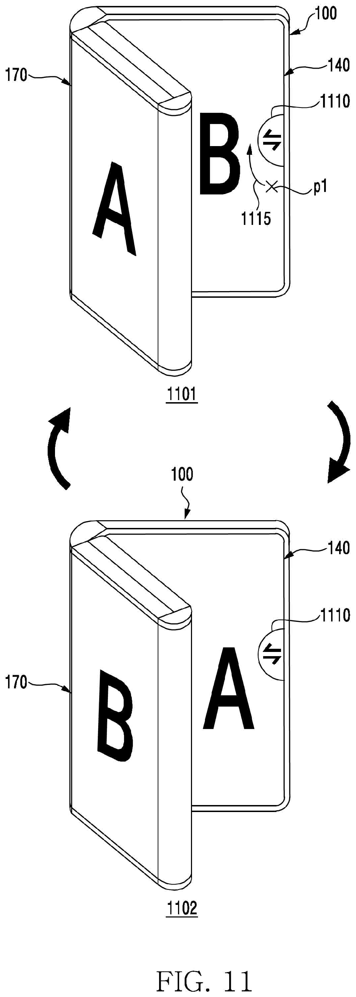

FIG. 11 illustrates an operation of an electronic device 100 switching screens displayed on a cover display 170 and a flexible display 140 according to an embodiment of the disclosure. An operation of the electronic device 100 described with reference to FIG. 11 may be performed while controlling both the cover display 170 and the flexible display 140 based on the operations 620, 628, 632, and 634 of FIG. 6A.

Referring to FIG. 11, in a state 1101 in which a screen A is displayed on the cover display 170 and a screen B is displayed on at least a portion (e.g., a visible portion of a display region of the flexible display 140 in a half-folded state) of the flexible display 140, the electronic device 100 may display a visual object 1110 for swapping positions of the screens A and B. The state 1101 of displaying the visual object 1110 on the flexible display 140 is illustrated, but an embodiment is not limited thereto. For example, the electronic device 100 may display the visual object 1110 on the cover display 170.

In the state 1101, the electronic device 100 may receive an input p1 for swapping the screens A and B displayed on the cover display 170 and the flexible display 140, respectively. The input p1 may include a touch input for the visual object 1110. The input p1 may include a preset gesture (e.g., a swipe gesture in a horizontal direction based on a preset number of fingers) performed on the cover display 170 and/or the flexible display 140.

The electronic device 100 receiving the input p1 in the state 1101 may switch to a state 1102. In the state 1102, the electronic device 100 may display the screen A, which was displayed on the cover display 170 in the state 1101 before the state 1102 on at least a portion (e.g., the visible portion of the display region of the flexible display 140) of the flexible display 140. In the state 1102, the electronic device 100 may display the screen B, which was displayed on the flexible display 140 in the state 1101 before the state 1102 on the cover display 170.

Referring to FIG. 11, in the state 1102, the electronic device 100 may display the visual object 1110 on the flexible display 140 and/or the cover display 170. In the state 1102, in response to receiving an input based on the visual object 1110 (or an input for swapping the screens A and B), the electronic device 100 may switch again to the state 1101.

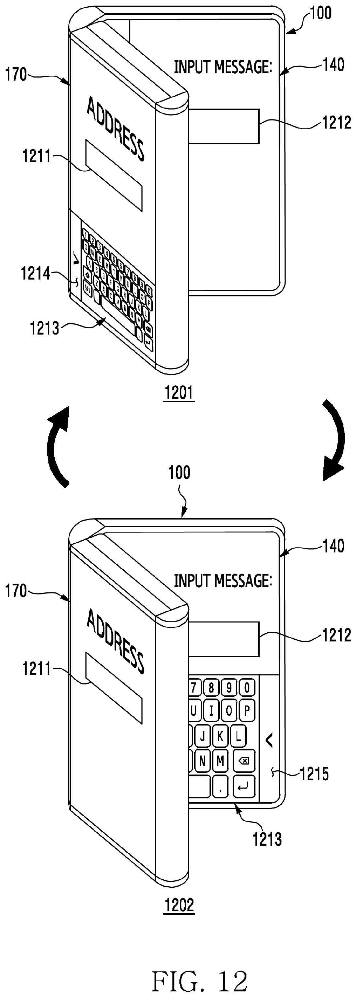

While the flexible display 140 and the cover display 170 are simultaneously activated, a user may input text to a screen displayed on any one of the flexible display 140 and the cover display 170. Hereinafter, with reference to FIG. 12, an operation of the electronic device 100 that displays a software keyboard for inputting text will be described.

FIG. 12 illustrates an operation of an electronic device 100 that switches a position of a software keyboard 1213 between a cover display 170 and a flexible display 140 according to an embodiment of the disclosure. As in the state 192 of FIG. 1, while screens are displayed on the flexible display 140 and the cover display 170, respectively, the electronic device 100 may perform an operation of FIG. 12. The operation of FIG. 12 may be performed by the electronic device 100 and/or the processor 310 of FIG. 3C.

Referring to FIG. 12, a state 1201 of the electronic device 100 displaying a first screen and a second screen on the cover display 170 and the flexible display 140, respectively, is illustrated. The first screen displayed on the cover display 170 may include a visual object (e.g., a first text box 1211) for receiving text. The second screen displayed on at least a portion (e.g., a visible portion of a display region of the flexible display) of the flexible display 140 may include a visual object (e.g., a second text box 1212) for receiving text. The visual objects may be referred to as an input field.

The electronic device 100 may receive an input for inputting text. The input may include a touch input (e.g., a tap gesture) for the first text box 1211 and/or the second text box 1212. For example, the electronic device 100 receiving a first input for inputting text into the first text box 1211 of the first screen may display the software keyboard 1213 superimposed on the first screen displayed on the cover display 170, as in the state 1201. The electronic device 100 receiving the first input may visually emphasize the first text box 1211 with respect to another visual object (e.g., the second text box 1212). For example, the electronic device 100 may change a color of a boundary line of the first text box 1211 to a preset color, such as red, indicating selection of the first text box 1211.

Similarly, the electronic device 100 receiving a second input for inputting text to the second text box 1212 of the second screen may display the software keyboard 1213 superimposed on the second screen displayed on the flexible display 140. Based on the second input, the electronic device 100 may visually emphasize the second text box 1212 with respect to another text box (e.g., the first text box 1211).

Referring to FIG. 12, the software keyboard 1213, which is displayed while both the flexible display 140 and the cover display 170 are activated, may include a visual object 1214 for changing a position of the software keyboard 1213. A shape, a size, and/or a position of the visual object 1214 is not limited to an embodiment of FIG. 12. In the state 1201, in response to an input indicating selection of the visual object 1214, the electronic device 100 may switch to a state 1202. In the state 1202, the electronic device 100 may display the software keyboard 1213 on the flexible display 140 instead of displaying the software keyboard 1213 on the cover display 170. For example, based on receiving the input indicating the selection of the visual object 1214, the electronic device 100 may switch the display on which the software keyboard 1213 is displayed between the flexible display 140 and the cover display 170.

In the state 1202, the electronic device 100 may display a visual object 1215 for changing the position of the software keyboard 1213 from the flexible display 140 to the cover display 170. The visual object 1215 may be included in the software keyboard 1213 or may be displayed together with the software keyboard 1213. In response to an input indicating selection of the visual object 1215, the electronic device 100 may switch from the state 1202 to the state 1201. For example, when switching from the state 1202 to the state 1201, the software keyboard 1213 may be moved from the flexible display 140 to the cover display 170.

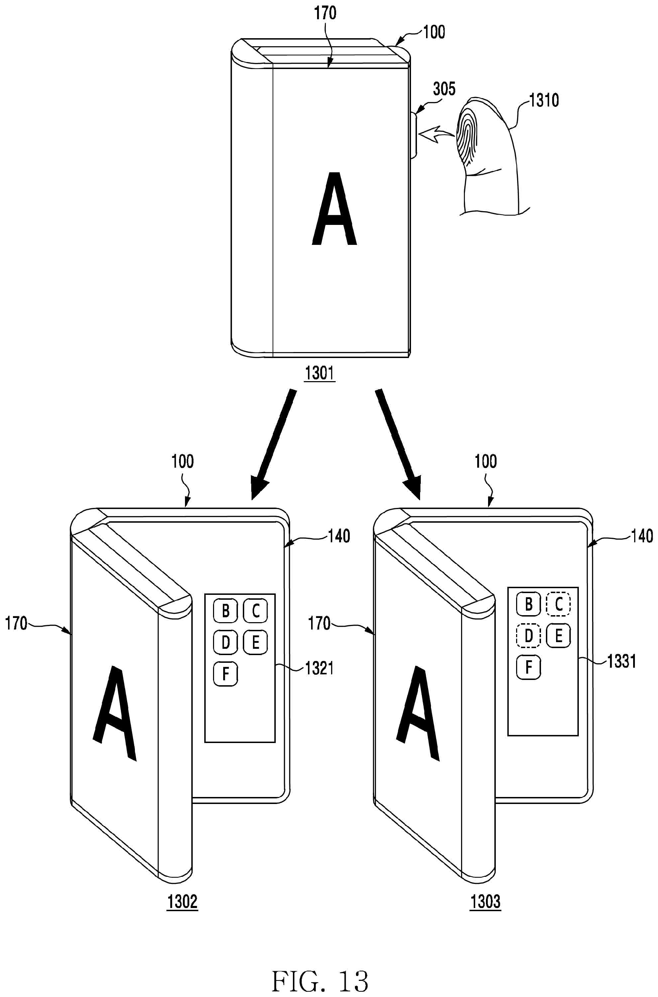

FIG. 13 illustrates an operation of an electronic device 100 that determines a screen to be displayed on a flexible display 140 by using a fingerprint sensor (e.g., the fingerprint sensor 343 of FIG. 3C) according to an embodiment of the disclosure. An operation of FIG. 13 may be performed by the electronic device 100 and/or the processor 310 of FIG. 3C.

Referring to FIG. 13, the electronic device 100 may include a button 305 and a fingerprint sensor configured to detect a fingerprint of a finger 1310 contacted on the button 305. In a state 1301 associated with a folded state displaying a screen A on a cover display 170, the electronic device 100 may detect switching from the folded state to a half-folded state. As an input for activating both the flexible display 140 and the cover display 170, the electronic device 100 may receive an input of pressing the button 305. When receiving the input together with the switching, the electronic device 100 may display another screen on at least a portion (e.g., a visible portion of a display region of the flexible display 140) of the flexible display 140 together with the screen A displayed on the cover display 170.

While receiving the input of pressing the button 305, the electronic device 100 may control the fingerprint sensor to obtain information associated with the fingerprint of the finger 1310 contacted on the button 305. The electronic device 100 may perform authentication, by using the information. For example, the electronic device 100 may perform the authentication by comparing information indicating a previously registered fingerprint with the obtained information. In response to the authentication, the electronic device 100 may execute a software application requiring the authentication to obtain or display the second screen associated with the executed software application on the flexible display 140. For example, the second screen may be displayed without an authentication operation required to execute the second screen.

Based on the authentication associated with the input of pressing the button 305, the number and/or a type of software applications that may be displayed on the flexible display 140 may be determined. For example, in the state 1301, in case that the switching from the folded state to the half-folded state is detected, and the authentication based on a fingerprint obtained by the input of the finger 1310 pressing the button 305 is successful, the electronic device 100 may switch to a state 1302. In the state 1302, the electronic device 100 may display a menu 1321 including a list of software applications installed in the electronic device 100 on the flexible display 140. In response to an input received through the menu 1321, the electronic device 100 may display a screen based on the input on the flexible display 140.

For example, in the state 1301, in case that the switching from the folded state to the half-folded state is detected, and the authentication based on the fingerprint obtained by the input of the finger 1310 pressing the button 305 fails, the electronic device 100 may switch to a state 1303. In the state 1303, the electronic device 100 may display a menu 1331 including a list of software applications installed in the electronic device 100 on the flexible display 140. Comparing the menu 1331 with the menu 1321, icons representing specific software applications (e.g., a C application, and/or a D application) that require authentication are included in the menu 1321 and excluded from the menu 1331. For example, based on the failure of the authentication, the electronic device 100 may provide a list of software applications that do not require authentication among the software applications installed in the electronic device 100 through the menu 1331.

An embodiment is not limited thereto. Cases associated with the button 305 and the fingerprint sensor may be defined as in Table 1.

**Table 1**

| Case number | Input of pressing button 305 | Authentication based on fingerprint sensor |
|---|---|---|
| First case | X | X |
| Second case | X | O |
| Third case | O | X |
| Fourth case | O | O |

The first case may indicate a case in which no finger is in contact with the button 305. In the first case, the electronic device 100 detecting the switching from the folded state to the half-folded state may display a screen, which was displayed on the cover display 170 in the folded state, on the flexible display 140, as in the state 493 of FIG. 4A.

The second case may indicate a case in which the finger 1310 including a previously registered fingerprint contacts the button 305. In the second case, the electronic device 100 detecting the switching from the folded state to the half-folded state may execute a function based on the second case. For example, the electronic device 100 may execute the screen, which was displayed on the cover display 170 in the folded state, and the function associated with the second case using the flexible display 140. For example, in the folded state, in case of switching from the folded state to the half-folded state in the second case, the electronic device 100 that was displaying a screen based on a web browser application on the cover display 170 may display a web browser (or tab) based on a private mode on at least a portion (e.g., the visible portion of the display region of the flexible display 140) of the flexible display 140.

The third case may indicate a case in which the finger 1310 including an unregistered fingerprint presses the button 305. In the third case, the electronic device 100 detecting the switching from the folded state to the half-folded state may execute a function based on the third case. For example, as in the state 1303 of FIG. 13, the electronic device 100 may determine a software application to be executed using the flexible display 140 among the software applications that do not require authentication.

The fourth case may indicate a case in which the finger 1310 including a registered fingerprint presses the button 305. In the fourth case, the electronic device 100 detecting the switching from the folded state to the half-folded state may execute a function based on the fourth case. For example, as in the state 1302 of FIG. 13, the electronic device 100 may determine a software application to be executed using the flexible display 140 among all software applications installed in the electronic device 100, including a software application requiring authentication.

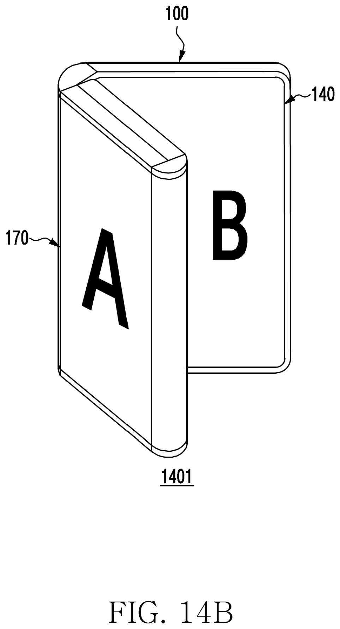

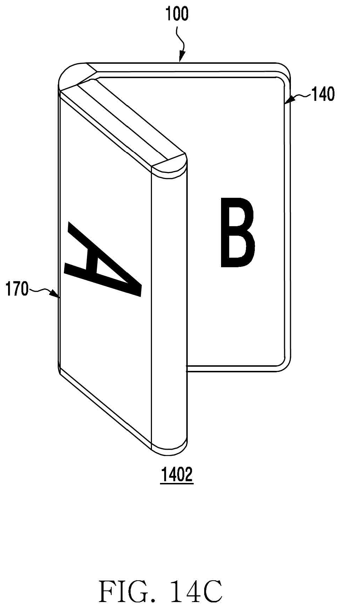

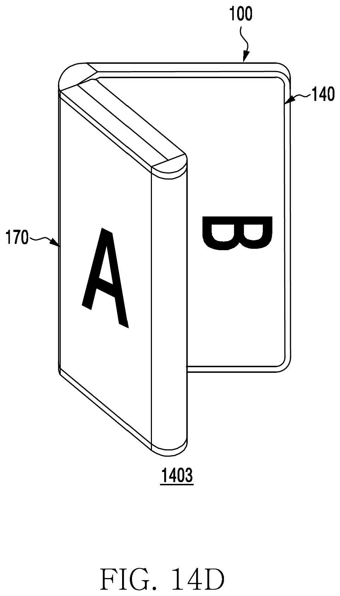

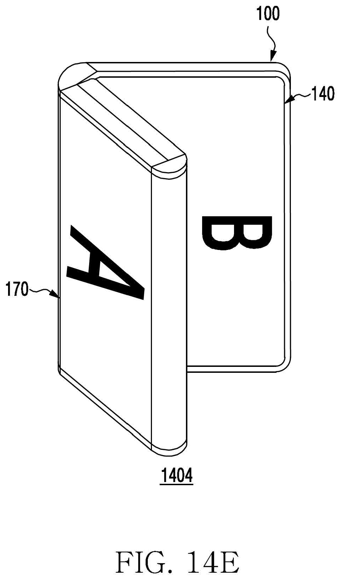

FIGS. 14A, 14B, 14C, 14D, and 14E illustrate an operation of an electronic device 100 that determines directions of screens, respectively displayed on a cover display 170 and a flexible display 140 according to various embodiments of the disclosure. An operation of FIGS. 14A to 14E may be performed by the electronic device 100 and/or the processor 310 of FIG. 3C.

A layout of a screen displayed on the flexible display 140 and/or the cover display 170 may be associated with a reference mode corresponding to the screen. The reference mode corresponding to the screen may be fixed by a software application that provides the screen. The reference mode corresponding to the screen may be associated with a direction of the electronic device 100 displaying the screen and/or a display on which the screen is displayed. For example, the electronic device 100 may determine the reference mode of the screen by using a sensor (e.g., the sensor 349 of FIG. 3C). For example, the reference mode may be determined according to a direction of gravitational acceleration applied to the electronic device 100.

The reference mode of the screen may include a portrait mode and a landscape mode. When displaying a rectangular screen (e.g., a screen displayed on at least a visible portion of the flexible display 140 and/or the cover display 170), the landscape mode may be set so that the electronic device 100 sequentially displays strings along a direction of a relatively long edge in the screen. For example, in the landscape mode, a horizontal direction may be set parallel to the direction of the relatively long edge of the screen. The landscape mode may include a state in which the gravitational acceleration applied to the electronic device 100 is parallel to a direction of a relatively short edge in the screen. For example, in the state 701 of FIG. 7, the screen displayed on the flexible display 170 may be displayed based on the landscape mode.

When displaying the rectangular screen (e.g., the screen displayed on at least a visible portion of the flexible display 140 and/or the cover display 170), the portrait mode may be set so that the electronic device 100 sequentially displays strings along the direction of the relatively short edge in the screen. For example, in the portrait mode, a horizontal direction may be set parallel to the direction of the relatively short edge of the screen. The portrait mode may include a state in which the gravitational acceleration applied to the electronic device 100 is parallel to the direction of the relatively long edge in the screen. For example, in the state 702 of FIG. 7, the screen displayed on the visible portion of the flexible display 140 may be displayed based on the portrait mode.

In case that the reference mode of the screen is fixed by the software application, independently of the example, the electronic device 100 may display the screen by using the reference mode fixed by the software application.

Referring to FIG. 14A, the electronic device 100 may obtain or receive a setting value for determining a reference mode of screens to be displayed on the flexible display 140 and the cover display 170, respectively, by using a screen 1400, referred to as a control center. For example, the electronic device 100 may receive an input for determining any one of preset setting values by using a visual object 1410 included in the screen 1400. The preset setting values and reference modes in each of the preset setting values may be defined as in Table 2.

**Table 2**

| Preset setting value | Reference mode of first screen displayed on cover display 170 | Reference mode of electronic device 100 | Reference mode of second screen to be displayed on flexible display 140 |
|---|---|---|---|
| Automatic rotation | Don't care | Portrait mode | Portrait mode |
| | | Landscape mode | Landscape mode |
| Vertical fixation | | Don't care | Portrait mode |
| Horizontal fixation | | | Landscape mode |
| Coincidence | Portrait mode | | Portrait mode |
| | Landscape mode | | Landscape mode |

The reference mode in the Table 2 may indicate a reference mode of the screen displayed on the flexible display 140 and/or the cover display 170. The reference mode of the electronic device 100 in the Table 2 may be a mode determined according to the direction of the gravitational acceleration applied to the electronic device 100. For example, when the gravitational acceleration detected by the electronic device 100 is perpendicular to a relatively long edge of the cover display 170 and/or the flexible display 140, the reference mode of the electronic device 100 may be determined as the landscape mode. For example, when the gravitational acceleration detected by the electronic device 100 is perpendicular to a relatively short edge of the cover display 170 and/or the flexible display 140, the reference mode of the electronic device 100 may be determined as the portrait mode.

For example, while an event for multi-tasking occurs, the electronic device 100 detecting switching from a folded state to a half-folded state may determine a reference mode of a screen to be newly displayed on the flexible display 140 based on combinations in the Table 2. Referring to the Table 2, in case that a setting value corresponds to the automatic rotation, the electronic device 100 may determine the reference mode of the screen to be displayed on the flexible display 140 as a reference mode determined by a six-axis sensor (e.g., the six-axis sensor 342 of FIG. 3C). Referring to the Table 2, in case that the setting value corresponds to the vertical fixation and/or the horizontal fixation, the electronic device 100 may fix the reference mode of the screen to be displayed on the flexible display 140 independently of sensor data of the six-axis sensor. Referring to the Table 2, in case that the setting value corresponds to the coincidence, the electronic device 100 may determine the reference mode of the screen to be displayed on the flexible display 140 as a reference mode of a screen displayed on the cover display 170. An embodiment is not limited thereto, and in case that the reference mode of the screen to be displayed on the flexible display 140 is fixed by the software application, the electronic device 100 may display the screen on the flexible display 140 based on the reference mode fixed by the software application.

Referring to FIGS. 14B, 14C, 14D, and 14E, while both the flexible display 140 and the cover display 170 are activated in the half-folded state, layouts of screens A and B displayed on the flexible display 140 and the cover display 170, respectively, are exemplarily illustrated. In a state 1401 of FIG. 14B, the electronic device 100 may display all of the screens A and B by using the portrait mode. In a state 1402 of FIG. 14C, the electronic device 100 may display the screen A on the cover display 170 using the landscape mode, and may display the screen B on at least a portion (e.g., a visible portion of a display region of the flexible display 140) of the flexible display 140 using the portrait mode. In a state 1403 of FIG. 14D, the electronic device 100 may display the screen A on an entire display region of the cover display 170 using the portrait mode, and may display the screen B on the visible portion of the flexible display 140 using the landscape mode. In a state 1404 of FIG. 14E, the electronic device 100 may display all of the screens A and B by using the landscape mode. In case that the electronic device 100 rotates, the electronic device 100 may determine or adjust reference modes of the screens A and B displayed on the cover display 170 and the flexible display 140, respectively, based on a combination in the Table 2.

As described above, the electronic device 100 including a plurality of folding axes may require relatively many actions (e.g., an action of unfolding a housing) to use the entire display region of the flexible display 140. The electronic device 100 may visualize information associated with the screen displayed on the cover display 170 using the visible portion of the flexible display 140, before fully unfolding the flexible display 140. Since the visible portion of the flexible display 140 is activated before a remaining portion of the flexible display 140, the electronic device 100 may more efficiently utilize pixels of the flexible display 140.

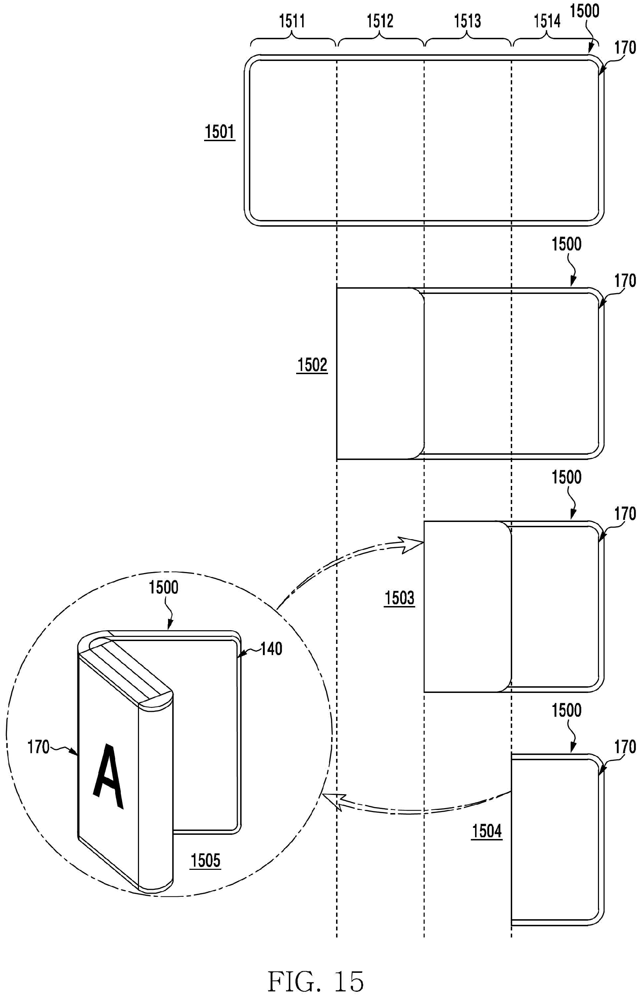

The electronic device 100 including three housing parts has been exemplarily described, but an embodiment is not limited thereto. Hereinafter, an embodiment of the electronic device including more than three housing parts will be described with reference to FIG. 15.

FIG. 15 illustrates an embodiment of an electronic device 1500 having a foldable housing including four housing parts (e.g., a first housing part 1511 to a fourth housing part 1514) according to an embodiment of the disclosure.

Referring to FIG. 15, a housing of the electronic device 1500 may include the first housing part 1511, a second housing part 1512 rotatably coupled to the first housing part 1511, a third housing part 1513 rotatably coupled to the second housing part 1512, and the fourth housing part 1514 rotatably coupled to the third housing part 1513. A flexible display 140 of the electronic device 1500 may be positioned on the first housing part 1511 to the fourth housing part 1514. A cover display 170 of the electronic device 1500 may be positioned on a surface of a housing opposite to the flexible display 140. Referring to FIG. 15, an embodiment of the electronic device 1500 including the cover display 170 located in the third housing part 1513 is illustrated.

Similar to the electronic device 100 described above with reference to FIGS. 2A to 2C, a state of the electronic device 1500 may be distinguished into an unfolded state, a half-folded state, and a folded state. A state 1501 of FIG. 15 may correspond to the unfolded state. States 1502, 1503, and 1505 of FIG. 15 may be included in the half-folded state. A state 1504 of FIG. 15 may correspond to the folded state. In the state 1504 corresponding to the folded state, the cover display 170 among the cover display 170 and the flexible display 140 may be visible.

While displaying a first screen on the cover display 170 in the state 1504, the electronic device 1500 may detect switching from the folded state to the half-folded state. In case that an event for multi-tasking occurs, the electronic device 1500 detecting the switching may maintain displaying the first screen on the cover display 170, and may display a second screen on at least a portion (e.g., a visible portion of a display region of the flexible display 140) of the flexible display 140.

For example, in the state 1505 of FIG. 15, a portion of the flexible display 140 positioned on the fourth housing part 1514 may be visible together with the cover display 170. In the state 1505, the electronic device 1500 may display the first screen on the cover display 170, and display the second screen on the portion of the flexible display 140. The second screen to be displayed on the portion of the flexible display 140 together with the first screen displayed on the cover display 170 may be determined based on the operations of FIG. 6A and/or the application determination model 930 of FIG. 9.

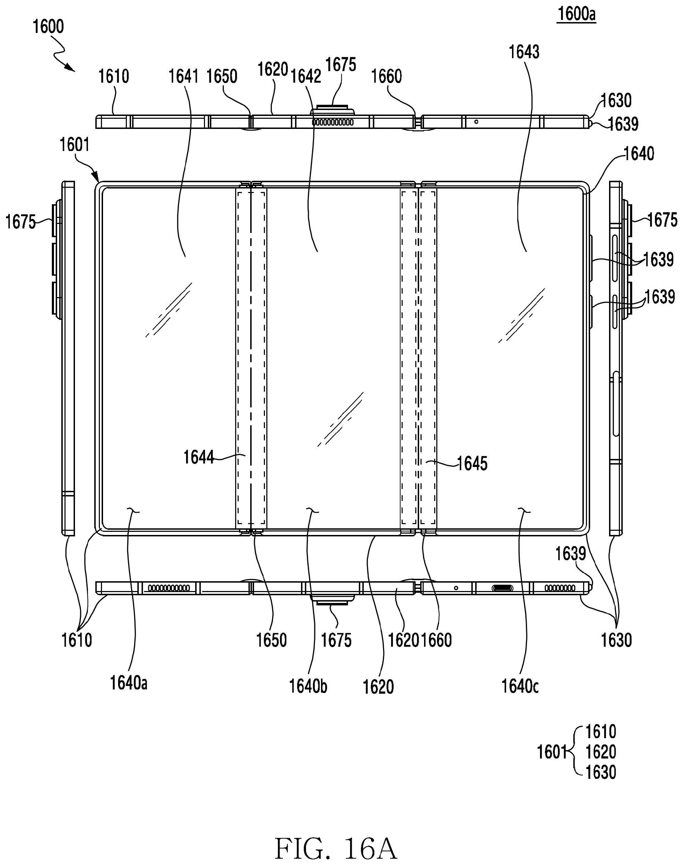

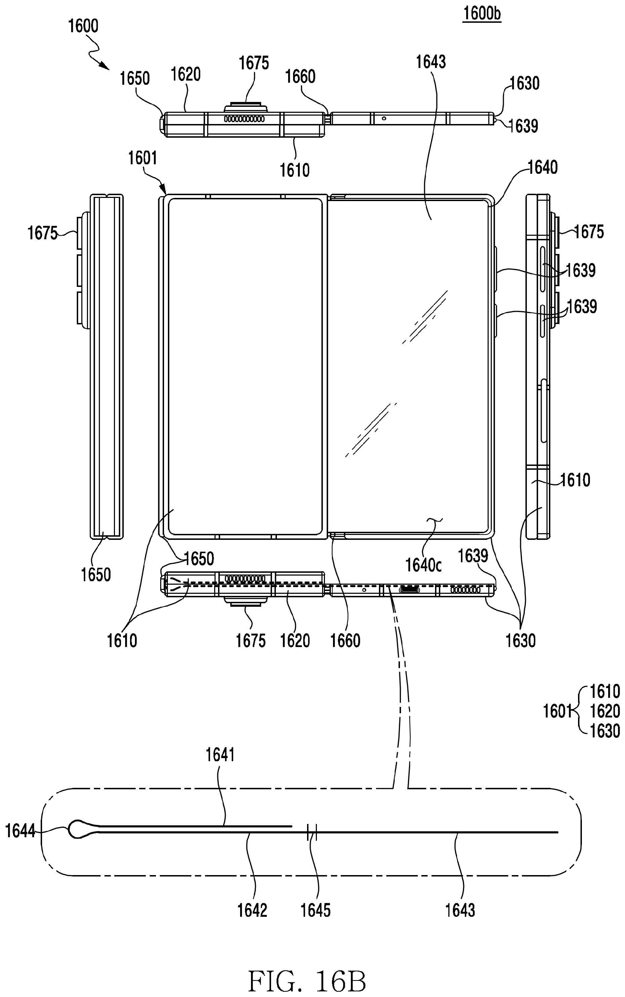

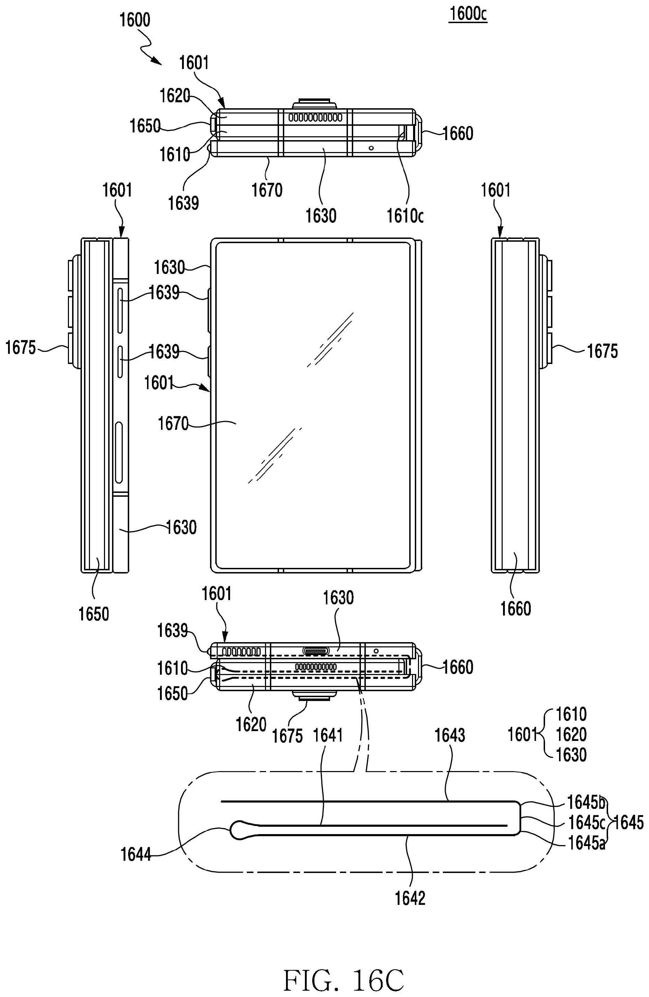

FIG. 16A illustrates an example of a first state of an electronic device according to an embodiment of the disclosure. FIG. 16B illustrates an example of a second state of an electronic device according to an embodiment of the disclosure. FIG. 16C illustrates an example of a third state of an electronic device according to an embodiment of the disclosure.

Referring to FIGS. 16A, 16B, and 16C, an electronic device 1600 may include a housing structure 1601, a flexible display 1640, a first hinge structure 1650, a second hinge structure 1660, and a display 1670. The housing structure 1601 may include a first housing part 1610, a second housing part 1620, and a third housing part 1630.

The first housing part 1610 may be rotatably coupled to the second housing part 1620 by the first hinge structure 1650. The second housing part 1620 and the first housing part 1610 may be rotated with respect to the first hinge structure 1650. While the first housing part 1610 is rotated with respect to the first hinge structure 1650, the second housing part 1620 may be rotated with respect to the first hinge structure 1650. For example, when the second housing part 1620 and the first housing part 1610 are rotated with respect to the first hinge structure 1650, the angular displacement of the second housing part 1620 may be substantially the same as the angular displacement of the first housing part 1610.

The third housing part 1630 may be rotatably coupled to the second housing part 1620 by the second hinge structure 1660. The second housing part 1620 and the third housing part 1630 may be rotated with respect to the second hinge structure 1660. While the second housing part 1620 is rotated with respect to the second hinge structure 1660, the third housing part 1630 may be rotated with respect to the second hinge structure 1660. For example, when the second housing part 1620 and the third housing part 1630 rotate with respect to the second hinge structure 1660, the angular displacement (or an angular change) of the second housing part 1620 may be substantially the same as the angular displacement of the third housing part 1630.

The first hinge structure 1650 and the second hinge structure 1660 may change a state of the electronic device. The first hinge structure 1650 and the second hinge structure 1660 may provide (or may enable) a first state 1600a of the electronic device 1600 (or a first state 1600a of the housing structure 1601). The first state 1600a of the electronic device 1600 (or the first state 1600a of the housing structure 1601) may be described as an unfolded state (or an unfolding state) of the electronic device 1600 (or the housing structure 1601). In the first state 1600a, a front surface of the first housing part 1610, a front surface of the second housing part 1620, and a front surface of the third housing part 1630 may define a front surface of the electronic device 1600. In the first state 1600a, the front surface of the first housing part 1610, the front surface of the second housing part 1620, and the front surface of the third housing part 1630 may face the same direction. In the first state 1600a, the electronic device 1600 may provide a large display region of the flexible display 1640 to a user.

The first hinge structure 1650 and the second hinge structure 1660 may provide a second state 1600b of the electronic device 1600. The second state 1600b of the electronic device 1600 may be described as a state in which the electronic device 1600 is partially folded and partially unfolded (or a single folding state or a half-folding state). For example, in the second state 1600b, the front surface of the second housing part 1620 and the front surface of the third housing part 1630 may face the same direction as each other, and the front surface of the first housing part 1610 and the front surface of the second housing part 1620 may face opposite directions from each other. For example, in a second state, the first housing part 1610 and the second housing part 1620 may be folded, and the second housing part 1620 and the third housing part 1630 may be unfolded. In the second state 1600b, the electronic device 1600 may transmit visual information through a portion (e.g., a third display region 1640c) of the flexible display 1640.

The electronic device 1600 may change from the first state 1600a to a third state 1600c through the second state 1600b. The electronic device 1600 may change from the first state 1600a, which is the unfolded state, to the second state 1600b, which is a partially unfolded state. For example, the electronic device 1600 may change from the first state 1600a in which the first housing part 1610, the second housing part 1620, and the third housing part 1630 face the same direction to the second state 1600b in which the front surface of the first housing part 1610 faces the front surface of the second housing part 1620. The electronic device 1600 may change from the second state 1600b, which is the partially unfolded state, to the third state 1600c, which is a folded state. For example, when changing from the second state 1600b to the third state 1600c, the first housing part 1610 and the second housing part 1620 that are folded may be positioned on the third housing part 1630.

The first hinge structure 1650 and the second hinge structure 1660 may provide the third state 1600c of the electronic device 1600 (or the third state 1600c of the housing structure 1601). The third state 1600c of the electronic device 1600 (or the third state 1600c of the housing structure 1601) may be described as the folded state (or a folding state or a multi-folding state) of the electronic device 1600 (or the housing structure 1601). In the third state 1600c, the front surface of the first housing part 1610 and the front surface of the second housing part 1620 may face opposite directions from each other, and the front surface of the second housing part 1620 and the front surface of the third housing part 1630 may face opposite directions from each other. In the third state 1600c, the front surface of the first housing part 1610 and the front surface of the third housing part 1630 may face the same direction as each other. For example, in the third state 1600c, the front surface of the second housing part 1620 may face the front surface of the first housing part 1610, and the front surface of the third housing part 1630 may face a rear surface of the first housing part 1610. In the third state 1600c, a rear surface of the second housing part 1620 may be exposed to the outside. A camera 1675 may be positioned on the rear surface of the second housing part 1620. In the third state 1600c, a rear surface of the third housing part 1630 may be exposed to the outside. The display 1670 may be positioned on the rear surface of the third housing part 1630. In the third state 1600c, the electronic device 1600 may be folded to improve portability and may provide visual information through the display 1670 positioned in the third housing part 1630 of the electronic device 1600 in the third state 1600c.

The electronic device 1600 may further include a key button 1639. The key button 1639 may be exposed from a structure (e.g., an opening) formed on a side surface of the third housing part 1630 and partially protrude to the outside of the electronic device 1600. The key button 1639 may provide a physical input by pressure transmitted from the outside to processing circuitry inside the electronic device 1600. The key button 1639 may not be included in the electronic device and may be implemented in another form, such as a soft key displayed on the flexible display 1640 or the display 1670.

The key button 1639 may be positioned on the side surface of the third housing part 1630 so as to be exposed to the outside in the third state 1600c. As a state of the electronic device 1600 is changed from the third state 1600c to the first state 1600a by the user viewing the display, the key button positioned in the third housing part 1630 may be moved from a left side of the electronic device 1600 to a right side of the electronic device 1600. For example, referring to FIG. 16A, in the first state 1600a, when the flexible display 1640 is viewed from above, the key button 1639 may be positioned on a right side. Referring to FIG. 16C, in the third state 1600c, when the display 1670 is viewed from above, the key button 1639 may be positioned on a left side.

The flexible display 1640 may at least partially define appearance of the electronic device 1600. The flexible display 1640 may be partially positioned in the housing structure 1601. The flexible display 1640 may define the front surface of the electronic device 1600. The flexible display 1640 may include a first unbendable portion 1641, a second unbendable portion 1642, a third unbendable portion 1643, a first bendable portion 1644, and a second bendable portion 1645. The first unbendable portion 1641 of the flexible display 1640 may be positioned on the front surface of the first housing part 1610. The second unbendable portion 1642 of the flexible display 1640 may be positioned on the front surface of the second housing part 1620. The third unbendable portion 1643 of the flexible display 1640 may be positioned on the front surface of the third housing part 1630. The first bendable portion 1644 of the flexible display 1640 may be positioned between the first unbendable portion 1641 and the second unbendable portion 1642 of the flexible display 1640. For example, the first bendable portion 1644 of the flexible display 1640 may be positioned on the first hinge structure 1650 connecting the first housing part 1610 and the second housing part 1620. The second bendable portion 1645 of the flexible display 1640 may be positioned between the second unbendable portion 1642 and the third unbendable portion 1643 of the flexible display 1640. For example, the second bendable portion 1645 of the flexible display 1640 may be positioned on the second hinge structure 1660 connecting the second housing part 1620 and the third housing part 1630.

The first hinge structure 1650 and the second hinge structure 1660 may face substantially the same direction as the first unbendable portion 1641 of the flexible display 1640, the second unbendable portion 1642 of the flexible display 1640, and the third unbendable portion 1643 of the flexible display 1640. In the first state 1600a, the first bendable portion 1644 and the second bendable portion 1645 may be positioned on substantially the same horizontal plane as the first unbendable portion 1641, the second unbendable portion 1642, and the third unbendable portion 1643.

The first hinge structure 1650 and the second hinge structure 1660 may provide the second state 1600b of the electronic device 1600. In the second state 1600b, the first unbendable portion 1641 of the flexible display 1640 may face the second unbendable portion 1642 of the flexible display 1640, and the third unbendable portion 1643 of the flexible display 1640 may face the same direction as the second unbendable portion 1642 of the flexible display 1640. For example, the second unbendable portion 1642 and the third unbendable portion 1643 may be positioned on substantially the same horizontal plane.

In the second state 1600b, as the first bendable portion 1644 of the flexible display 1640 is bent by the first hinge structure 1650, the first bendable portion 1644 of the flexible display 1640 may be folded so that the first unbendable portion 1641 of the flexible display 1640 and the second unbendable portion 1642 of the flexible display 1640 face different directions from each other.

In the second state 1600b, as the second bendable portion 1645 of the flexible display 1640 is maintained in the unfolded state by the second hinge structure 1660, the second bendable portion 1645 of the flexible display 1640 may be unfolded so that the second unbendable portion 1642 of the flexible display 1640 and the third unbendable portion 1643 of the flexible display 1640 face the same direction.

The first hinge structure 1650 and the second hinge structure 1660 may provide the third state 1600c of the electronic device 1600. In the third state 1600c, the second unbendable portion 1642 of the flexible display 1640 may face the first unbendable portion 1641 of the flexible display 1640, and the third unbendable portion 1643 of the flexible display 1640 may face the rear surface of the first housing part 1610.

In the third state 1600c, as the first bendable portion 1644 of the flexible display 1640 is bent by the first hinge structure 1650, the first bendable portion 1644 of the flexible display 1640 may be folded so that the first unbendable portion 1641 of the flexible display 1640 and the second unbendable portion 1642 of the flexible display 1640 face different directions from each other.

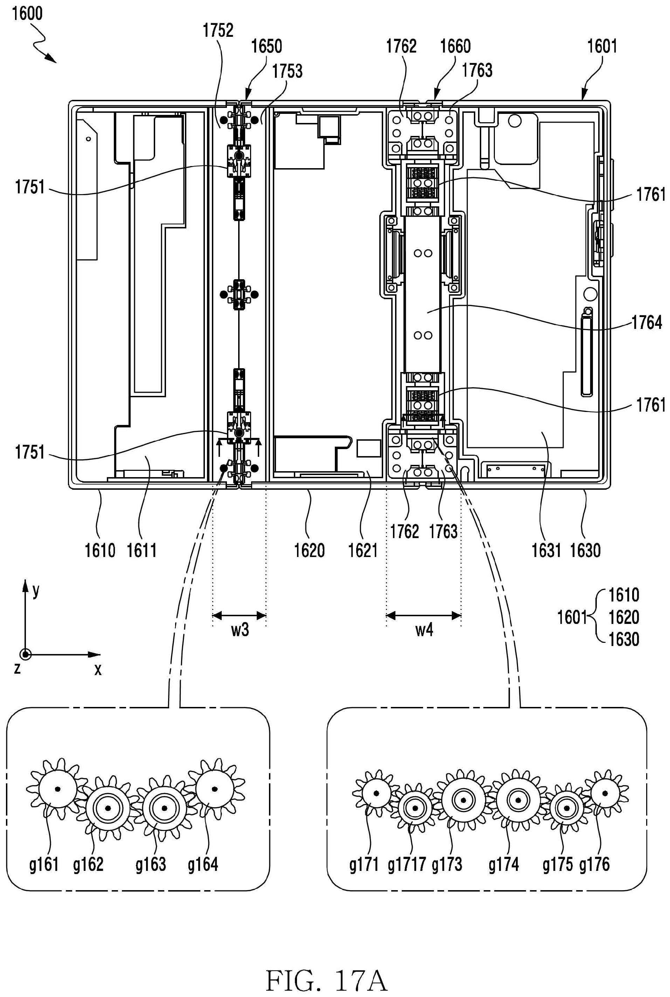

In the third state 1600c, as the second bendable portion 1645 of the flexible display 1640 is bent by the second hinge structure 1660, the second bendable portion 1645 of the flexible display 1640 may be folded so that the second unbendable portion 1642 of the flexible display 1640 and the third unbendable portion 1643 of the flexible display 1640 face different directions from each other. The second bendable portion 1645 may further include a first deformation portion 1645a, a second deformation portion 1645b, and a planar portion 1645c. The first deformation portion 1645a may be positioned between the planar portion 1645c and the second unbendable portion 1642, and the second deformation portion 1645b may be positioned between the planar portion 1645c and the third unbendable portion 1643. The planar portion 1645c may be disposed between the first deformation portion 1645a and the second deformation portion 1645b. The planar portion 1645c may be supported by a support plate (e.g., a support plate 1764 of FIG. 17A) distinct from hinge plates (e.g., a third hinge plate 1762 and a fourth hinge plate 1763 of FIG. 17A) of the second hinge structure 1660. Regardless of the state of the electronic device 1600, the planar portion 1645c may maintain a plane. The first deformation portion 1645a and the second deformation portion 1645b may be unfolded in the first state 1600a and the second state 1600b, and in the third state 1600c, the first deformation portion 1645a and the second deformation portion 1645b may be folded so that the second unbendable portion 1642 and the third unbendable portion 1643 face different directions from each other.

In the third state 1600c, the first housing part 1610 may be positioned between the second housing part 1620 and the third housing part 1630. In the third state 1600c, the second bendable portion 1645 of the flexible display 1640 positioned on the second hinge structure 1660 may partially face a side surface 1610c of the first housing part 1610.

A display region of the flexible display 1640 may include a first display region 1640a, a second display region 1640b, and a third display region 1640c. The display region indicates a region that may provide visual information from the flexible display 1640. In the first state 1600a, an entire display region of the flexible display 1640 may be visible from a front surface of the housing structure 1601. For example, in the first state 1600a, the first display region 1640a, the second display region 1640b, and the third display region 1640c of the flexible display 1640 may be visually exposed. The electronic device 1600 may provide a large display region including the first display region 1640a, the second display region 1640b, and the third display region 1640c to the user.

In the second state 1600b, the display region of the flexible display 1640 may be partially visible from the front surface of the third housing part 1630. For example, the third unbendable portion 1643 may be visually exposed, and the first display region 1640a and the second display region 1640b may not be visually exposed.

The display region of the flexible display 1640 may not be visible in the third state 1600c. For example, in the third state 1600c, the first display region 1640a, the second display region 1640b, and the third display region 1640c of the flexible display 1640 may not be visually exposed.

As an example without limitation, when the flexible display 1640 is used to display a screen in the first state 1600a of the electronic device 1600, the first display region 1640a, the second display region 1640b, and the third display region 1640c of the flexible display 1640 may be activated. As an example without limitation, when the flexible display 1640 is used to display a screen in the second state 1600b of the electronic device 1600, the third display region 1640c may be activated, and the first display region 1640a and the second display region 1640b of the flexible display 1640 may be deactivated. As an example without limitation, in the third state 1600c of the electronic device 1600, the first display region 1640a, the second display region 1640b, and the third display region 1640c of the flexible display 1640 may be deactivated.

As an example without limitation, when the flexible display 1640 is used to display a screen in the first state 1600a of the electronic device 1600, the first display region 1640a, the second display region 1640b, and the third display region 1640c of the flexible display 1640 may display visual information. As an example without limitation, when the flexible display 1640 is used to display a screen within the second state 1600b of the electronic device 1600, the third display region 1640c may provide visual information, and the first display region 1640a and the second display region 1640b of the flexible display 1640 may provide a black image. As an example without limitation, in the third state 1600c, the first display region 1640a, the second display region 1640b, and the third display region 1640c of the flexible display 1640 may provide the black image.

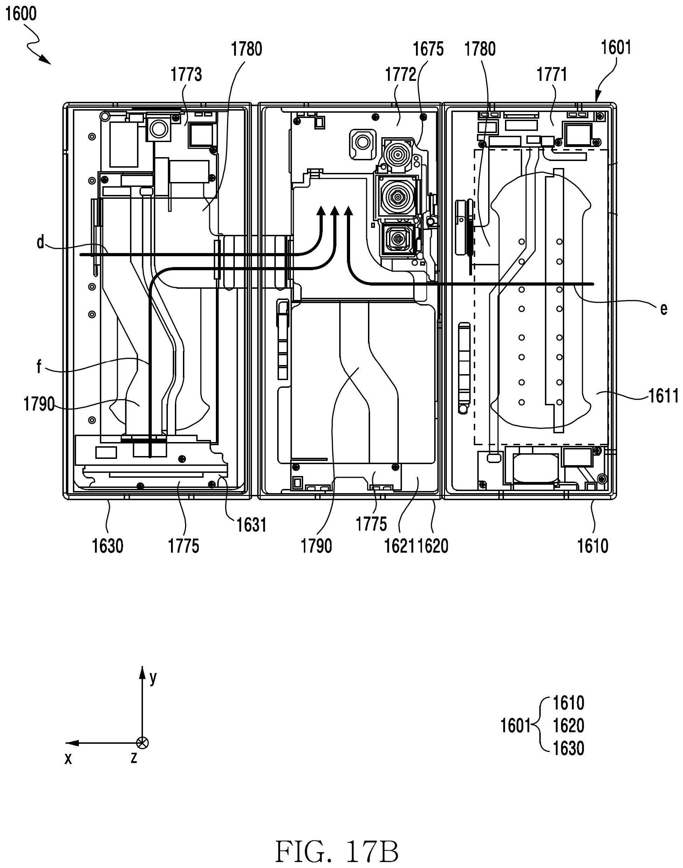

FIG. 17A is a top plan view of an electronic device with a flexible display removed according to an embodiment of the disclosure. FIG. 17B is a rear view of an electronic device with a rear cover and a display removed according to an embodiment of the disclosure.

Referring to FIGS. 17A and 17B, an electronic device 1600 may include a first hinge structure 1650 and a second hinge structure 1660. A first width w3 of the first hinge structure 1650 may be narrower than a second width w4 of the second hinge structure 1660. A difference between the first width w3 of the first hinge structure 1650 and the second width w4 of the second hinge structure 1660 may be equal to or greater than a thickness of a first housing part 1610. For example, the second hinge structure 1660 may have the second width w4 wider than the first width w3 so that the first housing part 1610 is positioned between a second housing part 1620 and a third housing part 1630 according to a third state 1600c. The first hinge structure 1650 may be referred to as a narrow hinge structure in terms of having a narrower width than the second hinge structure 1660. The second hinge structure 1660 may be referred to as a wide hinge structure in terms of having a wider width than the first hinge structure 1650.

The first hinge structure 1650 may include a first set 1751 of gears, a first hinge plate 1752, and a second hinge plate 1753. The first hinge plate 1752 may be coupled to a first supporting portion 1611 of the first housing part 1610. The second hinge plate 1753 may be coupled to a second supporting portion 1621 of the second housing part 1620. Gears g161, g162, g163, and g164 included in the first set 1751 of the gears may be configured to rotate the first hinge plate 1752 and the second hinge plate 1753. For example, the gears g161, g162, g163, and g164 included in the first set 1751 of the gears may rotate the second hinge plate 1753 (or the second housing part 1620) in conjunction with rotation of the first hinge plate 1752 (or the first housing part 1610). When the first hinge plate 1752 (or the first housing part 1610) rotates, the gears g161, g162, g163, and g164 included in the first set 1751 of the gears may rotate according to the rotation of the first hinge plate 1752 (or the first housing part 1610). The second hinge plate 1753 (or the second housing part 1620) may be rotated in conjunction with the rotation of the first hinge plate 1752 according to the rotation of the gears g161, g162, g163, and g164 included in the first set 1751 of the gears. The gears g161, g162, g163, and g164 included in the first set 1751 of the gears may include the first gear g161, the second gear g162, the third gear g163, and the fourth gear g164. The first gear g161 may be positioned adjacent to the first hinge plate 1752, and the fourth gear g164 may be positioned adjacent to the second hinge plate 1753. The second gear g162 and the third gear g163 may be positioned between the first gear g161 and the fourth gear g164. The first gear g161, the second gear g162, the third gear g163, and the fourth gear g164 may be sequentially engaged with each other. According to rotation of the first gear g161 in a first rotation direction (e.g., clockwise), the second gear g162 engaged with the first gear g161 may be rotated in a second rotation direction (e.g., counterclockwise) opposite to the first rotation direction. According to rotation of the second gear g162 in the second rotation direction, the third gear g163 engaged with the second gear g162 may be rotated in the first rotation direction. According to rotation of the third gear g163 in the first rotation direction, the fourth gear g164 may be rotated in the second rotation direction. As the first gear g161 and the fourth gear g164 rotate in different directions from each other, the first housing part 1610 connected to the first hinge plate 1752 and the second housing part 1620 connected to the second hinge plate 1753 may be folded or unfolded.

The second hinge structure 1660 may include a second set 1761 of gears, a third hinge plate 1762, a fourth hinge plate 1763, and a supporting plate 1764. The third hinge plate 1762 may be coupled to the second supporting portion 1621 of the second housing part 1620. The fourth hinge plate 1763 may be coupled to a third supporting portion 1631 of the third housing part 1630. Gears g171, g1717, g173, g174, g175, and g176 included in the second set 1761 of the gears may be configured to rotate the third hinge plate 1762 and the fourth hinge plate 1763. For example, the gears g171, g1717, g173, g174, g175, and g176 included in the second set 1761 of the gears may rotate the fourth hinge plate 1763 (or the third housing part 1630) in conjunction with rotation of the third hinge plate 1762 (or the second housing part 1620). After the third hinge plate 1762 (or the second housing part 1620) is rotated, the gears g171, g1717, g173, g174, g175, and g176 included in the second set 1761 of the gears may be rotated according to the rotation of the third hinge plate 1762 (or the second housing part 1620). The fourth hinge plate 1763 (or the third housing part 1630) may be rotated in conjunction with the rotation of the third hinge plate 1762 according to the rotation of the gears g171, g1717, g173, g174, g175, and g176 included in the second set 1761 of the gears.

The gears g171, g1717, g173, g174, g175, and g176 included in the second set 1761 of the gears may include the first gear g171, the second gear g1717, the third gear g173, the fourth gear g174, the fifth gear g175, and the sixth gear g176. The first gear g171 may be positioned adjacent to the third hinge plate 1762, and the sixth gear g176 may be positioned adjacent to the fourth hinge plate 1763. The second gear g1717, the third gear g173, the fourth gear g174, and the fifth gear g175 may be positioned between the first gear g171 and the sixth gear g176. The first gear g171, the second gear g1717, the third gear g173, the fourth gear g174, the fifth gear g175, and the sixth gear g176 may be sequentially engaged. According to rotation of the first rotation direction (e.g., clockwise) of the first gear g171, the second gear g1717 engaged with the first gear g171 may be rotated in the second rotation direction (e.g., counterclockwise) opposite to the first rotation direction. According to rotation of the second rotation direction of the second gear g1717, the third gear g173 engaged with the second gear g1717 may be rotated in the first rotation direction. According to rotation of the first rotation direction of the third gear g173, the fourth gear g174 may be rotated in the second rotation direction. According to rotation of the second rotation direction of the fourth gear g174, the fifth gear g175 engaged with the fourth gear g174 may be rotated in the first rotation direction. According to rotation of the first rotation direction of the fifth gear g175, the sixth gear g176 engaged with the fifth gear g175 may be rotated in the second rotation direction. As the first gear g171 and the sixth gear g176 rotate in different directions from each other, the second housing part 1620 connected to the third hinge plate 1762 and the third housing part 1630 connected to the fourth hinge plate 1763 may be folded or unfolded.

The first hinge structure 1650 and the second hinge structure 1660 may further include a spiral structure. The spiral structure may include a spiral groove formed in each hinge plate or a rotating member connected to the hinge plate and a moving member sliding along the spiral groove. Hinge plates connected to the hinge structure may be configured to rotate at substantially the same angular displacement through the spiral structure.

The electronic device 1600 may include a first printed circuit board 1771, a second printed circuit board 1772, and a third printed circuit board 1773.

The first printed circuit board 1771 may be positioned in the first supporting portion 1611 of the first housing part 1610. A hardware component in the first housing part 1610 may be mounted on the first printed circuit board 1771.

The second printed circuit board 1772 may be positioned on the second supporting portion 1621 of the second housing part 1620. A hardware component in the second housing part 1620 may include at least one processor (e.g., an application processor (AP) or a communication processor (CP)) mounted on the second printed circuit board 1772 and including processing circuitry, memory including one or more storage mediums, communication circuitry, and a rear camera 1675. The rear camera 1675 may be exposed through a structure (e.g., an opening) of a rear surface of the second housing part 1620.

The third printed circuit board 1773 may be positioned in the third supporting portion 1631 of the third housing part 1630. A hardware component in the third housing part 1630 may be mounted on the third printed circuit board 1773. The hardware component positioned in the third printed circuit board 1773 may support the hardware component positioned in the second printed circuit board 1772, or may independently operate. The hardware component positioned in the third printed circuit board 1773 may include a speaker, a front camera, and/or display driving circuitry.

The hardware component positioned in the first printed circuit board 1771 may support the hardware component positioned in the second printed circuit board 1772 and/or the hardware component positioned in the third printed circuit board 1773 or may independently operate.

The electronic device 1600 may further include a sub-printed circuit board 1775 and flexible printed circuit boards 1780 and 1790. The sub-printed circuit board 1775 may be positioned in at least a portion of the first housing part 1610, the second housing part 1620, and the third housing part 1630. The flexible printed circuit boards 1780 and 1790 may include the first flexible printed circuit board 1780 and the second flexible printed circuit board 1790. The first flexible printed circuit board 1780 may electrically connect a printed circuit board positioned in each of the housing parts 1610, 1620, and 1630. The second flexible printed circuit board 1790 may connect a printed circuit board in the housing part in which the sub-printed circuit board 1775 is positioned by the second flexible printed circuit board 1790 and the sub-printed circuit board 1775.

Electronic components in the electronic device 1600 may be connected to at least one processor in the second printed circuit board 1772 through the flexible printed circuit boards 1780 and 1790. For example, a signal received from an antenna positioned in the third housing part 1630 may be transmitted to the second printed circuit board 1772 in which at least one processor (e.g., an AP or a CP) is positioned through a signal path d provided by the first flexible printed circuit board 1780. Driving circuitry for a flexible display 1640 positioned in the first housing part 1610 may be connected to the second printed circuit board 1772 in which at least one processor (e.g., the AP) is positioned through a signal path e provided by the first flexible printed circuit board 1780. Driving circuitry for a display 1670 connected to the sub-printed circuit board 1775 positioned in the third housing part 1630 may be electrically connected to the second printed circuit board 1772 in which at least one processor (e.g., the AP) is positioned through a signal path f provided by the sub-printed circuit board 1775, the first flexible printed circuit board 1780, and the second flexible printed circuit board 1790. The electronic device 1600 may further include batteries. Each of the batteries may be attached to the supporting portions 1611, 1621, and 1631 included in the housing parts 1610, 1620, and 1630. The supporting portions 1611, 1621, and 1631 may support rechargeable batteries.

A disposition of hardware components is exemplary, and unlike the above description, a rear camera 175 and the second printed circuit board 1772 may be positioned in the third housing part 1630, and the third printed circuit board 1773 may be positioned in the second housing part 1620.

The first housing part 1610 and the third housing part 1630 are indicated to rotate in a opposite direction with respect to the second housing part 1620, but are not limited thereto. For example, while changing from the first state 1600a to the third state 1600c, the first housing part 1610 may rotate counterclockwise with respect to the second housing part 1620, and the third housing part 1630 may rotate counterclockwise with respect to the second housing part 1620. As the first housing part 1610 and the third housing part 1630 rotate in the same direction, a portion of a display region of the flexible display 1640 may be visually exposed in a second state.

The electronic device 1600 of FIGS. 16A to 16C and FIGS. 17A and 17B may be referred to as a G-type foldable electronic device. The electronic device 1600 may simultaneously activate a cover display (e.g., the display 1670) and the flexible display 1640 in a half-folded state, similar to the electronic device 100 described with reference to FIGS. 1, 2A to 2C, 3A to 3C, 4A to 4C, 5A to 5C, 6A, 6B, 7, 8A, 8B, 9 to 13, and/or 14A to 14E.

As described above, the electronic device according to an embodiment may provide a state in which all of the displays are activated. Using the above state, the electronic device may provide a user experience based on multi-tasking to the user. The electronic device including a foldable housing may provide the state by using the cover display and at least a portion of the flexible display before the flexible display is fully unfolded.

In an embodiment, a method of providing a user experience based on multi-tasking by using a plurality of displays included in an electronic device may be required. In an embodiment, a method of at least temporarily displaying another screen without hiding or covering a screen displayed through a specific display (e.g., a cover display) may be required.

As described above, according to an embodiment, a foldable electronic device may comprise a foldable housing comprising, a first housing part, a second housing part rotatably coupled to the first housing part, and a third housing part rotatably coupled to the second housing part, a flexible display positioned across the first housing part, the second housing part, and the third housing part, a cover display positioned on a partial region opposite to the flexible display, at least one first sensor configured to detect a first angle between the first housing part and the second housing part, at least one second sensor configured to detect a second angle between the second housing part and the third housing part, memory storing instructions, comprising one or more storage mediums, and at least one processor comprising processing circuitry. The instructions, when executed by the at least one processor individually or collectively, may cause the foldable electronic device to detect a state of the foldable electronic device by using at least one of the at least one first sensor or the at least one second sensor. The instructions, when executed by the at least one processor individually or collectively, may cause the foldable electronic device to display a first screen on the cover display while the foldable electronic device is in a fully folded state. The instructions, when executed by the at least one processor individually or collectively, may cause the foldable electronic device to, while displaying the first screen on the cover display, detect that the first housing part or the third housing part of the foldable electronic device in the fully folded state is opened. The instructions, when executed by the at least one processor individually or collectively, may cause the foldable electronic device to, based on detecting that the first housing part or the third housing part is opened, maintain display the first screen on the cover display, and display a second screen on a partial region of the flexible display.

For example, the foldable electronic device may comprise a button that is visible from at least a portion of the foldable housing. The instructions, when executed by the at least one processor individually or collectively, may cause the foldable electronic device to display the second screen on the flexible display based on detecting that the first housing part or the third housing part is opened while receiving a user input based on the button.

For example, the instructions, when executed by the at least one processor individually or collectively, may cause the foldable electronic device to display the second screen, which was displayed before the first screen, on the flexible display based on the detecting that the first housing part or the third housing part is opened while receiving the user input.

For example, the instructions, when executed by the at least one processor individually or collectively, may cause the foldable electronic device to display, on the flexible display, a list of a software application for selecting the second screen, based on the detecting that the first housing part or the third housing part is opened while receiving the user input. The instructions, when executed by the at least one processor individually or collectively, may cause the foldable electronic device to, based on another user input associated with the list of the software application, display the second screen associated with the another user input on the flexible display.

For example, the foldable electronic device may comprise a fingerprint sensor configured to detect a fingerprint of a finger contacted on the button. The instructions, when executed by the at least one processor individually or collectively, may cause the foldable electronic device to obtain information associated with the fingerprint of the finger contacted on the button, by controlling the fingerprint sensor, while receiving the user input. The instructions, when executed by the at least one processor individually or collectively, may cause the foldable electronic device to, by executing a software application requiring authentication, in response to authentication based on the information, obtain the second screen associated with the software application.

For example, the instructions, when executed by the at least one processor individually or collectively, may cause the foldable electronic device to, based on detecting that the first housing part or the third housing part is opened while displaying a notification message on the first screen, obtain the second screen by executing a software application associated with the notification message.

For example, the instructions, when executed by the at least one processor individually or collectively, may cause the foldable electronic device to display the second screen on at least a portion of a display region of the flexible display that is visible by the first housing part or the third housing part, being opened.

For example, the instructions, when executed by the at least one processor individually or collectively, may cause the foldable electronic device to, based on identifying that the cover display among the flexible display and the cover display is visible by using the at least one of the at least one first sensor or the at least one second sensor, determine the state of the foldable housing as the fully folded state. The instructions, when executed by the at least one processor individually or collectively, may cause the foldable electronic device to, based on detecting that an angle among the first angle or the second angle is greater than or equal to a preset angle range associated with the fully folded state, detect that a housing part corresponding to the angle among the first housing part or the third housing part is opened. The instructions, when executed by the at least one processor individually or collectively, may cause the foldable electronic device to, based on identifying that at least a portion of a display region of the flexible display is visible together with the cover display by using the at least one of the at least one first sensor or the at least one second sensor, determine the state of the foldable housing as a half-folded state. The instructions, when executed by the at least one processor individually or collectively, may cause the foldable electronic device to, based on identifying that the entire display region of the flexible display is visible by using the at least one of the at least one first sensor or the at least one second sensor, determine the state of the foldable housing as an unfolded state.

For example, the instructions, when executed by the at least one processor individually or collectively, may cause the foldable electronic device to, based on detection of switching to the unfolded state from the half-folded state while displaying the second screen, deactivate the cover display. The instructions, when executed by the at least one processor individually or collectively, may cause the foldable electronic device to display a fourth screen on the entire display region of the flexible display which at least partially includes a content of the second screen.

For example, the instructions, when executed by the at least one processor individually or collectively, may cause the foldable electronic device to, while displaying the second screen on the flexible display, display a software keyboard superimposed on the first screen displayed on the cover display, based on receiving a first input for inputting texts on the first screen. The instructions, when executed by the at least one processor individually or collectively, may cause the foldable electronic device to display the software keyboard superimposed on the second screen displayed on the flexible display, based on receiving a second input for inputting texts on the second screen.

For example, the instructions, when executed by the at least one processor individually or collectively, may cause the electronic device to, based on receiving a third input indicating selection of a preset visual object that is included in the software keyboard, switch a display where the software keyboard is displayed between the flexible display and the cover display.

As described above, in an embodiment, a method performed by a foldable electronic device may be provided. The electronic device may comprise a foldable housing comprising, a first housing part, a second housing part rotatably coupled to the first housing part, and a third housing part rotatably coupled to the second housing part, a flexible display positioned across the first housing part, the second housing part, and the third housing part, a cover display positioned on a partial region opposite to the flexible display, at least one first sensor configured to detect a first angle between the first housing part and the second housing part, and at least one second sensor configured to detect a second angle between the second housing part and the third housing part. The method may comprise detecting a state of the foldable electronic device by using at least one of the at least one first sensor or the at least one second sensor. The method may comprise displaying a first screen on the cover display while the foldable electronic device is in a fully folded state. The method may comprise, while displaying the first screen on the cover display, detecting that the first housing part or the third housing part of the foldable electronic device in the fully folded state is opened. The method may comprise, based on detecting that the first housing part or the third housing part is opened, maintaining display the first screen on the cover display, and displaying a second screen on a partial region of the flexible display.

For example, the displaying of the second screen may comprise displaying the second screen on the flexible display based on detecting that the first housing part or the third housing part is opened while receiving a user input based on a button that is visible from at least a portion of the foldable housing.

For example, the displaying of the second screen may comprise displaying the second screen, which was displayed before the first screen, on the flexible display.

For example, the method may comprise displaying, on the flexible display, a list of a software application for selecting the second screen, based on the detecting that the first housing part or the third housing part is opened while receiving the user input. The displaying the second screen may comprise, based on another user input associated with the list of the software application, displaying the second screen associated with the another user input on the flexible display.

For example, the displaying of the second screen may comprise obtaining information associated with a fingerprint of a finger contacted on the button, by controlling a fingerprint sensor configured to detect the fingerprint of the finger contacted on the button, while receiving the user input. The displaying the second screen may comprise, by executing a software application requiring authentication, in response to authentication based on the information, obtaining the second screen associated with the software application.

For example, the displaying of the second screen may comprise, based on detecting that the first housing part or the second housing part is opened while displaying a notification message on the first screen, obtaining the second screen by executing a software application associated with the notification message.

For example, the displaying of the second screen may comprise displaying the second screen on at least a portion of a display region of the flexible display that is visible by the first housing part or the third housing part being opened.

For example, the detecting may comprise, based on identifying that the cover display among the flexible display and the cover display is visible by using the at least one of the at least one first sensor or the at least one second sensor, determining the state of the foldable housing as the fully folded state. The detecting may comprise, based on detecting that an angle among the first angle or the second angle is greater than or equal to a preset angle range associated with the fully folded state, detecting that a housing part corresponding to the angle among the first housing part or the third housing part is opened. The detecting may comprise, based on identifying that at least a portion of a display region of the flexible display is visible together with the cover display by using the at least one of the at least one first sensor or the at least one second sensor, determining the state of the foldable housing as a half-folded state. The detecting may comprise, based on identifying that the entire display region of the flexible display is visible by using the at least one of the at least one first sensor or the at least one second sensor, determining the state of the foldable housing as an unfolded state.

For example, the method may comprise, based on detection of switching to the unfolded state from the half-folded state while displaying the second screen, deactivating the cover display. The method may comprise, based on detection of switching to the unfolded state from the half-folded state, displaying a fourth screen on the entire display region of the flexible display which at least partially includes a content of the second screen.

For example, the displaying the second screen may comprise displaying a software keyboard superimposed on the first screen displayed on the cover display, based on receiving a first input for inputting texts on the first screen. The displaying the second screen may comprise displaying the software keyboard superimposed on the second screen displayed on the flexible display, based on receiving a second input for inputting texts on the second screen.

For example, the method may comprise, based on receiving a third input indicating selection of a preset visual object that is included in the software keyboard, switching a display where the software keyboard is displayed between the flexible display and the cover display.

As described above, according to an embodiment, an electronic device may comprise a foldable housing including a first housing part, a second housing part rotatably coupled to the first housing part, and a third housing part rotatably coupled to the second housing part, a flexible display across the first housing part, the second housing part, and the third housing part, a cover display opposite to the flexible display, at least one sensor configured to detect at least one of a first angle between the first housing part and the second housing part and a second angle between the second housing part and the third housing part, memory comprising one or more storage media storing instructions, and at least one processor comprising processing circuitry. The instructions, when executed by the at least one processor individually or collectively, may cause the electronic device to detect a state of the foldable housing using the at least one sensor. The instructions, when executed by the at least one processor individually or collectively, may cause the electronic device to display a first screen on the cover display based on detecting the state in a folded state. The instructions, when executed by the at least one processor individually or collectively, may cause the electronic device to detect switching from the folded state to a half-folded state while displaying the first screen on the cover display. The instructions, when executed by the at least one processor individually or collectively, may cause the electronic device to, based on detection of the switching while an event for multi-tasking has occurred, maintain displaying the first screen on the cover display. The instructions, when executed by the at least one processor individually or collectively, may cause the electronic device to display a second screen on the flexible display. The instructions, when executed by the at least one processor individually or collectively, may cause the electronic device to, based on detection of the switching independently of the event, deactivate the cover display. The instructions, when executed by the at least one processor individually or collectively, may cause the electronic device to display a third screen at least partially including a content of the first screen on the flexible display.

For example, the electronic device may comprise a button that is visible from at least a portion of the foldable housing. The instructions, when executed by the at least one processor individually or collectively, may cause the electronic device to display the second screen on the flexible display based on detection of the switching while receiving a user input based on the button.

For example, the instructions, when executed by the at least one processor individually or collectively, may cause the electronic device to display the second screen, which was displayed before the first screen, on the flexible display based on detection of the switching while receiving the user input.

For example, the instructions, when executed by the at least one processor individually or collectively, may cause the electronic device to display, on the flexible display, a list of a software application for selecting the second screen, based on detection of the switching while receiving the user input. The instructions, when executed by the at least one processor individually or collectively, may cause the electronic device to, based on another user input associated with the list of the software application, display the second screen associated with the another user input on the flexible display.

For example, the electronic device may comprise a fingerprint sensor configured to detect a fingerprint contacted on the button. The instructions, when executed by the at least one processor individually or collectively, may cause the electronic device to obtain information associated with a fingerprint contacted on the button, by controlling the fingerprint sensor, while receiving the user input. The instructions, when executed by the at least one processor individually or collectively, may cause the electronic device to, by executing a software application requiring authentication, in response to authentication based on the information, obtain the second screen associated with the software application.

For example, the instructions, when executed by the at least one processor individually or collectively, may cause the electronic device to, based on detection of the switching while displaying a notification message on the first screen, obtain the second screen by executing a software application associated with the notification message.

For example, the instructions, when executed by the at least one processor individually or collectively, may cause the electronic device to display the second screen on at least a portion of a display region of the flexible display that is visible in the half-folded state.

For example, the instructions, when executed by the at least one processor individually or collectively, may cause the electronic device to, based on identifying that the cover display among the flexible display and the cover display is visible by using the at least one sensor, determine the state of the foldable housing as the folded state. The instructions, when executed by the at least one processor individually or collectively, may cause the electronic device to, based on identifying that at least a portion of a display region of the flexible display is visible together with the cover display by using the at least one sensor, determine the state of the foldable housing as the half-folded state. The instructions, when executed by the at least one processor individually or collectively, may cause the electronic device to, based on identifying that the entire display region of the flexible display is visible by using the at least one sensor, determine the state of the foldable housing as an unfolded state.

For example, the instructions, when executed by the at least one processor individually or collectively, may cause the electronic device to, based on detection of switching to the unfolded state from the half-folded state while displaying the second screen, deactivate the cover display. The instructions, when executed by the at least one processor individually or collectively, may cause the electronic device to display a fourth screen on the entire display region of the flexible display which at least partially includes a content of the second screen.

For example, the instructions, when executed by the at least one processor individually or collectively, may cause the electronic device to, while displaying the second screen on the flexible display, display a software keyboard superimposed on the first screen displayed on the cover display, based on receiving a first input for inputting texts on the first screen. The instructions, when executed by the at least one processor individually or collectively, may cause the electronic device to display the software keyboard superimposed on the second screen displayed on the flexible display, based on receiving a second input for inputting texts on the second screen.

For example, the instructions, when executed by the at least one processor individually or collectively, may cause the electronic device to, based on receiving a third input indicating selection of a preset visual object that is included in the software keyboard, switch a display where the software keyboard is displayed between the flexible display and the cover display.

As described above, in an embodiment, a method performed by an electronic device may be provided. The electronic device may comprise a foldable housing comprising, a first housing part, a second housing part rotatably coupled to the first housing part, and a third housing part rotatably coupled to the second housing part, a flexible display across the first housing part, the second housing part, and the third housing part, a cover display opposite to the flexible display, and at least one sensor configured to detect at least one of a first angle between the first housing part and the second housing part and a second angle between the second housing part and the third housing part. The method may comprise detecting a state of the foldable housing using the at least one sensor. The method may comprise displaying a first screen on the cover display based on detecting the state in a folded state. The method may comprise detecting switching from the folded state to a half-folded state while displaying the first screen on the cover display. The method may comprise, based on detection of the switching while an event for multi-tasking has occurred, maintaining displaying the first screen on the cover display. The method may comprise displaying a second screen on the flexible display. The method may comprise, based on detection of the switching independently of the event, deactivating the cover display. The method may comprise displaying a third screen at least partially including a content of the first screen on the flexible display.

For example, the displaying the second screen may comprise displaying the second screen on the flexible display based on detection of the switching while receiving a user input based on a button that is visible from at least a portion of the foldable housing.

For example, the displaying the second screen may comprise displaying the second screen, which was displayed before the first screen, on the flexible display.

For example, the method may comprise displaying, on the flexible display, a list of a software application for selecting the second screen, based on detection of the switching while receiving the user input. The displaying the second screen may comprise, based on another user input associated with the list of the software application, displaying the second screen associated with the another user input on the flexible display.

For example, the displaying the second screen may comprise obtaining information associated with a fingerprint contacted on the button, by controlling a fingerprint sensor configured to detect a fingerprint contacted on the button, while receiving the user input. The method may comprise, by executing a software application requiring authentication, in response to authentication based on the information, obtaining the second screen associated with the software application.

For example, the displaying the second screen may comprise, based on detection of the switching while displaying a notification message on the first screen, obtaining the second screen by executing a software application associated with the notification message.

For example, the displaying the second screen may comprise displaying the second screen on at least a portion of a display region of the flexible display that is visible in the half-folded state.

For example, the detecting may comprise, based on identifying that the cover display among the flexible display and the cover display is visible by using the at least one sensor, determining the state of the foldable housing as the folded state. The method may comprise, based on identifying that a portion of a display region of the flexible display is visible together with the cover display by using the at least one sensor, determining the state of the foldable housing as the half-folded state. The method may comprise, based on identifying that the entire display region of the flexible display is visible by using the at least one sensor, determining the state of the foldable housing as an unfolded state.

For example, the method may comprise, based on detection of switching to the unfolded state from the half-folded state while displaying the second screen, deactivating the cover display. The method may comprise displaying a fourth screen on the entire display region of the flexible display which at least partially includes a content of the second screen.

For example, the displaying the second screen may comprise displaying a software keyboard superimposed on the first screen displayed on the flexible display, based on receiving a first input for inputting texts on the first screen. The method may comprise displaying the software keyboard superimposed on the second screen displayed on the flexible display, based on receiving a second input for inputting texts on the second screen.

For example, the method may comprise, based on receiving a third input indicating selection of a preset visual object that is included in the software keyboard, switching a display where the software keyboard is displayed between the flexible display and the cover display.

In an embodiment, a non-transitory computer readable storage medium including instructions may be provided. The instructions may be executed by an electronic device comprising a foldable housing comprising, a first housing part, a second housing part rotatably coupled to the first housing part, and a third housing part rotatably coupled to the second housing part, a flexible display across the first housing part, the second housing part, and the third housing part, and a cover display opposite to the flexible display. The instructions, when executed by the electronic device, may cause the electronic device to display a first screen on the cover display while a state of the foldable housing is in a folded state. The instructions, when executed by the electronic device individually or collectively, may cause the electronic device to identify switching of the state from the folded state to a half-folded state while displaying the first screen. The instructions, when executed by the electronic device individually or collectively, may cause the electronic device to, based on identifying the switching with an input for activating of both of the cover display and the flexible display, maintain displaying the first screen on the cover display, and display a second screen on at least a portion of the flexible display.

As described above, according to an embodiment, an electronic device may comprise a foldable housing comprising, a first housing part, a second housing part rotatably coupled to the first housing part, and a third housing part rotatably coupled to the second housing part, a flexible display across the first housing part, the second housing part, and the third housing part, a cover display opposite to the flexible display, memory storing instructions, comprising one or more storage mediums, and at least one processor comprising processing circuitry. The instructions, when executed by the at least one processor individually or collectively, may cause the electronic device to display a first screen on the cover display while a state of the foldable housing is in a folded state. The instructions, when executed by the at least one processor individually or collectively, may cause the electronic device to identify switching of the state from the folded state to a half-folded state while displaying the first screen. The instructions, when executed by the at least one processor individually or collectively, may cause the electronic device to, based on identifying the switching with an input for activating of both of the cover display and the flexible display, maintain displaying the first screen on the cover display, and display a second screen on at least portion of the flexible display.

In accordance with another aspect of the disclosure, one or more non-transitory computer-readable storage media storing one or more instructions that, when executed by at least one processor of a foldable electronic device individually or collectively, cause the foldable electronic device to perform operations, is provided. The foldable electronic device includes a foldable housing including a first housing part, a second housing part rotatably coupled to the first housing part, and a third housing part rotatably coupled to the second housing part, a flexible display positioned across the first housing part, the second housing part, and the third housing part, a cover display positioned on a partial region opposite to the flexible display, at least one first sensor configured to detect a first angle between the first housing part and the second housing part, and at least one second sensor configured to detect a second angle between the second housing part and the third housing part. The operations include detecting a state of the foldable electronic device by using at least one of the at least one first sensor or the at least one second sensor, displaying a first screen on the cover display while the foldable electronic device is in a fully folded state, while displaying the first screen on the cover display, detecting that the first housing part or the third housing part of the foldable electronic device in the fully folded state is opened, and based on detecting that the first housing part or the third housing part is opened, maintaining display of the first screen on the cover display, and displaying a second screen on a partial region of the flexible display.

For example, the operations may comprise, displaying the second screen on the flexible display based on detecting that the first housing part or the third housing part is opened while receiving a user input based on a button that is visible from at least a portion of the foldable housing.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

While the disclosure has been shown and described with reference to various embodiments thereof, it will be understood by those skilled in the art that various changes in form and details may be made therein without departing from the scope of the disclosure as defined by the appended claims and their equivalents.

## Claims

1. A foldable electronic device comprising:
a foldable housing including a first housing part, a second housing part rotatably coupled to the first housing part, and a third housing part rotatably coupled to the second housing part;
a flexible display positioned across the first housing part, the second housing part, and the third housing part;
a cover display positioned on a partial region opposite to the flexible display;
at least one first sensor configured to detect a first angle between the first housing part and the second housing part;
at least one second sensor configured to detect a second angle between the second housing part and the third housing part;
memory comprising one or more storage media storing instructions; and
at least one processor comprising processing circuitry,
wherein the instructions, when executed by the at least one processor individually or collectively, cause the foldable electronic device to:
detect a state of the foldable electronic device by using at least one of the at least one first sensor or the at least one second sensor,
display a first screen on the cover display while the foldable electronic device is in a fully folded state,
while displaying the first screen on the cover display, detect that the first housing part or the third housing part of the foldable electronic device in the fully folded state is opened, and
based on detecting that the first housing part or the third housing part is opened, maintain display the first screen on the cover display, and display a second screen on a partial region of the flexible display.

2. The foldable electronic device of claim 1, further comprising:
a button that is visible from at least a portion of the foldable housing,
wherein the instructions, when executed by the at least one processor individually or collectively, further cause the foldable electronic device to:
display the second screen on the flexible display based on detecting that the first housing part or the third housing part is opened while receiving a user input based on the button.

3. The foldable electronic device of claim 2, wherein the instructions, when executed by the at least one processor individually or collectively, further cause the foldable electronic device to:
display the second screen, which was displayed before the first screen, on the flexible display based on the detecting that the first housing part or the third housing part is opened while receiving the user input.

4. The foldable electronic device of claim 2, wherein the instructions, when executed by the at least one processor individually or collectively, further cause the foldable electronic device to:
display, on the flexible display, a list of a software application for selecting the second screen, based on the detecting that the first housing part or the third housing part is opened while receiving the user input, and
based on another user input associated with the list of the software application, display the second screen associated with the another user input on the flexible display.

5. The foldable electronic device of claim 2, further comprising:
a fingerprint sensor configured to detect a fingerprint of a finger contacted on the button,
wherein the instructions, when executed by the at least one processor individually or collectively, further cause the foldable electronic device to:
obtain information associated with the fingerprint of the finger contacted on the button, by controlling the fingerprint sensor, while receiving the user input, and
by executing a software application requiring authentication, in response to authentication based on the information, obtain the second screen associated with the software application.

6. The foldable electronic device of claim 1, wherein the instructions, when executed by the at least one processor individually or collectively, further cause the foldable electronic device to:
based on detecting that the first housing part or the third housing part is opened while displaying a notification message on the first screen, obtain the second screen by executing a software application associated with the notification message.

7. The foldable electronic device of claim 1, wherein the instructions, when executed by the at least one processor individually or collectively, further cause the foldable electronic device to:
display the second screen on at least a portion of a display region of the flexible display that is visible by the first housing part or the third housing part being opened.

8. The foldable electronic device of claim 1, wherein the instructions, when executed by the at least one processor individually or collectively, further cause the foldable electronic device to:
based on identifying that the cover display among the flexible display and the cover display is visible by using the at least one of the at least one first sensor or the at least one second sensor, determine the state of the foldable housing as the fully folded state,
based on detecting that an angle among the first angle or the second angle is greater than or equal to a preset angle range associated with the fully folded state, detect that a housing part corresponding to the angle among the first housing part or the third housing part is opened,
based on identifying that at least a portion of a display region of the flexible display is visible together with the cover display by using the at least one of the at least one first sensor or the at least one second sensor, determine the state of the foldable housing as a half-folded state, and
based on identifying that an entire display region of the flexible display is visible by using the at least one of the at least one first sensor or the at least one second sensor, determine the state of the foldable housing as an unfolded state.

9. The foldable electronic device of claim 8, wherein the instructions, when executed by the at least one processor individually or collectively, further cause the foldable electronic device to:
based on detection of switching to the unfolded state from the half-folded state while displaying the second screen:
deactivate the cover display, and
display a fourth screen on the entire display region of the flexible display which at least partially includes a content of the second screen.

10. The foldable electronic device of claim 1, wherein the instructions, when executed by the at least one processor individually or collectively, further cause the foldable electronic device to:
while displaying the second screen on the flexible display:
display a software keyboard superimposed on the first screen displayed on the cover display, based on receiving a first input for inputting texts on the first screen, and
display the software keyboard superimposed on the second screen displayed on the flexible display, based on receiving a second input for inputting texts on the second screen.

11. The foldable electronic device of claim 10, wherein the instructions, when executed by the at least one processor individually or collectively, further cause the foldable electronic device to:
based on receiving a third input indicating selection of a preset visual object that is included in the software keyboard, switch a display where the software keyboard is displayed between the flexible display and the cover display.

12. A method performed by a foldable electronic device, wherein the foldable electronic device comprises a foldable housing including a first housing part, a second housing part rotatably coupled to the first housing part, and a third housing part rotatably coupled to the second housing part, a flexible display positioned across the first housing part, the second housing part, and the third housing part, a cover display positioned on a partial region opposite to the flexible display, at least one first sensor configured to detect a first angle between the first housing part and the second housing part, and at least one second sensor configured to detect a second angle between the second housing part and the third housing part, the method comprising:
detecting a state of the foldable electronic device by using at least one of the at least one first sensor or the at least one second sensor;
displaying a first screen on the cover display while the foldable electronic device is in a fully folded state;
while displaying the first screen on the cover display, detecting that the first housing part or the third housing part of the foldable electronic device in the fully folded state is opened; and
based on detecting that the first housing part or the third housing part is opened, maintaining display of the first screen on the cover display, and displaying a second screen on a partial region of the flexible display.

13. The method of claim 12, wherein the displaying of the second screen comprises:
displaying the second screen on the flexible display based on detecting that the first housing part or the third housing part is opened while receiving a user input based on a button that is visible from at least a portion of the foldable housing.

14. The method of claim 13, wherein the displaying of the second screen comprises:
displaying the second screen, which was displayed before the first screen, on the flexible display.

15. The method of claim 13, further comprising:
displaying, on the flexible display, a list of a software application for selecting the second screen, based on the detecting that the first housing part or the third housing part is opened while receiving the user input,
wherein the displaying the second screen comprises:
based on another user input associated with the list of the software application, displaying the second screen associated with the another user input on the flexible display.
